# EUROPEAN PATENT APPLICATION

(11) **EP 4 668 076 A1**
(43) Date of publication of application: **24.12.2025**
(21) Application number: 25184233.2
(22) Date of filing: 20.06.2025
(51) Int. Cl.: G06F 3/041, G06F 3/0354, G06F 3/044, G06F 3/046

(54) **SENSING PANEL, DISPLAY DEVICE INCLUDING THE SAME, AND ELECTRONIC DEVICE INCLUDING THE SAME**

(30) Priority: 20.06.2024 KR 20240080366; 03.09.2024 KR 20240119546
(71) Applicant: Samsung Display Co., Ltd., Yongin-si, Gyeonggi-do 17113 (KR)
(72) Inventor: BOK, Seung Lyong, 17113 Yongin-si (KR)
(74) Representative: Taor, Simon Edward William

(57) **Abstract**

A sensing panel is disclosed that includes a base layer, a stylus pen driving electrode positioned on the base layer and including a first conductive pattern, a touch insulating layer positioned on the first conductive pattern, a touch driving electrode positioned on the touch insulating layer, including a second conductive pattern extending in a first direction, and positioned to overlap the stylus pen driving electrode in a third direction in a plan view, and a touch sensing electrode which is positioned on the touch insulating layer, includes the second conductive pattern extending in a second direction different from the first direction, and is positioned to overlap the stylus pen driving electrode in the third direction in the plan view.

## Description

### CROSS-REFERENCE TO RELATED PATENT APPLICATION

The present application claims priority to Korean patent applications number 10-2024-0080366 filed on June 20, 2024, and 10-2024-0119546 filed on September 03, 2024, in the Korean Intellectual Property Office.

### BACKGROUND OF THE INVENTION

### 1. Field

Embodiments of the present disclosure relate to a sensing panel, a display device including the same, and an electronic device including the same.

### 2. Description of the Related Art

With the development of information technology, the importance of display devices, which are connecting medium between users and information, is being highlighted. In response, the use of display devices such as liquid crystal display devices and organic light emitting display devices is increasing.

A display device includes a display panel which displays an image, a touch panel which is placed on the display panel to detect s user's touch, and a digitizer which is placed below the display panel to detect a touch of a pen. The digitizer may be implemented electromagnetically (or using electromagnetic resonance).

The digitizer includes a plurality of coils. When the user moves the pen (e.g., a stylus pen) on the display device, the pen is driven by an alternating current signal to create a oscillating magnetic field, and the oscillating magnetic field induces a signal in the coils. The position of the pen may be detected through the signal induced in the coils. The digitizer may determine the position of the pen by detecting electromagnetic changes caused by the pen's approach.

If two input devices, such as the touch panel and the digitizer, are used separately, the thickness of the display device may increase. Technological development is required to reduce the thickness of the display device.

### SUMMARY OF THE INVENTION

Embodiments of the present disclosure may provide a thin sensing panel while providing touch sensing and stylus pen sensing functions, a display device including the same, and an electronic device including the same.

An embodiment of a sensing panel includes a base layer, a stylus pen driving electrode positioned on the base layer and including a first conductive pattern, a touch insulating layer positioned on the first conductive pattern, a touch driving electrode positioned on the touch insulating layer, including a second conductive pattern extending in a first direction, and positioned to overlap the stylus pen driving electrode in a third direction in a plan view, and a touch sensing electrode which is positioned on the touch insulating layer, includes the second conductive pattern extending in a second direction different from the first direction, and is positioned to overlap the stylus pen driving electrode in the third direction in the plan view.

The stylus pen driving electrode may include the first conductive pattern extending in the first direction.

The stylus pen driving electrode may include the first conductive pattern extending in the second direction.

The touch driving electrode may include a body part extending in the second direction, and a first bridge connected to the body part of the touch driving electrode and including a connection part extending in the first direction. The touch sensing electrode may include a body part including a long side in which the body part of the touch driving electrode is positioned in the first direction and a short side in which the connection part of the touch driving electrode is positioned in the second direction. The touch sensing electrode may include a second bridge connected to the body part of the touch sensing electrode in a contact hole and positioned to overlap the connection part of the touch driving electrode in the third direction in the plan view.

The second bridge may include the first conductive pattern and be positioned adjacent to the stylus pen driving electrode in the second direction.

The stylus pen driving electrode and the first bridge may be positioned adjacent to each other in the second direction in the plan view.

The stylus pen driving electrode may include the first conductive pattern extending in the first direction. The sensing panel may further include a stylus pen sensing electrode positioned on the base layer and including the first conductive pattern extending in the second direction.

The stylus pen driving electrode may include a body part positioned to overlap the touch driving electrode in the third direction in the plan view and a connection part connected to the body part of the stylus pen driving electrode and extending in the first direction. The stylus pen sensing electrode may include a body part extending in the second direction and including the first conductive pattern, and a fourth bridge which extends in the second direction, overlaps the stylus pen driving electrode in the third direction in the plan view, includes the second conductive pattern, and is connected to the body part of the stylus pen sensing electrode in a second contact hole.

The body part of the stylus pen sensing electrode may be positioned to overlap the body part of the touch sensing electrode in the third direction in the plan view.

The second bridge of the touch sensing electrode may be surrounded by the body part of the stylus pen sensing electrode in the plan view.

The body part of the stylus pen sensing electrode may be positioned between the body part of the touch sensing electrode and the body part of the touch driving electrode and be positioned to overlap the first bridge of the touch driving electrode in the third direction, in the plan view.

The sensing panel may further include a sensing line which is connected to the body part of the touch sensing electrode in a third contact hole, extends in the first direction, and includes the first conductive pattern.

The sensing line may be positioned to overlap the fourth bridge of the stylus pen sensing electrode and the body part of the touch driving electrode in the third direction in the plan view. The sensing line may be positioned adjacent to the body part of the stylus pen sensing electrode in the second direction in the plan view.

The sensing panel according to embodiments of the present disclosure may further include a stylus pen sensing line which is connected to the body part of the stylus pen sensing electrode in a fourth contact hole, extends in the first direction, and includes a third conductive pattern. The third conductive pattern may be positioned on the first and second conductive patterns in the plan view.

The stylus pen sensing line may be positioned to overlap the body part of the touch driving electrode and the body part of the touch sensing electrode in the third direction in the plan view.

The stylus pen sensing line may be positioned adjacent to the sensing line in the second direction in the plan view.

The body part of the touch sensing electrode may include first, second, and third body parts disposed side by side in the second direction, and fourth, fifth, and sixth body parts positioned spaced apart from the first to third body parts in the first direction and disposed side by side in the second direction. The touch sensing electrode may further include a fifth bridge which is connected to each of the second body part of the touch sensing electrode and the fifth body part of the touch sensing electrode in a fifth contact hole, includes the first conductive pattern, and extends in the first direction. The sensing panel may further include an a-th sensing line, which is connected to at least one of the first to sixth body parts of the touch sensing electrode positioned in an odd column in a third contact hole, extends in the second direction on a lower side of the fourth to sixth body parts of the touch sensing electrode, and includes the first conductive pattern, and a b-th sensing line, which is connected to at least one of the first to sixth body parts of the touch sensing electrode positioned in an even column in a third contact hole, extends in the second direction on an upper side of the first to third body parts of the touch sensing electrode, and includes the first conductive pattern.

The sensing panel may further include a sixth bridge which is connected to the a-th sensing line extending in the second direction in the odd column in a sixth contact hole or connected to the b-th sensing line extending in the second direction in the even column in the sixth contact hole, extends in the second direction, and includes the second conductive pattern.

The a-th sensing line may extend in the second direction on the lower side of the fourth to sixth body parts of the touch sensing electrode positioned in the even column, and the b-th sensing line may extend in the second direction on the lower side of the fourth to sixth body parts of the touch sensing electrode positioned in the odd column. The sensing panel may further include a seventh bridge which is connected to the b-th sensing line extending in the second direction in the odd column in a seventh contact hole or connected to the a-th sensing line extending in the second direction in the even column in a seventh contact hole, extends in the second direction, and includes the second conductive pattern.

An embodiment of a display device includes a sensing panel configured to sense a first input and a second input, a pen charging circuit configured to write a pen charging signal for detecting the first input to the sensing panel, a touch driving circuit configured to write a touch driving signal for detecting the second input to the sensing panel, an induced current detection circuit configured to detect an induced current corresponding to the first input from the sensing panel, and a touch sensing circuit configured to detect a touch sensing signal corresponding to the second input from the sensing panel, wherein the sensing panel includes a base layer, a stylus pen driving electrode which is positioned on the base layer, receives the pen charging signal, and includes a first conductive pattern, a touch insulating layer positioned on the first conductive pattern, a touch driving electrode which is positioned on the touch insulating layer, receives the touch driving signal, includes a second conductive pattern extending in a first direction, and is positioned to overlap the stylus pen driving electrode in a third direction in a plan view, and a touch sensing electrode which is positioned on the touch insulating layer, outputs the touch sensing signal, includes the second conductive pattern extending in a second direction different from the first direction, and is positioned to overlap the stylus pen driving electrode in the third direction in the plan view.

An embodiment of an electronic device includes a host to obtain a user input, a base layer, a stylus pen driving electrode positioned on the base layer and including a first conductive pattern, a touch insulating layer positioned on the first conductive pattern, a touch driving electrode positioned on the touch insulating layer, comprising a second conductive pattern extending in a first direction, and positioned to overlap the stylus pen driving electrode in a third direction in a plan view, and a touch sensing electrode which is positioned on the touch insulating layer, includes the second conductive pattern extending in a second direction different from the first direction, and is positioned to overlap the stylus pen driving electrode in the third direction in the plan view.

According to an aspect, there is provided a sensing panel as set out in claim 1. Additional features are set out in claims 2 to 13. According to an aspect, there is provided a display device as set out in claim 14. According to an aspect, there is provided an electronic device as set out in claim 15.

### BRIEF DESCRIPTION OF THE DRAWINGS

FIG. 1 is a perspective view of a sensing system according to an embodiment of the present disclosure.
FIG. 2 is a perspective view illustrating a display device according to an embodiment of the present disclosure.
FIG. 3 is a cross-sectional diagram of a display device according to an embodiment of the present disclosure.
FIG. 4 is a cross-sectional diagram illustrating an electronic panel according to an embodiment of the present disclosure.
FIG. 5 is a cross-sectional diagram illustrating a display panel according to an embodiment of the present disclosure.
FIG. 6 is a plan view illustrating a part of an electronic panel according to an embodiment of the present disclosure.
FIG. 7 is a cross-sectional diagram illustrating an electronic panel according to an embodiment of the present disclosure.
FIG. 8 is a plan view illustrating an embodiment of a unit cell according to embodiments of the present disclosure.
FIG. 9 is a plan view illustrating a second conductive pattern of an area X1 of FIG. 8.
FIG. 10 is a plan view illustrating a first conductive pattern of the area X1 of FIG. 8.
FIG. 11 is a cross-sectional diagram taken along line A-A' in FIGS. 9 and 10.
FIG. 12 is a plan view of an input sensing part including the unit cell of FIG. 8.
FIG. 13 is a diagram for illustrating the touch sensing process according to embodiments of the present disclosure.
FIG. 14 illustrates an embodiment of a stylus pen according to embodiments of the present disclosure.
FIGS. 15 and 16 illustrate a stylus pen sensing process in embodiments of the present disclosure.
FIG. 17 is a block diagram illustrating overall touch sensing and stylus pen sensing processes in embodiments of the present disclosure.
FIG. 18 illustrates an embodiment of a unit cell according to embodiments of the present disclosure.
FIG. 19 is a plan view illustrating a second conductive pattern of an area X2 of FIG. 18.
FIG. 20 is a plan view illustrating a first conductive pattern of the area X2 of FIG. 18.
FIG. 21 is a cross-sectional diagram taken along line B-B' in FIGS. 19 and 20.
FIG. 22 is a cross-sectional diagram taken along line C-C' in FIGS. 19 and 20.
FIG. 23 is a plan view of an input sensing part including the unit cell of FIG. 18.
FIGS. 24 and 25 are drawings for illustrating a stylus pen sensing process in embodiments of the present disclosure.
FIG. 26 is a block diagram illustrating overall touch sensing and stylus pen sensing processes in embodiments of the present disclosure.
FIG. 27 is an embodiment of a unit cell according to embodiments of the present disclosure.
FIG. 28 is a plan view illustrating a second conductive pattern of an area X3 of FIG. 27.
FIG. 29 is a plan view illustrating a first conductive pattern of the area X3 of FIG. 27.
FIG. 30 is a cross-sectional diagram taken along line D-D' in FIGS. 28 and 29.
FIG. 31 is a cross-sectional diagram taken along line E-E' in FIGS. 28 and 29.
FIGS. 32 and 33 are drawings for illustrating a stylus pen sensing process in embodiments of the present disclosure.
FIG. 34 is a block diagram illustrating overall touch sensing and stylus pen sensing processes in embodiments of the present disclosure.
FIG. 35 is an embodiment of a unit cell according to embodiments of the present disclosure.
FIG. 36 is a plan view illustrating a second conductive pattern of an area X4 of FIG. 35.
FIG. 37 is a plan view illustrating a first conductive pattern of the area X4 of FIG. 35.
FIG. 38 is a cross-sectional diagram taken along line F-F' in FIGS. 36 and 37.
FIG. 39 is a cross-sectional diagram taken along line G-G' in FIGS. 36 and 37.
FIG. 40 is a block diagram illustrating overall touch sensing and stylus pen sensing processes in embodiments of the present disclosure.
FIG. 41 is an embodiment of a unit cell according to embodiments of the present disclosure.
FIG. 42 is a plan view illustrating a second conductive pattern of an area X5 of FIG. 41.
FIG. 43 is a plan view illustrating a first conductive pattern of the area X5 of FIG. 41.
FIG. 44 is a cross-sectional diagram taken along line H-H' in FIGS. 42 and 43.
FIG. 45 is a block diagram illustrating overall touch sensing and stylus pen sensing processes in embodiments of the present disclosure.
FIG. 46 is an embodiment of a unit cell according to embodiments of the present disclosure.
FIG. 47 is a plan view illustrating a second conductive pattern of an area X6 of FIG. 46.
FIG. 48 is a plan view illustrating a first conductive pattern of the area X6 of FIG. 46.
FIG. 49 is a cross-sectional diagram taken along line I-I' in FIGS. 47 and 48.
FIG. 50 is a cross-sectional diagram taken along line J-J' in FIGS. 47 and 48.
FIG. 51 is a plan view illustrating touch sensing electrodes and sensing lines of an input sensing part according to embodiments of the present disclosure.
FIG. 52 is an embodiment of a unit cell according to embodiments of the present disclosure.
FIG. 53 is a plan view illustrating a third conductive pattern of an area X7 of FIG. 52.
FIG. 54 is a plan view illustrating a second conductive pattern of the area X7 of FIG. 52.
FIG. 55 is a plan view illustrating a first conductive pattern of the area X7 of FIG. 52.
FIG. 56 is a cross-sectional diagram taken along line K-K' in FIGS. 53 to 55.
FIG. 57 is a plan view illustrating touch sensing electrodes, sensing lines, stylus pen sensing electrodes, and stylus pen sensing lines of an input sensing part according to embodiments of the present disclosure.
FIG. 58 illustrates an embodiment in which a touch area is divided into a plurality of sub-touch areas and driven in an input sensing part according to embodiments of the present disclosure.
FIGS. 59A and 59B are embodiments of unit cells positioned in different columns, respectively, in embodiments of the present disclosure.
FIG. 60 is a drawing for explaining that the unit cells of FIG. 59A are connected to each other and the unit cells of FIG. 59B are connected to each other.
FIG. 61 illustrates an equivalent circuit diagram of an embodiment of differential amplification sensing of the unit cells of FIG. 59A and the unit cells of FIG. 59B.
FIG. 62 illustrates an embodiment of an input sensing part.
FIG. 63 is a drawing illustrating touch driving electrodes of the input sensing part of FIG. 62.
FIG. 64 is a drawing illustrating touch sensing electrodes of the input sensing part of FIG. 62.
FIG. 65 is a system block diagram of an electronic device according to embodiments of the disclosure.

### DETAILED DESCRIPTION

Hereinafter, referring to the accompanying drawings, various embodiments of the present disclosure are described in detail so that a person skilled in the art to which the present disclosure pertains can easily practice them. The present disclosure may be implemented in a number of different forms and is not limited to the embodiments described herein.

In order to clearly describe the present disclosure, parts irrelevant to the description are omitted, and the same reference numerals are given for the same or similar components throughout the specification. Therefore, reference numerals previously described may be used in other drawings as well.

In addition, the size and thickness of each configuration shown in the drawings are arbitrarily indicated for ease of explanation, so that the present disclosure is not necessarily limited to what is shown. Thicknesses may be exaggerated in order to clearly represent multiple layers and areas in the drawing.

Further, the expression "the same" or "identical" in the description may refer to "substantially the same" or "substantially identical". In other words, this expression may indicate that two parts are so identical that a person skilled in the art would be convinced that they are identical. Other expressions may also be expressions from which the word "substantially" is omitted.

The terms "first", "second", "a-th", "b-th", etc. may be used to describe various components, but the components should not be limited by the terms. The above terms are used only for the purpose of distinguishing one component from another. For example, without departing from the scope of the present disclosure, a first component may be named a second component, and similarly, the second component may be named the first component. Singular expressions include plural expressions, unless the context explicitly means otherwise.

Terms such as "below", "lower", "above", and "upper" are used to describe relationships between components illustrated in the drawings. The above terms are relative concepts and are explained based on the directions shown in the drawings.

As used herein, the word "or" means logical "or" so that, unless the context indicates otherwise, the expression "A, B, or C" means "A and B and C," "A and B but not C," "A and C but not B," "B and C but not A," "A but not B and not C," "B but not A and not C," and "C but not A and not B."

Unless otherwise defined, all terms used herein (including technical and scientific terms) have the same meanings as generally understood by those skilled in the art to which the present disclosure pertains. In addition, terms as used herein such as those defined in commonly used dictionaries should be interpreted to have meanings consistent with their meanings in the context of the relevant technology, and are explicitly defined herein, unless they would be interpreted in an idealized or overly formal sense.

It should be understood that the terms "comprise", "include", and "have" are intended to specify the presence of a feature, number, step, operation, component, part, or combination thereof described in the specification, but do not exclude the possibility of the presence or addition of one or more other features, numbers, steps, operations, components, parts, or combinations thereof.

Hereinafter, referring to the accompanying drawings, embodiments of the present disclosure will be described in detail.

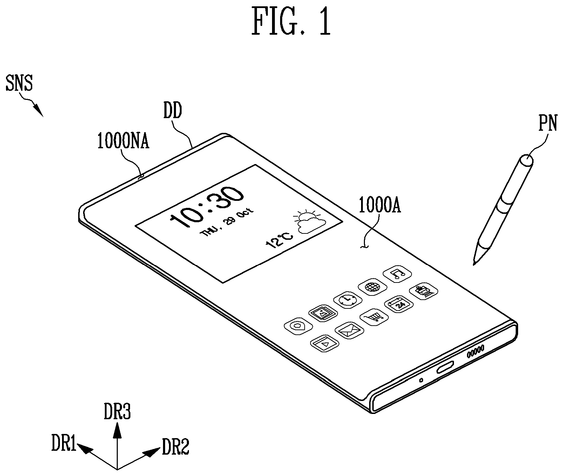

FIG. 1 is a perspective view of a sensing system SNS according to an embodiment of the present disclosure.

The sensing system SNS according to the embodiments of the present disclosure may include a display device DD and a stylus pen PN.

Referring to FIG. 1, the display device DD may detect a first input by an input device (e.g., the stylus pen PN). The display device DD may be a device which is activated in response to an electrical signal. For example, the display device DD may be, but is not limited to, a mobile phone, tablet, car navigation system, game console, or wearable device. In FIG. 1, an example is shown in which the display device DD is a mobile phone.

In the display device DD, an active area 1000A and a peripheral area 1000NA may be defined. The display device DD may display an image through the active area 1000A. The active area 1000A may include a surface defined by a first direction DR1 and a second direction DR2. The peripheral area 1000NA may surround the periphery of the active area 1000A.

The display device DD may detect inputs which are applied from outside the display device DD. The external inputs may include various forms of external inputs, such as parts of a user's body, light, heat, or pressure. The external inputs may be referred to as second inputs.

The display device DD shown in FIG. 1 may detect an input by the user's touch and an input by the input device. The input device may refer to a device other than the user's body. The input by the input device may be referred to as a first input. For example, the input device may be an Active Electrostatic (AES) pen, an Electro-Magnetic Resonance (EMR) pen, a stylus pen PN, a touch pen, or an electronic pen. In the following, an example is described where the input device is a stylus pen PN, and the stylus pen PN may be an electro-magnetic resonance pen.

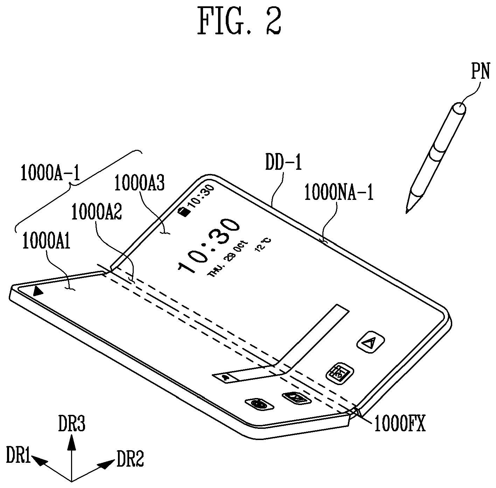

FIG. 2 is a perspective view illustrating the display device DD according to an embodiment of the present disclosure.

In describing FIG. 2, the same reference numerals are used for components described with respect to FIG. 1, and a description thereof is omitted.

FIG. 2 illustrates a state where a display device DD-1 is folded at a predetermined angle. Referring to FIG. 2, the display device DD-1, in its unfolded state, may have an active area 1000A-1 including a plane defined by the first direction DR1 and the second direction DR2 and a peripheral area 1000NA-1.

The active area 1000A-1 may include a first area 1000A1, a second area 1000A2, and a third area 1000A3. The first area 1000A1, the second area 1000A2, and the third area 1000A3 may be defined sequentially in the second direction DR2. The second area 1000A2 may be bent relative to a folding axis 1000FX extending along the first direction DR1. Therefore, the first area 1000A1 and the third area 1000A3 may be referred to as non-folding areas, and the second area 1000A2 may be referred to as a folding area.

When the display device DD-1 is folded, the first area 1000A1 and the third area 1000A3 may face each other. Therefore, in a fully folded state, the active area 1000A-1 may not be exposed to the outside, which may be referred to as in-folding. However, this is an example and does not limit the operation of the display device DD-1 according to an embodiment of the present disclosure.

For example, according to an embodiment of the present disclosure, when the display device DD-1 is folded, the first area 1000A1 and the third area 1000A3 may be opposed to each other. Therefore, in the folded state, the active area 1000A-1 may be exposed to the outside, which may be referred to as out-folding.

The display device DD-1 may be capable of only one operation of in-folding or out-folding. Alternatively, the display device DD-1 may be capable of both in-folding and out-folding operations. In this case, the same area of the display device DD-1, e.g., the second area 1000A2, may be in-folded and out-folded.

In FIG. 2, one folding area and two non-folding areas are shown as an example, but the number of folding and non-folding areas is not limited thereto. For example, the display device DD-1 may include a plurality of, more than two non-folding areas and a plurality of folding areas positioned between adjacent non-folding areas.

In FIG. 2, the folding axis 1000FX is exemplarily illustrated as extending in the first direction DR1, but embodiments of the present disclosure are not limited thereto. For example, the folding axis 1000FX may extend along a direction parallel to the second direction DR2. In this case, the first area 1000A1, the second area 1000A2, and the third area 1000A3 may be arranged sequentially along the first direction DR1.

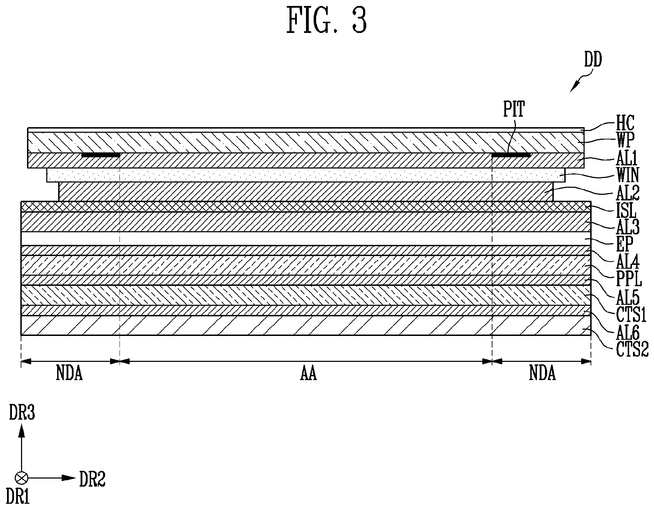

FIG. 3 is a cross-sectional diagram of the display device DD according to an embodiment of the present disclosure.

Referring to FIG. 3, the display device DD may include an electronic panel EP, an impact absorbing layer ISL, a panel protective layer PPL, a first conductive sheet CTS1, a second conductive sheet CTS2, a window WIN, a window protective layer WP, a hard coating layer HC, and first to sixth adhesive layers AL1 to AL6.

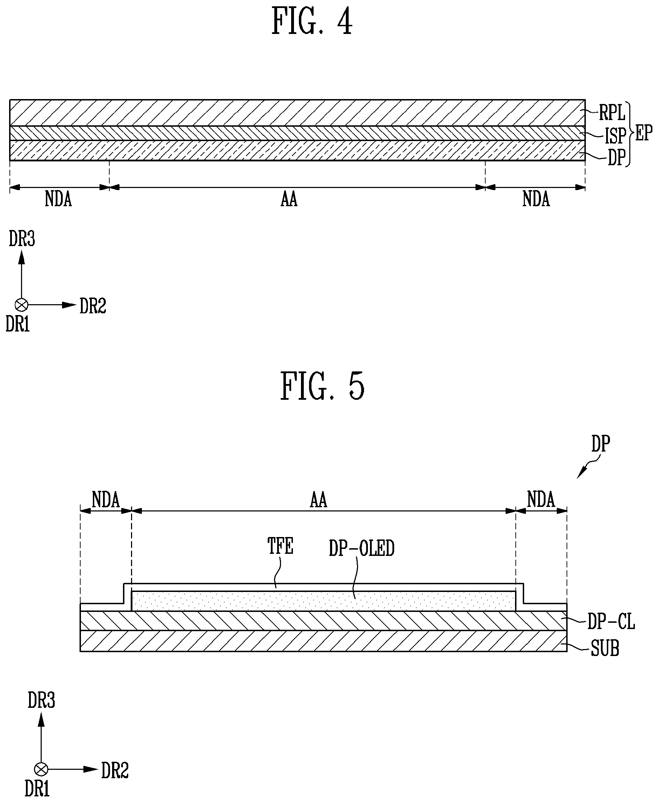

The electronic panel EP may display an image, detect the first and second inputs described above, and reduce reflectance of external light. The electronic panel EP may include a display panel, an input sensing part, and an anti-reflective layer, and such configuration of the electronic panel EP will be described with respect to FIG. 4 below.

The impact absorbing layer ISL may be disposed on the electronic panel EP. The impact absorbing layer ISL may protect the electronic panel EP by absorbing external impact applied from above the display device DD toward the electronic panel EP. In an embodiment, the impact absorbing layer ISL may be manufactured in the form of a stretched film.

The impact absorbing layer ISL may include a flexible plastic material. The flexible plastic material may be defined as a synthetic resin film. For example, the impact absorbing layer ISL may include the flexible plastic material such as polyimide (PI) or polyethylene terephthalate (PET).

The panel protective layer PPL may be disposed below the electronic panel EP. The panel protective layer PPL may protect a lower part of the electronic panel EP. The panel protective layer PPL may include a flexible plastic material. For example, the panel protective layer PPL may include polyethylene terephthalate (PET).

The first conductive sheet CTS1 may be disposed below the panel protective layer PPL. The second conductive sheet CTS2 may be disposed below the first conductive sheet CTS1. The first conductive sheet CTS1 and the second conductive sheet CTS2 may include metal.

**In** an embodiment, the first conductive sheet CTS1 may include a ferromagnet. For example, the first conductive sheet CTS1 may be defined as a ferrite sheet including a ferrite. In an embodiment, the second conductive sheet CTS2 may include a diamagnetic material. For example, the second conductive sheet CTS2 may be defined as a copper sheet including copper. The first and second conductive sheets CTS 1, CTS2 may shield an external magnetic field so that the external magnetic field cannot be applied to the electronic panel EP at the bottom of the display device DD.

The window WIN may be disposed on the impact absorbing layer ISL. The window WIN may protect the electronic panel EP from external scratches. The window WIN may be optically transparent. The window WIN may include glass. However, embodiments of the present disclosure are not limited thereto. The window WIN may include a synthetic resin film.

The window WIN may have a multi-layer structure or a single-layer structure. For example, the window WIN may include a plurality of synthetic resin films bonded with an adhesive, or may include a glass substrate and a synthetic resin film bonded with an adhesive.

The window protective layer WP may be disposed on the window WIN. The window protective layer WP may include a flexible plastic material such as polyimide (PI) or polyethylene terephthalate (PET). The hard coating layer HC may be disposed on the top surface of the window protective layer WP.

A printed layer PIT may be disposed on the bottom surface of the window protective layer WP. The printed layer PIT may have a black color, but the color of the printed layer PIT is not limited thereto. The printed layer PIT may be adjacent to a border of the window protective layer WP. The printed layer PIT may overlap a non-display area NDA.

The first adhesive layer AL1 may be disposed between the window protective layer WP and the window WIN. By the first adhesive layer AL1, the window protective layer WP and the window WIN may be bonded to each other. The first adhesive layer AL1 may cover the printed layer PIT.

The second adhesive layer AL2 may be disposed between the window WIN and the impact absorbing layer ISL. By the second adhesive layer AL2, the window WIN and the impact absorbing layer ISL may be bonded to each other.

The third adhesive layer AL3 may be disposed between the impact absorbing layer ISL and the electronic panel EP. The third adhesive layer AL3 allows the impact absorbing layer ISL and the electronic panel EP to be bonded to each other.

The fourth adhesive layer AL4 may be disposed between the electronic panel EP and the panel protective layer PPL. The electronic panel EP and the panel protective layer PPL may be bonded to each other by the fourth adhesive layer AL4.

The fifth adhesive layer AL5 may be disposed between the panel protective layer PPL and the first conductive sheet CTS1. The panel protective layer PPL and the first conductive sheet CTS 1 may be bonded to each other by the fifth adhesive layer AL5.

The sixth adhesive layer AL6 may be disposed between the first conductive sheet CTS1 and the second conductive sheet CTS2. The first conductive sheet CTS1 and the second conductive sheet CTS2 may be bonded to each other by the sixth adhesive layer AL6.

In an embodiment, the first to sixth adhesive layers AL1 to AL6 may include a pressure sensitive adhesive (PSA) or an optically clear adhesive (OCA). However, the materials of the first to sixth adhesive layers AL1 to AL6 is not limited to the above. For example, the first to sixth adhesive layers AL1 to AL6 may include an optically clear resin (OCR), and the like.

FIG. 4 is a cross-sectional diagram illustrating the electronic panel EP according to an embodiment of the present disclosure.

Referring to FIG. 4, the electronic panel EP may include a display panel DP, an input sensing part ISP disposed on the display panel DP (e.g., in a third direction DR3), and an anti-reflective layer RPL disposed on the input sensing part ISP. The display panel DP may be a flexible display panel. For example, the display panel DP may include a flexible substrate and a plurality of elements disposed on the flexible substrate.

The display panel DP according to embodiments of the present disclosure may be a light emitting display panel. For example, the display panel DP may be implemented as an organic light emitting display panel, a quantum dot display panel, a micro light emitting diode (LED) display panel, or a nano LED display panel. A light emitting layer of the organic light emitting display panel may include an organic light emitting material. A light emitting layer of the quantum dot display panel may include quantum dots and quantum rods. A light emitting layer of the micro LED display panel may include micro-LEDs. A light emitting layer of the nano LED display panel may include nano LEDs. For convenience of explanation, the display panel DP is assumed to be an organic light emitting display panel below. However, embodiments of the present disclosure are not limited thereto.

The input sensing part ISP may include a plurality of stylus pen electrodes for detecting the first input as described above electromagnetically (or using electromagnetic resonance). The input sensing part ISP may include a plurality of touch electrodes for detecting the second input as described above in a capacitive manner. In an embodiment, the input sensing part ISP may be formed directly on the display panel DP during manufacturing the electronic panel EP. However, embodiments of the present disclosure are not limited thereto. For example, the input sensing part ISP may be manufactured as a separate panel and disposed on the display panel DP.

The anti-reflective layer RPL may be disposed on the input sensing part ISP. The anti-reflective layer RPL may be formed directly on the input sensing part ISP during manufacture of the electronic panel EP. However, embodiments of the present disclosure are not limited thereto. The anti-reflective layer RPL may be implemented as an external light anti-reflective film. The anti-reflective layer RPL may reduce the reflectance of external light incident from above the display device DD (see FIG. 3) toward the display panel DP.

For example, the input sensing part ISP may be formed directly on the display panel DP and the anti-reflective layer RPL may be formed directly on the input sensing part ISP, but embodiments of the present disclosure are not limited thereto. For example, the input sensing part ISP may be manufactured separately and attached to the display panel DP by an adhesive layer, and the anti-reflective layer RPL may be manufactured separately and attached to the input sensing part ISP by an adhesive layer.

FIG. 5 is a cross-sectional diagram illustrating the display panel DP according to an embodiment of the present disclosure.

Referring to FIG. 5, the display panel DP may include a substrate SUB, a circuit element layer DP-CL disposed on the substrate SUB, a display element layer DP-OLED disposed on the circuit element layer DP-CL, and a thin film encapsulation layer TFE disposed on the display element layer DP-OLED.

The substrate SUB may include a display area AA and a non-display area NDA around the display area AA. The substrate SUB may include a flexible plastic material such as polyimide (PI).

The substrate SUB may be a member which provides a base surface on which the circuit element layer DP-CL is disposed. The substrate SUB may be a glass substrate, a metal substrate, or a polymer substrate. However, embodiments of the present disclosure are not limited thereto, and the substrate SUB may be implemented as an inorganic, organic, or composite layer.

In an embodiment, the substrate SUB may have a multilayer structure. For example, the substrate SUB may include a first synthetic resin layer, a silicon oxide (SiOₓ) layer disposed on the first synthetic resin layer, an amorphous silicon (a-Si) layer disposed on the silicon oxide layer, and a second synthetic resin layer disposed on the amorphous silicon layer. The silicon oxide layer and the amorphous silicon layer may be referred to as a base barrier layer.

Each of the first and second synthetic resin layers may include a polyimide (PI)-based resin. In addition, each of the first and second synthetic resin layers may include at least one of acrylic resins, methacrylate resins, polyisoprene resins, vinyl resins, epoxy resins, urethane resins, cellulose resins, siloxane resins, polyamide resins, and perylene resins. In the present specification, the "~~" resin refers to the inclusion of a functional group of "~~".

The circuit element layer DP-CL may be disposed on the substrate SUB. The circuit element layer DP-CL may include an insulating layer, a semiconductor pattern, a conductive pattern, and wiring (e.g., a power line, a signal line). The insulating layer, a semiconductor layer, and a conductive layer are formed on the substrate SUB by coating, deposition, or the like, and then the insulating layer, the semiconductor layer, and the conductive layer may be selectively patterned through multiple photolithography processes. Then, the semiconductor pattern, conductive pattern, and wiring included in the circuit element layer DP-CL may be formed.

The display element layer DP-OLED may be disposed on the circuit element layer DP-CL. The display element layer DP-OLED may be disposed in the display area AA. A plurality of pixels may be disposed in the display area AA. Each of the pixels may include a transistor disposed in the circuit element layer DP-CL and a light emitting element disposed in the display element layer DP-OLED.

The thin film encapsulation layer TFE may be disposed on the circuit element layer DP-CL to cover the display element layer DP-OLED. The thin film encapsulation layer TFE may include inorganic layers and an organic layer between the inorganic layers. The inorganic layers may protect the pixels from moisture or oxygen. The organic layer may protect the pixels from foreign substances such as dust particles.

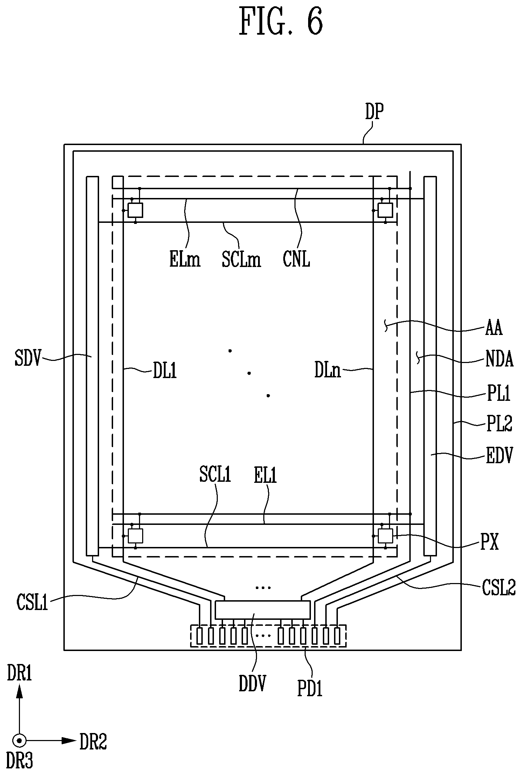

FIG. 6 is a plan view illustrating a part of an electronic panel according to an embodiment of the present disclosure.

Referring to FIG. 6, the electronic panel EP (see FIG. 4) may include the display panel DP, a scan driver SDV (or a scan driving circuit SDV), a data driver DDV (or a data driving circuit DDV), a light emission driver EDV (or a light emission driving circuit EDV), and a plurality of first pads PD1.

In an embodiment, the display panel DP may have a rectangular shape with long sides extending in the first direction DR1 and short sides extending in the second direction DR2. However, the shape of the display panel DP according to embodiments of the present disclosure is not limited thereto. For example, the display panel DP may have a circular shape. The display panel DP may include the display area AA and the non-display area NDA which surrounds the display area AA.

The display panel DP may include a plurality of pixels PX, a plurality of scan lines SCL1 to SCLm (m is an integer greater than or equal to 1), a plurality of data lines DL1 to DLn (n is an integer greater than or equal to 1), a plurality of light emission lines EL1 to ELm (m is an integer greater than or equal to 1), first and second control lines CSL1, CSL2, first and second power lines PL1, PL2, and connection lines CNL.

The pixels PX may be disposed in the display area AA. In an embodiment, the scan driver SDV and the light emission driver EDV may be disposed in the non-display area NDA adjacent to the left and right sides (e.g., the long sides) of the display panel DP, respectively. In an embodiment, the data driver DDV may be disposed in the non-display area NDA adjacent to the upper or lower side of the display panel DP (e.g., one of the short sides). When viewed on a plane, the data driver DDV may be adjacent to a lower end of the display panel DP.

The scan lines SCL1 to SCLm may be extended in the second direction DR2 and connected to the pixels PX and the scan driver SDV. The data lines DL1 to DLn may be extended in the first direction DR1 and connected to the pixels PX and the data driver DDV. The light emission lines EL1 to ELm may be extended in the second direction DR2 and connected to the pixels PX and the light emission driver EDV.

The first power line PL1 may be extended in the first direction DR1 and disposed in the non-display area NDA. The first power line PL1 may be disposed between the display area AA and the light emission driver EDV.

The connection lines CNL may be extended in the second direction DR2 and arranged in the first direction DR1 to be connected to the first power line PL1 and the pixels PX. A first voltage may be applied to the pixels PX through the first power line PL1 and the connection lines CNL connected to each other.

The second power line PL2 may be disposed in the non-display area NDA and may extend along the long sides of the display panel DP and the other short side of the display panel DP where the data driver DDV is not disposed. The second power line PL2 may be disposed outside the scan driver SDV and the light emission driver EDV.

The second power line PL2 may be extended toward the display area AA and connected to the pixels PX. A second voltage having a lower level than the first voltage may be applied to the pixels PX through the second power line PL2.

The first control line CSL1 may be connected to the scan driver SDV and extended toward the lower end of the display panel DP. The second control line CSL2 may be connected to the light emission driver EDV and extended toward the lower end of the display panel DP. The data driver DDV may be disposed between the first control line CSL1 and the second control line CSL2.

The first pads PD1 may be disposed in the non-display area NDA adjacent to the lower end of the display panel DP and may be closer to the lower end of the display panel DP than to the data driver DDV. The data driver DDV, the first power line PL1, the second power line PL2, the first control line CSL1, and the second control line CSL2 may be connected to the first pads PD1. The data lines DL1 to DLn may be connected to the data driver DDV, and the data driver DDV may be connected to the first pads PD1 corresponding to the data lines DL1 to DLn.

The display device DD (see FIG. 1) may further include a timing controller to control operations of the scan driver SDV, the data driver DDV, and the light emission driver EDV. The display device DD may further include a voltage generator for generating the first and second voltages. The timing controller and the voltage generator may be connected to the first pads PD1 via a printed circuit board.

The scan driver SDV may generate scan signals. The generated scan signals may be applied to the pixels PX through the scan lines SCL1 to SCLm. The data driver DDV may generate data voltages. The generated data voltages may be applied to the pixels PX through the data lines DL1 to DLn. The light emission driver EDV may generate a plurality of light emission signals. The generated light emission signals may be applied to the pixels PX through the light emission lines EL1 to ELm.

The pixels PX may be provided with the data voltages in response to the scan signals (e.g., scan signals of a turn-on level). The pixels PX may display an image by emitting light of luminance corresponding to the data voltages in response to the light emission signals (e.g., light emission signals of a turn-on level).

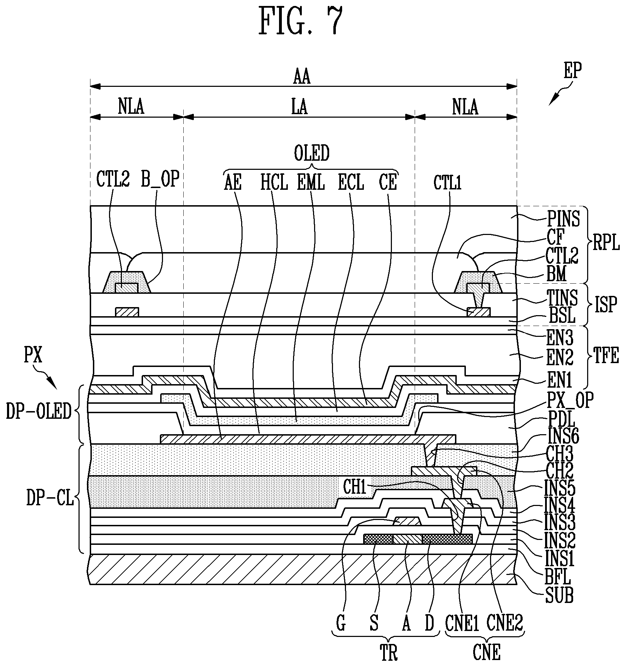

FIG. 7 is a cross-sectional diagram illustrating the electronic panel EP according to an embodiment of the present disclosure.

Referring to FIG. 7, the pixel PX may include a switching element (e.g., a transistor TR) and a light emitting element OLED. The light emitting element OLED may include a first electrode AE (or an anode AE), a second electrode CE (or a cathode CE), a hole control layer HCL, an electron control layer ECL, and a light-emitting layer EML.

The transistor TR and the light emitting element OLED may be disposed on the substrate SUB. While one transistor TR is shown as an example, in practice, the pixel PX may include a plurality of transistors for driving the light emitting element OLED and at least one storage element (e.g., a capacitor).

The display area AA may include a light emitting area LA corresponding to each pixel PX and a non-light-emitting area NLA around the light emitting area LA. The light emitting element OLED may be disposed in the light emitting area LA.

A buffer layer BFL may be disposed on the substrate SUB. The buffer layer BFL may include an inorganic layer. A semiconductor pattern may be disposed on the buffer layer BFL. The semiconductor pattern may include polysilicon, amorphous silicon, or a metal oxide.

The semiconductor pattern may be doped with an N-type dopant or a P-type dopant. The N-type dopant, for example, may include germanium (Ge), selenium (Se), tellurium (Te), and tin (Sn). The P-type dopant, for example, may include magnesium (Mg), zinc (Zn), calcium (Ca), strontium (Sr), and barium (Ba).

The semiconductor pattern may include a highly doped area and a lowly doped area. The conductivity of the highly doped area is greater than that of the lowly doped area, and the highly doped area may substantially function as a source region S and a drain region D of the transistor TR. The lowly doped area may substantially function as an active region A (or a channel region A) of the transistor TR.

The source region S, active region A, and drain region D of the transistor TR may be formed from the semiconductor pattern. A first insulating layer INS1 may be disposed on the semiconductor pattern. On the first insulating layer INS1, a gate G of the transistor TR may be disposed. A second insulating layer INS2 may be disposed on the gate G. A third insulating layer INS3 may be disposed on the second insulating layer INS2.

A connecting electrode CNE may include a first connecting electrode CNE1 and a second connecting electrode CNE2 to connect the transistor TR and the light emitting element OLED. The first connecting electrode CNE1 may be disposed on the third insulating layer INS3. The first connecting electrode CNE1 may be connected to the drain region D via a first contact hole CH1 included in the first to third insulating layers INS1 to INS3.

A fourth insulating layer INS4 may be disposed on the first connecting electrode CNE1. A fifth insulating layer INS5 may be disposed on the fourth insulating layer INS4. The second connecting electrode CNE2 may be disposed on the fifth insulating layer INS5. The second connecting electrode CNE2 may be connected to the first connecting electrode CNE1 via a second contact hole CH2 included in the fourth and fifth insulating layers INS4, INS5.

A sixth insulating layer INS6 may be disposed on the second connecting electrode CNE2. The layers from the buffer layer BFL to the sixth insulating layer INS6 may be defined as the circuit element layer DP-CL. The first insulating layer to the sixth insulating layer INS1 to INS6 may include either an inorganic or organic layer.

A first electrode AE may be disposed on the sixth insulating layer INS6. The first electrode AE may be connected to the second connecting electrode CNE2 via a third contact hole CH3 included in the sixth insulating layer INS6. On the first electrode AE and the sixth insulating layer INS6, a pixel define layer PDL including an opening PX_OP to expose a predetermined portion of the first electrode AE may be disposed.

The hole control layer HCL may be disposed on the first electrode AE and the pixel define layer PDL. The hole control layer HCL may include a hole transport layer and a hole injection layer.

The light-emitting layer EML may be disposed on the hole control layer HCL. The light-emitting layer EML may be disposed in an area corresponding to the opening PX_OP. The light-emitting layer EML may include organic or inorganic materials.

The light-emitting layer EML may generate light in a predetermined wavelength band. For example, the light-emitting layer EML may generate light in any one of a red wavelength band, a green wavelength band, and a blue wavelength band. The red wavelength band may be about 630 to 750 nm (nanometer). The green wavelength band may be about 495 to 570 nm. The blue wavelength band may be about 450 to 495 nm. However, embodiments of the present disclosure are not limited thereto. For example, the light-emitting layer EML may generate any of the following light in the yellow wavelength band, light in the magenta waveband band, and light in the cyan wavelength band.

The electron control layer ECL may be disposed on the light-emitting layer EML and the hole control layer HCL. The electron control layer ECL may include an electron transport layer and an electron injection layer. The hole control layer HCL and the electron control layer ECL may be commonly disposed in the light-emitting area LA and the non-light-emitting area NLA.

The second electrode CE may be disposed on the electron control layer ECL. The second electrode CE may be commonly disposed in the pixels PX. The layer in which the light-emitting element OLED is disposed may be defined as the display element layer DP-OLED.

The thin film encapsulation layer TFE may be disposed on the second electrode CE to cover the pixel PX. The thin film encapsulation layer TFE may include a first encapsulation layer EN1 disposed on the second electrode CE, a second encapsulation layer EN2 disposed on the first encapsulation layer EN1, and a third encapsulation layer EN3 disposed on the second encapsulation layer EN2.

**In** an embodiment, the first and third encapsulation layers EN1, EN3 may include an inorganic insulating layer. The second encapsulation layer EN2 may include an organic insulating layer. In the above embodiment, the first and third encapsulation layers EN1, EN3 may protect the pixel PX from moisture or oxygen. The second encapsulation layer EN2 may protect the pixel PX from foreign substances such as dust particles.

The light-emitting layer EML may form an exciton by recombining injected holes and electrons. As the generated exciton transitions to the ground state, the light-emitting element OLED may emit light.

The input sensing part ISP may be disposed on the thin film encapsulation layer TFE. The input sensing part ISP may be manufactured directly on the top surface of the thin film encapsulation layer TFE. The input sensing part ISP may also be referred to as a sensing panel ISP.

A base layer BSL may be disposed on the thin film encapsulation layer TFE. The base layer BSL may include an inorganic insulating layer. In an embodiment, at least one inorganic insulating layer may function as the base layer BSL. The base layer BSL may be provided on the thin film encapsulation layer TFE.

The input sensing part ISP may include a first conductive pattern CTL1 and a second conductive pattern CTL2 disposed on the first conductive pattern CTL1. The first conductive pattern CTL1 may be disposed on the base layer BSL. A touch insulating layer TINS may be disposed on the base layer BSL to cover the first conductive pattern CTL1. The touch insulating layer TINS may include an inorganic or organic insulating layer. The second conductive pattern CTL2 may be disposed on the touch insulating layer TINS.

The touch insulating layer TINS may include one or more of an inorganic material and an organic material. The inorganic material may include one or more of the group consisting of silicon nitride (SiNₓ), silicon oxide (SiOₓ), silicon oxynitride (SiOₓN_{y}), and aluminum oxide (AlOₓ). The organic material may include one or more of the group consisting of acrylic resin, epoxy resin, phenol resin, polyamide resin, and polyimide resin. However, embodiments of the present disclosure are not limited thereto.

According to embodiments, when the touch insulating layer TINS includes the organic material, the risk of a short between the first conductive pattern CTL1 and the second conductive pattern CTL2 may be reduced. Accordingly, the structural risk may be reduced even if the thickness of at least one of the first conductive pattern CTL1 and the second conductive pattern CTL2 is increased. According to this, the degree of freedom in process design may be improved.

The first and second conductive patterns CTL1, CTL2 may overlap the non-light-emitting area NLA. The first and second conductive patterns CTL1, CTL2 may be disposed in the non-light-emitting area NLA between the light-emitting areas LA. The first and second conductive patterns CTL1, CTL2 may have a mesh shape.

The first conductive pattern CTL1 and the second conductive pattern CTL2 may each include a single layer or multiple layers of metal. The first conductive pattern CTL1 and the second conductive pattern CTL2 may include at least one of various metal materials, including gold (Au), silver (Ag), aluminum (Al), molybdenum (Mo), chromium (Cr), titanium (Ti), nickel (Ni), neodymium (Nd), copper (Cu), platinum (Pt), and the like, or an alloy thereof. Depending on embodiments, the first conductive pattern CTL1 and the second conductive pattern CTL2 may include at least one of various transparent conductive materials, including silver nanowires (AgNW), indium tin oxide (ITO), indium zinc oxide (IZO), indium gallium zinc oxide (IGZO), antimony zinc oxide (AZO), indium tin zinc oxide (ITZO), zinc oxide (ZnO), tin oxide (SnO₂), carbon nanotube (CNT), and graphene.

The first and second conductive patterns CTL1, CTL2 may form touch sensing electrodes and stylus pen sensing electrodes of the input sensing part ISP described above. For example, the first and second mesh-shaped conductive patterns CTL1, CTL2 may be separated from each other in a predetermined area to form touch electrodes and stylus pen electrodes. A part of the second conductive pattern CTL2 may be connected to the first conductive pattern CTL1.

An anti-reflective layer RPL may be disposed on the second conductive pattern CTL2. The anti-reflective layer RPL may include a black matrix BM and a plurality of color filters CF. The black matrix BM may be positioned overlapping the non-light-emitting area NLA. The color filters CF may be positioned overlapping the light-emitting areas LA.

The black matrix BM may be disposed on the touch insulating layer TINS to cover the second conductive pattern CTL2. The black matrix BM may include an opening B_OP which overlaps the light-emitting area LA and the opening PX_OP. The black matrix BM may absorb and block light. In an embodiment, the black matrix BM may include carbon black, but embodiments of the present disclosure are not limited thereto. The width of the opening B_OP of the black matrix BM may be greater than the width of the opening PX_OP of the pixel define layer PDL.

The color filters CF may be disposed on the touch insulating layer TINS and the black matrix BM. The color filters CF may be disposed in the openings B_OP of the black matrix BM. A planarization insulating layer PINS may be disposed on the color filters CF. The planarization insulating layer PINS may provide a flat top surface. In an embodiment, the planarization insulating layer PINS may include an organic insulating layer.

When external light directed toward the display panel DP is reflected from the display panel DP and re-enters an external user, the user may perceive the external light, like a mirror. To prevent this phenomenon, for example, the anti-reflective layer RPL may include the plurality of color filters CF which display the same color as the pixels PX of the display panel DP. The color filters CF may filter the external light to the same colors as the pixels PX. In such cases, the phenomenon of external light being perceived by the user may be alleviated (or eliminated).

**In** addition, the first conductive pattern CTL1 and the second conductive pattern CTL2, which are included in the input sensing part ISP, may form a unit cell.

The unit cells may be arranged in a repeating fashion within the input sensing part ISP to sense touch (e.g., the second input described above) or to sense a stylus pen (e.g., the first input described above).

Below various embodiments of unit cells are described.

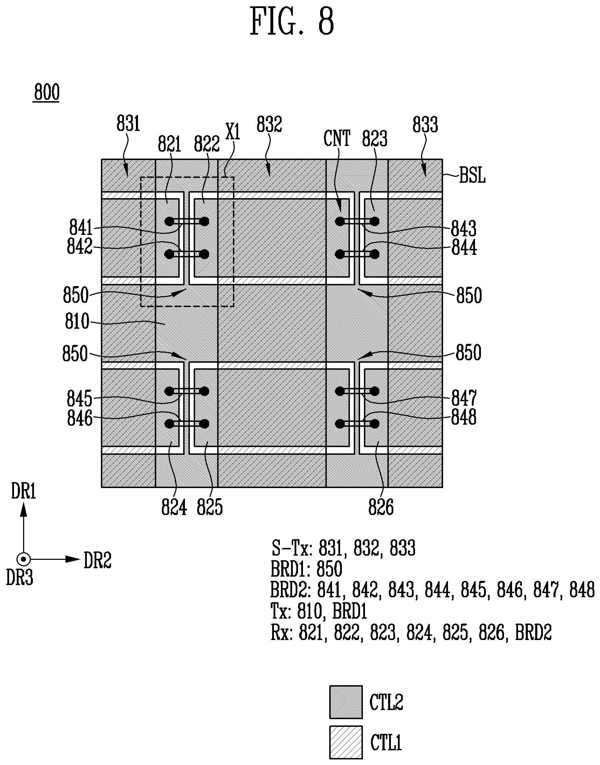

FIG. 8 is a plan view illustrating an embodiment of a unit cell 800 according to embodiments of the present disclosure.

For convenience of explanation and visibility, some of boundaries of layers that are located below and not visible may be shown in the plan view. Below, embodiments of the unit cell 800 are described based in the plan view viewed from the top.

Referring to FIG. 8, the unit cell 800 according to embodiments of the present disclosure may include a stylus pen driving electrode S-Tx, a touch driving electrode Tx, and a touch sensing electrode Rx.

The stylus pen driving electrode S-Tx is configured to charge the stylus pen PN (see FIG. 1). The stylus pen driving electrode S-Tx may be configured to sense an induced current generated as the charged stylus pen PN approaches.

In an embodiment, the stylus pen driving electrode S-Tx may include a first body part 831, a second body part 832, and a third body part 833. The first body part 831, the second body part 832, and the third body part 833 may be positioned spaced apart from each other in the second direction DR2. The first body part 831, the second body part 832, and the third body part 833 may each extend overall in the first direction DR1. The first to third body parts 831 to 833 may include the first conductive pattern CTL1.

The first body part 831 and the third body part 833 of the stylus pen driving electrode S-Tx may have the same or similar widths in the second direction DR2. In an embodiment, the width of the second body part 832 in the second direction DR2 may be wider than the width of each of the first body part 831 and the third body part 833 in the second direction DR2. However, embodiments of the present disclosure are not limited thereto. For example, the width of the second body part 832 in the second direction DR2 may be equal to or narrower than the width of each of the first body part 831 and the third body part 833 in the second direction DR2.

A touch driving signal may be input to the touch driving electrode Tx to form mutual capacitance with the touch sensing electrode Rx. In an embodiment, the touch driving electrode Tx may be configured to sense the induced current generated as the charged stylus pen PN (see FIG. 1) approaches.

The touch driving electrode Tx may include a body part 810 and a first bridge BRD1. The first bridge BRD1 may include a connection part 850. For example, the touch driving electrode Tx may include the body part 810 which extends overall in the second direction DR2 and the first bridge BRD1 which is connected to the body part 810 and extends overall in the first direction DR1.

The body part 810 of the touch driving electrode Tx may include the second conductive pattern CTL2. The first bridge BRD1 may include the second conductive pattern CTL2. The touch driving electrode Tx may be disposed to entirely surround the touch sensing electrode Rx (or body parts 821 to 826 of the touch sensing electrode Rx). For example, the body part 810 of the touch driving electrode Tx may be positioned in the first direction DR1 of the body parts 821 to 826 of the touch sensing electrode Rx and may surround the long side of the touch sensing electrode Rx. The first bridge BRD1 of the touch driving electrode Tx is positioned in the second direction DR2 of the body parts 821 to 826 of the touch sensing electrode Rx and may surround the short side of the touch sensing electrode Rx.

In an embodiment, the touch driving electrode Tx may extend entirely in the first direction DR1. For example, the touch driving electrode Tx may be connected to the touch driving electrode Tx of an adjacent unit cell in the first direction DR1.

The touch sensing electrode Rx may be configured to sense whether there is a touch or the position of the touch. For example, when a finger or the like approaches the vicinity of the touch sensing electrode Rx, the value of mutual capacitance formed between the touch driving electrode Tx and the touch sensing electrode Rx may change, and by sensing the touch sensing electrode Rx, it is possible to detect whether there is a touch or the position of the touch. In an embodiment, a touch sensing electrode Rx may be configured to sense the induced current generated as the charged stylus pen PN (see FIG. 1) approaches.

The touch sensing electrode Rx may include the plurality of body parts 821 to 826 and a second bridge BRD2. The second bridge BRD2 may include a plurality of connection parts 841 to 848. For example, the touch sensing electrode Rx may include the second bridge BRD2 connecting two body parts that are adjacent to each other in the second direction DR2 among the plurality of body parts 821 to 826.

The body parts 821 to 826 of the touch sensing electrode Rx may include the second conductive pattern CTL2. The second bridge BRD2 may include the first conductive pattern CTL1. The first body part 821, the second body part 822, and the third body part 823 of the touch sensing electrode Rx may be disposed side by side and adjacent to each other in the second direction DR2. The fourth body part 824, the fifth body part 825, and the sixth body part 826 of the touch sensing electrode Rx may be disposed side by side and adjacent to each other in the second direction DR2. The first to third body parts 821 to 823 and the fourth to sixth body parts 824 to 826 of the touch sensing electrode Rx may be spaced apart from each other in the first direction DR1 with the body part 810 of the touch driving electrode Tx interposed therebetween.

The second bridge BRD2 may be connected to the body parts 821 to 826 of the touch sensing electrode Rx via a contact hole CNT. The second bridge BRD2 may include a plurality of connection parts 841 to 848. For example, the first body part 821 and the second body part 822 of the touch sensing electrode Rx may be connected to each other through the first connection part 841 and the second connection part 842. In the above embodiment, the first body part 821 and the second body part 822 are described as being connected to each other through two connection parts 841 and 842 adjacent to each other in the first direction DR1, but embodiments of the present disclosure are not limited thereto. The first body part 821 and the second body part 822 may be connected to each other by one or more connection parts.

Referring to FIG. 8, in the plan view, the stylus pen driving electrode S-Tx may be positioned to overlap with the body part 810 of the touch driving electrode Tx and the body parts 821 to 826 of the touch sensing electrode Rx in the third direction DR3.

In the plan view, the first bridge BRD1 and the second bridge BRD2 may be positioned to overlap in the third direction DR3.

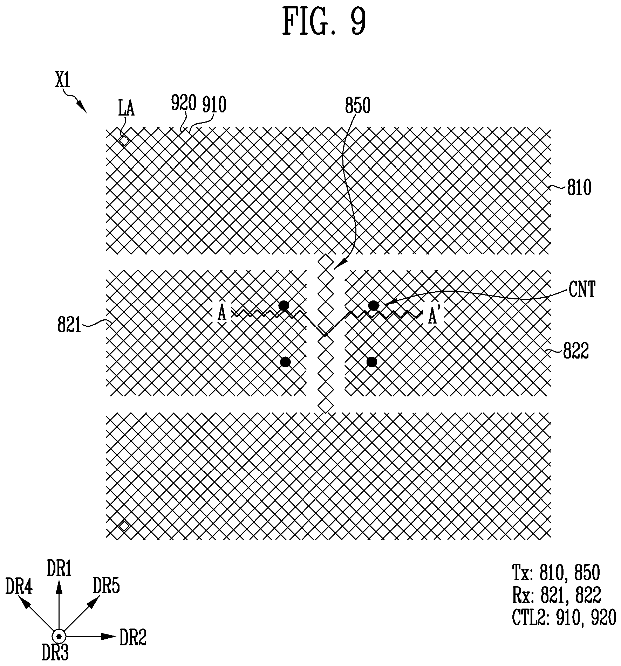

FIG. 9 is a plan view illustrating the second conductive pattern CTL2 of an area X1 of FIG. 8.

The second conductive pattern CTL2 may include a first electrode 910 extending in a fourth direction DR4 and a second electrode 920 extending in a fifth direction DR5. The fourth direction DR4 and the fifth direction DR5 may be intersecting directions. For example, the fourth direction DR4 and the fifth direction DR5 may be perpendicular to each other. Each of the fourth direction DR4 and fifth direction DR5 may be perpendicular to the third direction DR3.

In an embodiment, the fourth direction DR4 and the fifth direction DR5 each may differ from the first direction DR1 and the second direction DR2. For example, the angle that the fifth direction DR5 makes with each of the first direction DR1 and the second direction DR2 may be about 45°. In the above embodiment, the light emitting areas LA are arranged in a diamond shape overall in the plan view, and in this case, the pixels PX (see FIG. 6) may be arranged in a pentile (PENTILE^{®}) shape overall. However, embodiments of the present disclosure are not limited thereto. For example, when the pixels PX are arranged in an RGB type such that they are arranged side by side in the first direction DR1 and the second direction DR2, the fourth direction DR4 may be the same as the first direction DR1 and the fifth direction DR5 may be the same as the second direction DR2.

The second conductive pattern CTL2 may surround the light emitting area LA in the plan view. Referring to FIG. 9, the light emitting area LA may be positioned in an area surrounded by the first electrode 910 and the second electrode 920. By this, the first electrode 910 and the second electrode 920 are not positioned in the area where light is emitted, so that visibility may be improved.

Within the area indicated as X1, the body part 810 and the connection part 850 of the touch driving electrode Tx may be positioned. The first body part 821 and the second body part 822 of the touch sensing electrode Rx may be positioned spaced apart from each other in the second direction DR2 with the connection part 850 interposed therebetween.

The contact hole CNT may be positioned in the first body part 821 and the second body part 822 of the touch sensing electrode Rx.

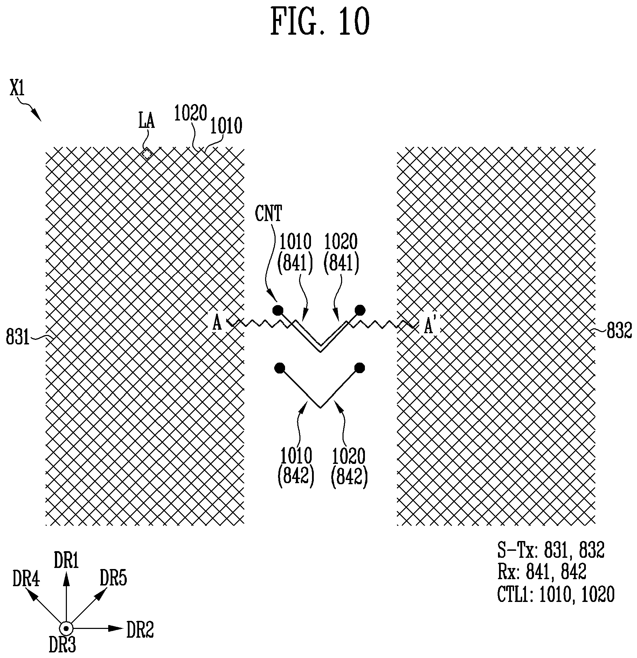

FIG. 10 is a plan view illustrating the first conductive pattern CTL1 of the area X1 of FIG. 8.

The first conductive pattern CTL1 may include a third electrode 1010 extending in the fourth direction DR4 and a fourth electrode 1020 extending in the fifth direction DR5. The fourth direction DR4 and the fifth direction DR5 may be intersecting directions.

The first conductive pattern CTL1 may surround the light emitting area LA in the plan view. Referring to FIG. 10, the light emitting area LA may be positioned in an area surrounded by the third electrode 1010 and the fourth electrode 1020. By this, the third electrode 1010 and the fourth electrode 1020 are not positioned on the area where light is emitted, so that visibility may be improved.

Within the area indicated as X1, the first body part 831 and the second body part 832 of the stylus pen driving electrode S-Tx may be positioned. The first body part 831 and the second body part 832 may be positioned adjacent to each other in the second direction DR2. The contact hole CNT may be positioned between the first body part 831 and the second body part 832 of the stylus pen driving electrode S-Tx, and the connection parts 841 and 842 of the touch sensing electrode Rx connecting to the contact hole CNT may be positioned.

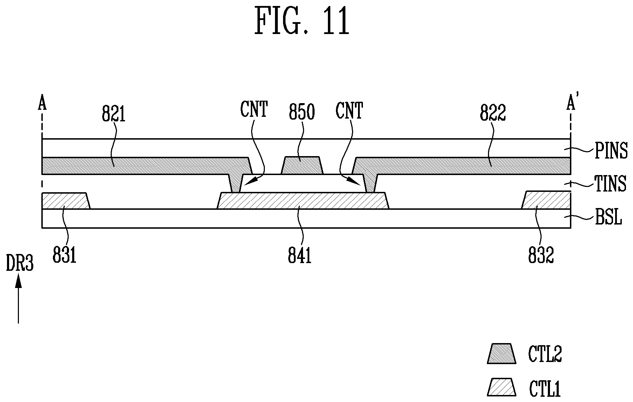

FIG. 11 is a cross-sectional diagram taken along line A-A' in FIGS. 9 and 10.

The first conductive pattern CTL1 may be positioned on the base layer BSL, and the first conductive pattern CTL1 may be covered by the touch insulating layer TINS. On the touch insulating layer TINS, the second conductive pattern CTL2 may be positioned. On the second conductive pattern CTL2, the planarization insulating layer PINS may be positioned. The black matrix BM (see FIG. 7) or the color filter CF (see FIG. 7) described above may be positioned between the second conductive pattern CTL2 and the planarization insulating layer PINS, but are omitted in the following drawings for convenience of explanation.

The first and second body parts 831 and 832 of the stylus pen driving electrode S-Tx (see FIG. 10) and the first connection part 841 of the touch sensing electrode Rx (see FIG. 10) may include the first conductive pattern CTL1.

The first connection part 841 of the touch sensing electrode Rx (see FIG. 10) is connected to the first body part 821 and the second body part 822 of the touch sensing electrode Rx via the contact hole CNT. The connection part 850 of the touch driving electrode Tx (see FIG. 9) may be positioned in an area overlapping the first connection part 841 of the touch sensing electrode Rx in the third direction DR3.

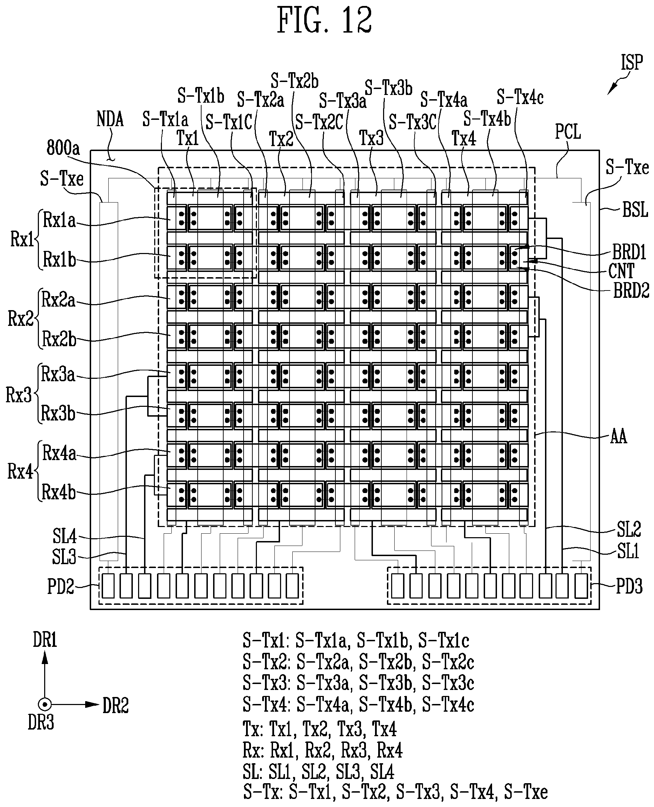

FIG. 12 is a plan view of the input sensing part ISP including the unit cell 800 of FIG. 8.

Referring to FIG. 12, the input sensing part ISP according to embodiments of the present disclosure may include the display area AA and the non-display area NDA positioned on the base layer BSL.

A plurality of second pads PD2 and a plurality of third pads PD3 may be positioned at the lower side of the non-display area NDA of the input sensing part ISP. For example, the plurality of second pads PD2 may be positioned at the lower left side of the input sensing part ISP, and the plurality of third pads PD3 may be positioned at the lower right side of the input sensing part ISP.

Each of the plurality of second pads PD2 and the plurality of third pads PD3 may be connected to a corresponding one of the stylus pen driving electrode S-Tx, the touch driving electrode Tx, and the touch sensing electrode Rx. A signal may be transmitted through the plurality of second pads PD2 and the plurality of third pads PD3.

A plurality of unit cells may be disposed in the display area AA. For example, a unit cell 800a positioned at the upper-left corner of the display area AA may be substantially the same as the unit cell 800 described above with respect to FIG. 8.

In the display area AA, first to fourth stylus pen driving electrodes S-Tx1 to S-Tx4 adjacent to each other in the second direction DR2 may be disposed. Referring to FIG. 12, only four stylus pen driving electrodes S-Tx1, S-Tx2, S-Tx3, S-Tx4 are shown to be arranged within the display area AA, but embodiments of the present disclosure are not limited thereto. Edge stylus pen driving electrodes S-Txe may be disposed in the non-display area NDA. The first to fourth stylus pen driving electrodes S-Tx1 to S-Tx4 and the edge stylus pen driving electrodes S-Txe may be connected to each other through a pen charging line PCL.

Each of the first to fourth stylus pen driving electrodes S-Tx1 to S-Tx4 may include a plurality of body parts. For example, the first stylus pen driving electrode S-Tx1 may include a first body part S-Tx1a, a second body part S-Tx1b, and a third body part S-Tx1c. The first to third body parts S-Tx1a, S-Tx1b, S-Tx1c may correspond to the first to third body parts 831, 832, and 833, respectively, described above with respect to FIG. 8. The body parts of each of the first to fourth stylus pen driving electrodes S-Tx1 to S-Tx4 may be connected to the corresponding second pad PD2 or third pad PD3. The second stylus pen driving electrode S-Tx2 may include a first body part S-Tx2a, a second body part S-Tx2b, and a third body part S-Tx2c. The third stylus pen driving electrode S-Tx3 may include a first body part S-Tx3a, a second body part S-Tx3b, and a third body part S-Tx3c. The fourth stylus pen driving electrode S-Tx4 may include a first body part S-Tx4a, a second body part S-Tx4b, and a third body part S-Tx4c.

The first to fourth stylus pen driving electrodes S-Tx1 to S-Tx4 may be connected to one pen charging line PCL. The pen charging line PCL may be, for example, positioned at the upper side of the first to fourth stylus pen driving electrodes S-Tx1 to S-Tx4. In an embodiment, at least a part of the pen charging line PCL is shown as being positioned within the display area AA, although embodiments of the present disclosure are not limited thereto. For example, the pen charging line PCL may be positioned entirely in the non-display area NDA. The pen charging line PCL may connect between the edge stylus pen driving electrode S-Txe and the first to fourth stylus pen driving electrodes S-Tx1 to S-Tx4.

The edge stylus pen driving electrode S-Txe may be positioned in the non-display area NDA. The edge stylus pen driving electrode S-Txe may be provided in a rectangular shape having a long side extending in the first direction DR1 and a short side extending in the second direction DR2. The edge stylus pen driving electrode S-Txe may have a relatively wide width in the second direction DR2. By this, the resistance of the stylus pen driving electrode S-Tx may be lowered, thereby increasing the size of the induced current flowing in the first to fourth stylus pen driving electrodes S-Tx1 to S-Tx4. This allows the sensing accuracy of the stylus pen to be higher.

The first to fourth touch driving electrodes Tx1 to Tx4 adjacent to each other in the second direction DR2 may be positioned in the display area AA. In the above embodiment, only four touch driving electrodes Tx1, Tx2, Tx3, Tx4 are shown to be located in the display area AA, but embodiments of the present disclosure are not limited thereto. Each of the first to fourth touch driving electrodes Tx1 to Tx4 may extend overall in the first direction DR1.

In an embodiment, the first and second touch driving electrodes Tx1, Tx2 are shown to be connected to the second pads PD2, and the third and fourth touch driving electrodes Tx3, Tx4 are shown to be connected to the third pads PD3. However, embodiments of the present disclosure are not limited thereto. For example, each of the first to fourth touch driving electrodes Tx1 to Tx4 may be connected to a corresponding one of the second pads PD2 or to a corresponding one of the third pads PD3.

The first to fourth touch sensing electrodes Rx1 to Rx4 adjacent to each other in the first direction DR1 may be positioned in the display area AA. In the above embodiment, although it is shown that only four touch sensing electrodes Rx1, Rx2, Rx3, Rx4 are positioned in the display area AA, embodiments of the present disclosure are not limited thereto. Each of the first to fourth touch sensing electrodes Rx1 to Rx4 may extend overall in the second direction DR2.

The first to fourth touch sensing electrodes Rx1 to Rx4 may be connected to sensing lines SL1 to SL4. The first touch sensing electrode Rx1 may be connected to the first sensing line SL1, the second touch sensing electrode Rx2 may be connected to the second sensing line SL2, the third touch sensing electrode Rx3 may be connected to the third sensing line SL3, and the fourth touch sensing electrode Rx4 may be connected to the fourth sensing line SL4.

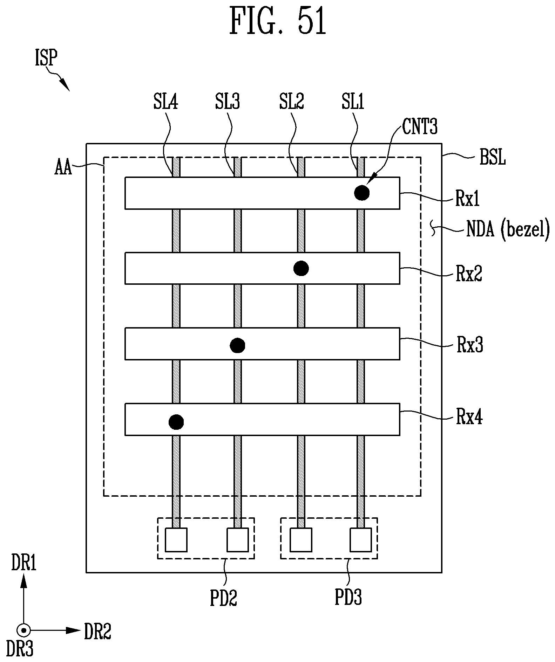

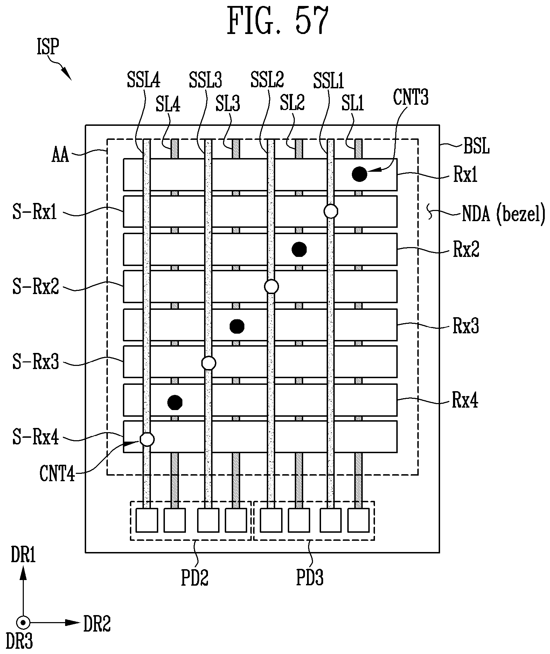

In an embodiment, the first to fourth sensing lines SL1 to SL4 may be positioned in the non-display area NDA. However, embodiments of the present disclosure are not limited to this, and at least one of the first to fourth sensing lines SL1 to SL4 may be positioned within the display area AA. Examples of this may be explained through FIG. 51, FIG. 57, and the like, which will be described later.

Each of the first to fourth touch sensing electrodes Rx1 to Rx4 may include two sub-touch sensing electrodes positioned in different rows. For example, the first touch sensing electrode Rx1 may include a first sub-touch sensing electrode Rx1a positioned in the upper row and a second sub-touch sensing electrode Rx1b positioned in the lower row. As the touch sensing electrode Rx includes the sub-touch sensing electrodes, the touch driving electrode Tx and the touch sensing electrode Rx may be arranged more closely together, so that changes in mutual capacitance between the touch driving electrode Tx and the touch sensing electrode Rx may be sensed more easily. As a result, the accuracy of touch sensing may be increased. The second touch sensing electrode Rx2 may include a first sub-touch sensing electrode Rx2a positioned in an upper row and a second sub-touch sensing electrode Rx2b positioned in a lower row. The third touch sensing electrode Rx3 may include a first sub-touch sensing electrode Rx3a positioned in an upper row and a second sub-touch sensing electrode Rx3b positioned in a lower row. The fourth touch sensing electrode Rx4 may include a first sub-touch sensing electrode Rx4a positioned in an upper row and a second sub-touch sensing electrode Rx4b positioned in a lower row.

In an embodiment, the first and second sensing lines SL1, SL2 are shown to be connected to the third pads PD3, and the third and fourth sensing lines SL3, SL4 are shown to be connected to the second pads PD2. However, embodiments of the present disclosure are not limited thereto. For example, each of the first to fourth sensing lines SL1 to SL4 may be connected to a corresponding one of the second pads PD2 or to a corresponding one of the third pads PD3.

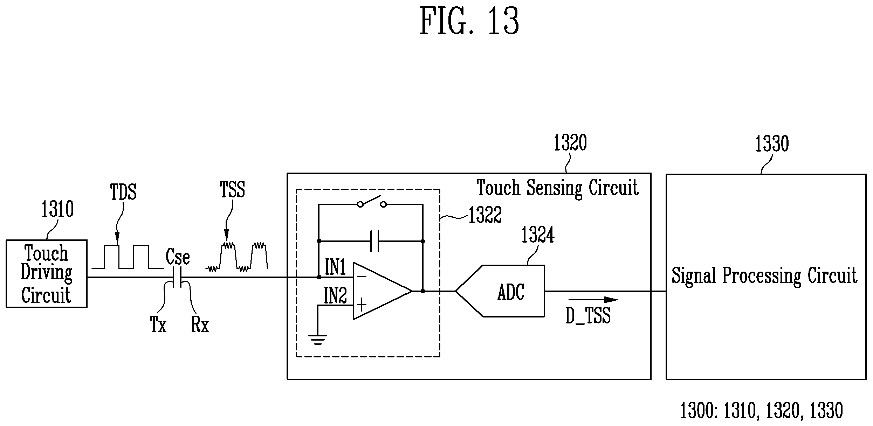

FIG. 13 is a diagram for illustrating a touch sensing process according to embodiments of the present disclosure.

A touch circuit 1300 may include a touch driving circuit 1310, a touch sensing circuit 1320, and a signal processing circuit 1330.

The touch driving circuit 1310 may generate a touch driving signal TDS. The touch driving signal TDS may be implemented as a square wave, but according to embodiments, the touch driving signal TDS may be implemented as a sine wave. The touch driving signal TDS may be input to the touch driving electrode Tx.

A capacitance Cse is formed by the touch driving electrode Tx and the touch sensing electrode Rx. By the touch driving signal TDS supplied to the touch driving electrode Tx, a touch sensing signal TSS corresponding to the touch driving signal TDS is output from the touch sensing electrode Rx. The touch sensing signal TSS may be input into the touch sensing circuit 1320. The touch sensing circuit 1320 may amplify, convert, and signal process the touch sensing signal TSS input from the touch sensing electrode Rx. The touch sensing circuit 1320 may detect whether a touch is input or touch coordinates based on the result of the signal processing.

The touch sensing circuit 1320 may include a signal receiver 1322 and an analog-to-digital converter (ADC) 1324.

The signal receiver 1322 may receive the touch sensing signal TSS from the touch sensing electrode Rx. The signal receiver 1322 may amplify and output the touch sensing signal TSS. For example, the signal receiver 1322 may be implemented as an analog front end (AFE) which includes an operational amplifier (OP-amp). According to embodiments, a first input terminal IN1 of the signal receiver 1322 (e.g., an inverting input terminal of the OP-amp) may be electrically connected to the touch sensing electrode Rx. A second input terminal IN2 of the signal receiver 1322 (e.g., a non-inverting input terminal of the OP-amp) may be electrically connected to the ground terminal. A ground voltage may be input to the second input terminal IN2 of the signal receiver 1322.

The analog-to-digital converter 1324 may convert an analog signal input from the signal receiver 1322 into a digital signal. According to embodiments, the analog-to-digital converter 1324 may be provided in a number equal to the number of the touch sensing electrodes Rx so as to correspond 1:1 to each sensing channel corresponding to the touch sensing electrode Rx. According to embodiments, the analog-to-digital converter 1324 may be configured so that a plurality of touch sensing electrodes Rx share one analog-to-digital converter 1324. In this case, a switching circuit (e.g., a 1:N multiplexer) may be provided between the signal receiver 1322 and the analog-to-digital converter 1324.

The signal processing circuit 1330 may perform signal processing on a digital signal D_TSS converted by the analog-to-digital converter 1324 and detect whether a touch is input or touch coordinates based on the signal processing result. For example, the signal processing circuit 1330 may comprehensively analyze a signal (e.g., an amplified and converted touch sensing signal TSS) input from the plurality of touch sensing electrodes Rx via the signal receiver 1322 and the analog-to-digital converter 1324 to detect whether a touch input has occurred and its location. According to embodiments, the signal processing circuit 1330 may be implemented as a microprocessor unit (MPU). However, the configuration of the signal processing circuit 1330 is not limited thereto. As another example, the signal processing circuit 1330 may be implemented as a microcontroller unit (MCU).

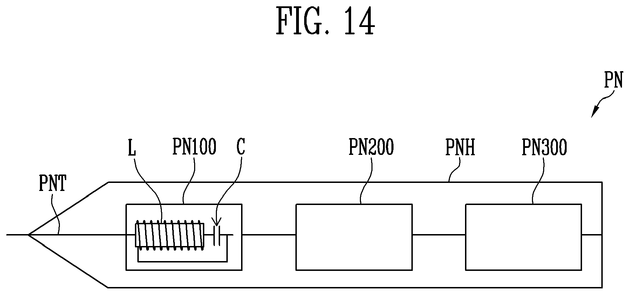

FIG. 14 illustrates an embodiment of the stylus pen PN according to embodiments of the present disclosure.

Referring to FIG. 14, the stylus pen PN may include a housing PNH, a pen tip PNT, a resonant circuit PN100, a controller PN200, and a power supply PN300.

The housing PNH may have a pen shape. An accommodating space may be formed inside the housing PNH. The accommodating space defined inside the housing PNH may accommodate the resonant circuit PN100, the controller PN200, and the power supply PN300.

The pen tip PNT may be disposed at an end of the housing PNH. For example, a part of the pen tip PNT may be exposed to the outside of the housing PNH, and the remaining part of the pen tip PNT may be inserted inside the housing PNH.

The resonant circuit PN100 may be configured to generate a signal. The resonant circuit PN100 may include an application-specific integrated circuit or an oscillator. The resonant circuit PN100 may output an alternating current signal of a frequency with a predetermined value.

The resonant circuit PN100 may include an inductor L and a capacitor C connected to the inductor L. An LC resonant circuit may be formed by the inductor L and the capacitor C. The capacitor C may be a variable capacitor with variable capacity. The stylus pen PN may be placed on the display device DD (see FIG. 1), and the capacitor C may be charged during a charging period.

In the resonant circuit PN100, an induced current may be generated from the display device DD (see FIG. 1), and a magnetic field may be generated by resonance caused by the induced current. The magnetic field generated by the resonant circuit PN100 may provide an induced current to the display device DD.

The power supply PN300 may supply power to the controller PN200. The power supply PN300 may include a battery or a high-capacity capacitor. However, this is exemplary and according to an embodiment of the present invention, the power supply PN300 may be omitted.

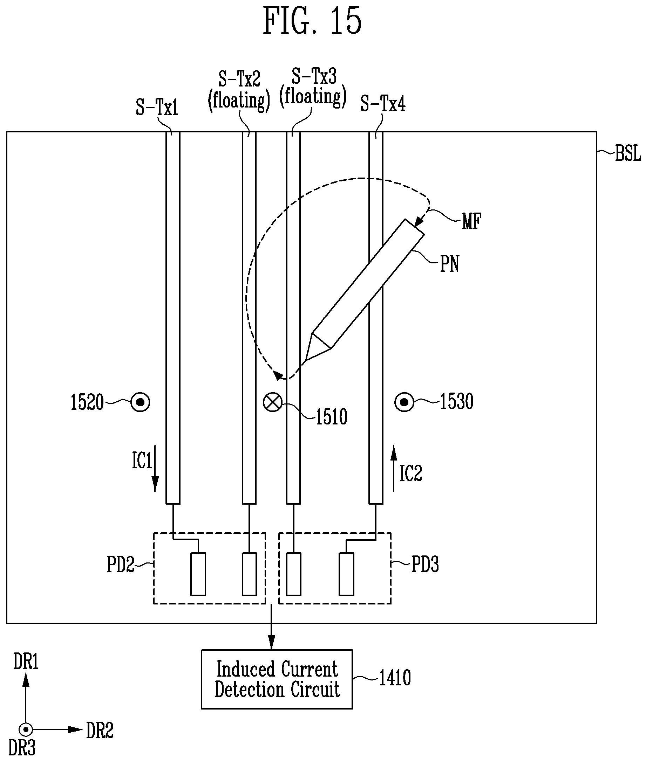

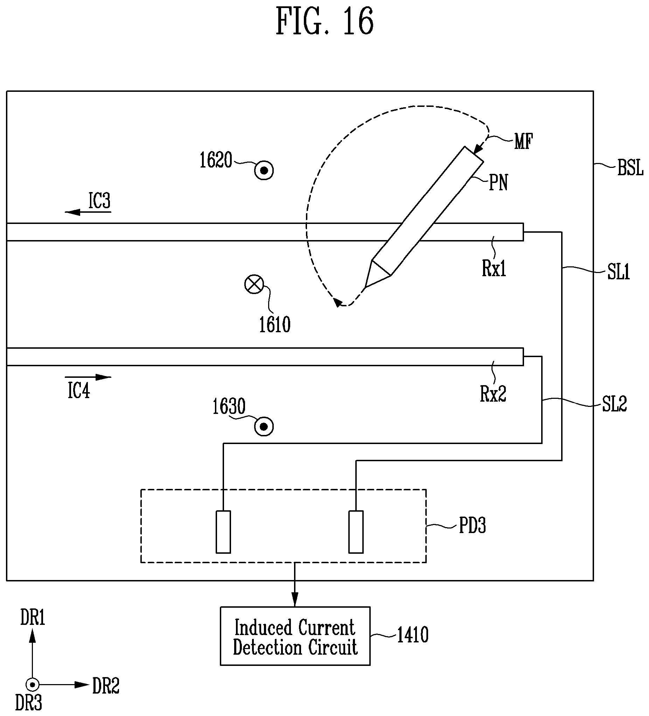

FIGS. 15 and 16 illustrate a stylus pen PN sensing process in embodiments of the present disclosure.

Referring to FIG. 15, a magnetic field MF may be generated from the charged stylus pen PN. The direction of the generated magnetic field MF may be a direction from the pen tip PNT (see FIG. 14) of the stylus pen PN to the other end of the stylus pen PN. In this way, a point 1510 at which the magnetic flux density toward the ground increases and points 1520 and 1530 at which the magnetic flux density away from the ground increases may be defined in the base layer BSL.

By electromagnetic induction, an induced current may flow in a direction which reduces the magnetic flux density in at least two of the first to fourth stylus pen driving electrodes S-Tx1 to S-Tx4. For example, a first induced current IC1 may flow in the downward direction of the base layer BSL through the first stylus pen driving electrode S-Tx1. A second induced current IC2 may flow in the upward direction of the base layer BSL through the fourth stylus pen driving electrode S-Tx4. The second and third stylus pen driving electrodes S-Tx2, S-Tx3 may be in a floating state in which substantially no current flows because the magnitudes of the magnetic field MF formed by the stylus pen PN and the magnetic field formed by the induced currents IC1, IC2 are balanced. For convenience of explanation, electrodes which are in the floating state are not illustrated below, and electrodes through which induced currents substantially flow may be mainly illustrated.

An induced current detection circuit 1410 may be connected to the second pads PD2 and the third pads PD3. The induced current detection circuit 1410 may detect a pad through which an induced current flows and the size of the induced current flowing through the pad. By this, the horizontal coordinate of the stylus pen PN may be calculated. In an embodiment, the induced current detection circuit 1410 may include one or more galvanometers. In an embodiment, the induced current detection circuit 1410 may include one or more ammeters. In an embodiment, the induced current detection circuit 1410 may include an analog-to-digital converter.

Referring to FIG. 16, a point 1610 at which the magnetic flux density toward the ground increases and points 1620 and 1630 at which the magnetic flux density away from the ground increases may be defined in the base layer BSL.

Due to the electromagnetic induction phenomenon, an induced current may flow in the direction of reducing the magnetic flux density in the first touch sensing electrode Rx1 and the second touch sensing electrode Rx2. For example, a third induced current IC3 may flow from the right to the left of the base layer BSL in the first touch sensing electrode Rx1. A fourth induced current IC4 may flow from the left to the right of the base layer BSL in the second touch sensing electrode Rx2.

The induced current detection circuit 1410 may detect a pad through which the induced current flows and the magnitude of the induced current flowing through the pad. By this, the vertical coordinate of the stylus pen PN may be calculated.

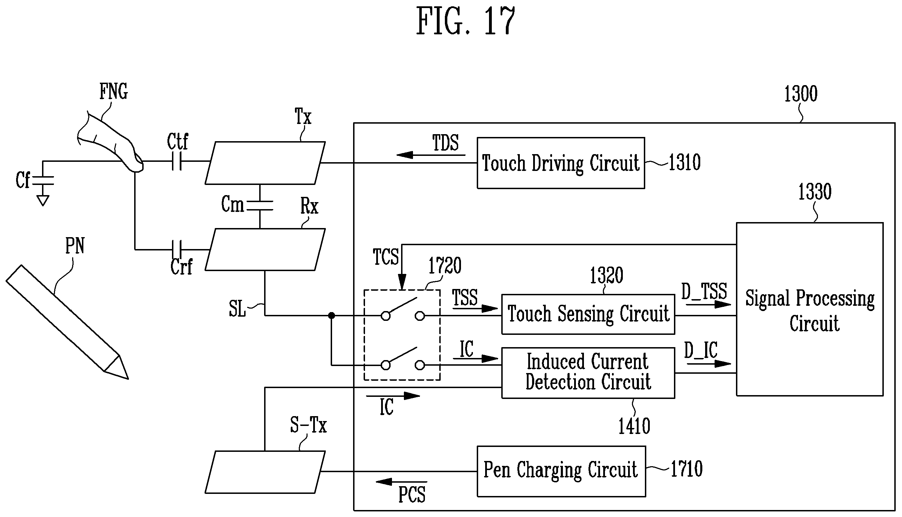

FIG. 17 is a block diagram illustrating overall touch sensing and stylus pen PN sensing processes in embodiments of the present disclosure.

Touch sensing may be divided into a process of sensing the second input represented by a finger FNG and a process of sensing the first input represented by the stylus pen PN.

To sense the second input, the touch driving signal TDS may be input to the touch driving electrode Tx from the touch driving circuit 1310. A mutual capacitance Cm may be formed between the touch driving electrode Tx and the touch sensing electrode Rx. When the finger FNG having a predetermined capacitance Cf approaches the vicinity of the touch driving electrode Tx and the touch sensing electrode Rx, a mutual capacitance may be formed between each of the touch driving electrode Tx and the touch sensing electrode Rx and the finger FNG. For example, a first capacitance Ctf may be formed between the touch driving electrode Tx and the finger FNG, and a second capacitance Crf may be formed between the touch sensing electrode Rx and the finger FNG. By this, the size of the mutual capacitance Cm between the touch driving electrode Tx and the touch sensing electrode Rx may be varied. The touch sensing circuit 1320 may receive the touch sensing signal TSS from the touch sensing electrode Rx through a sensing line SL, and the change in the size of the mutual capacitance Cm may be reflected in the touch sensing signal TSS. The touch sensing circuit 1320 may convert the received touch sensing signal TSS into the corresponding digital signal D_TSS and output it. The signal processing circuit 1330 may receive the digital signal D_TSS and detect whether there is a touch or the position of the touch.

To sense the first input, the pen charging circuit 1710 may write a pen charging signal PCS to the stylus pen driving electrode S-Tx. The stylus pen PN may be charged by an induced current induced by the pen charging signal PCS. When the charged stylus pen PN approaches, an induced current IC may flow through the stylus pen driving electrode S-Tx and the touch sensing electrode Rx. The induced current detection circuit 1410 may generate a digital signal D_IC based on the input induced current IC and may output the generated digital signal D_IC. The signal processing circuit 1330 may sense the stylus pen PN based on the input digital signal D_IC.

In addition, in embodiments of the present disclosure, the touch sensing electrode Rx may be configured to sense each of the first and second inputs. For this purpose, the sensing line SL may be connected with a switching circuit 1720.

The switching circuit 1720 may be controlled in response to a touch control signal TCS. The switching circuit 1720 may electrically connect between the sensing line SL and the touch sensing circuit 1320 or electrically connect between the sensing line SL and the induced current detection circuit 1410 by the touch control signal TCS.

In an embodiment, the touch control signal TCS may be output from the signal processing circuit 1330.

The signal processing circuit 1330 may control the sensing line SL and the touch sensing circuit 1320 to be electrically connected to each other during a period in which the touch driving signal TDS is written to the touch driving electrode Tx.

The signal processing circuit 1330 may output the touch control signal TCS so that the touch sensing electrode Rx and the induced current detection circuit 1410 are electrically connected during a period in which the induced current IC is input from the stylus pen driving electrode S-Tx to the induced current detection circuit 1410.

According to embodiments, the touch control signal TCS may be input from a configuration (e.g., a host, etc.) outside the touch circuit 1300.

Accordingly, touch sensing by the finger FNG and stylus pen PN sensing may be performed according to embodiments of the present disclosure.

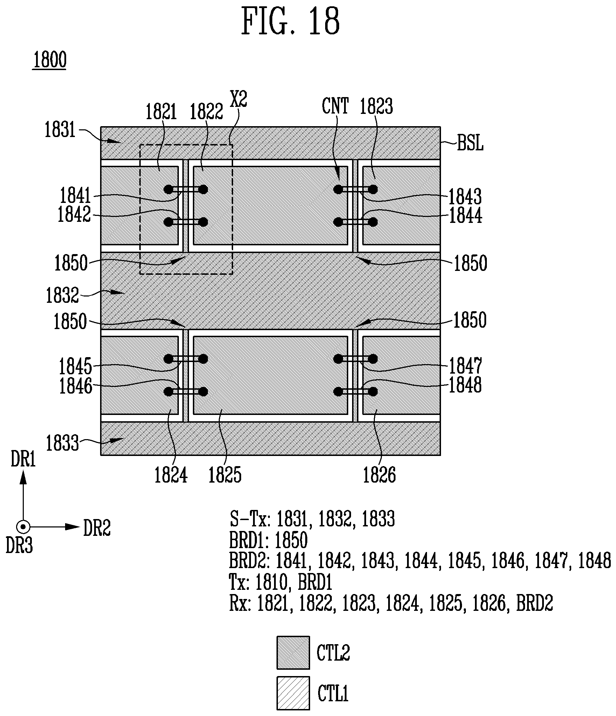

FIG. 18 illustrates an embodiment of a unit cell 1800 according to embodiments of the present disclosure.

Referring to FIG. 18, the unit cell 1800 according to embodiments of the present disclosure may include a stylus pen driving electrode S-Tx, a touch driving electrode Tx, and a touch sensing electrode Rx.

Compared to the unit cell 800 according to the embodiments of FIG. 8, the shapes of the touch driving electrode Tx and the touch sensing electrode Rx may be the same overall or may be arranged similarly. On the other hand, the shape of the stylus pen driving electrode S-Tx may be different.

The stylus pen driving electrode S-Tx is configured to charge the stylus pen PN (see FIG. 1). The stylus pen driving electrode S-Tx may be configured to sense an induced current generated as the charged stylus pen PN approaches.

In an embodiment, the stylus pen driving electrode S-Tx may include a first body part 1831, a second body part 1832, and a third body part 1833. The first body part 1831, the second body part 1832, and the third body part 1833 may be positioned spaced apart from each other in the first direction DR1. Each of the first body part 1831, the second body part 1832, and the third body part 1833 may overall extend in the second direction DR2. The first to third body parts 1831 to 1833 may include the first conductive pattern CTL1.

The first body part 1831 and the third body part 1833 of the stylus pen driving electrode S-Tx may have the same or similar widths in the first direction DR1. In an embodiment, the width of the second body part 1832 in the first direction DR1 may be wider than the width of each of the first body part 1831 and the third body part 1833 in the first direction DR1. However, embodiments of the present disclosure are not limited thereto. For example, the width of the second body part 1832 in the first direction DR1 may be the same as or narrower than the width of each of the first body part 1831 and the third body part 1833 in the first direction DR1.

A touch driving signal may be input to the touch driving electrode Tx to form mutual capacitance with the touch sensing electrode Rx. In an embodiment, the touch driving electrode Tx may be configured to sense an induced current generated as the charged stylus pen PN (see FIG. 1) approaches.

The touch driving electrode Tx may include a body part 1810 and a first bridge BRD1. The first bridge BRD1 may include a connection part 1850. For example, the touch driving electrode Tx may include the body part 1810 which overall extends in the second direction DR2 and the first bridge BRD1 which is connected to the body part 1810 and overall extends in the first direction DR1.

The body part 1810 of the touch driving electrode Tx may include a second conductive pattern CTL2. The first bridge BRD1 may include the second conductive pattern CTL2. The touch driving electrode Tx may be arranged to entirely surround the touch sensing electrode Rx (or body parts 1821 to 1826 of the touch sensing electrode Rx). For example, the body part 1810 of the touch driving electrode Tx may be positioned in the first direction DR1 of the body parts 1821 to 1826 of the touch sensing electrode Rx and surround the long side of the touch sensing electrode Rx. The first bridge BRD1 of the touch driving electrode Tx may be positioned in the second direction DR2 of the body parts 1821 to 1826 of the touch sensing electrode Rx and may surround the short side of the touch sensing electrode Rx.

In an embodiment, the touch driving electrode Tx may overall extend in the first direction DR1. For example, the touch driving electrode Tx may be connected to the touch driving electrode Tx in an adjacent unit cell in the first direction DR1.

The touch sensing electrode Rx may be configured to sense whether there is a touch or the position of the touch. For example, when the finger or the like approaches the vicinity of the touch sensing electrode Rx, the value of mutual capacitance formed between the touch driving electrode Tx and the touch sensing electrode Rx may change, and by sensing the touch sensing electrode Rx, it is possible to detect whether or not there is a touch or the position of the touch. In an embodiment, the touch sensing electrode Rx may be configured to sense the induced current generated as the charged stylus pen PN (see FIG. 1) approaches.

The touch sensing electrode Rx may include a plurality of body parts 1821 to 1826 and a second bridge BRD2. The second bridge BRD2 may include a plurality of connection parts 1841 to 1848. For example, the touch sensing electrode Rx may include the second bridge BRD2 which connects two body parts adjacent to each other in the second direction DR2 among the plurality of body parts 1821 to 1826.

The body parts 1821 to 1826 of the touch sensing electrode Rx may include the second conductive pattern CTL2. The second bridge BRD2 may include the first conductive pattern CTL1. The first body part 1821, second body part 1822, and third body part 1823 of the touch sensing electrode Rx may be disposed adjacent to each other in the second direction DR2. The fourth body part 1824, fifth body part 1825, and sixth body part 1826 of the touch sensing electrode Rx may be disposed adjacent to each other in the second direction DR2. The first to third body parts 1821 to 1823 and the fourth to sixth body parts 1824 to 1826 of the touch sensing electrode Rx may be spaced apart from each other in the first direction DR1 with the body part 1810 of the touch driving electrode Tx interposed therebetween.

The second bridge BRD2 may be connected to the body parts 1821 to 1826 of the touch sensing electrode Rx via a contact hole CNT. The second bridge BRD2 may include a plurality of connection parts 1841 to 1848. For example, the first body part 1821 and the second body part 1822 of the touch sensing electrode Rx may be connected to each other by the first connection part 1841 and the second connection part 1842. In the above embodiment, the first body part 1821 and the second body part 1822 are described as being connected to each other by the two connection parts 1841 and 1842 adjacent to each other in the first direction DR1, but embodiments of the present disclosure are not limited thereto. The first body part 1821 and the second body part 1822 may be connected to each other by one or more connection parts.

Referring to FIG. 18, in the plan view, the stylus pen driving electrode S-Tx may be positioned to overlap with the body part 1810 of the touch driving electrode Tx in a third direction DR3. The stylus pen driving electrode S-Tx may be positioned so as not to overlap with the first bridge BRD1 and the second bridge BRD2. In an embodiment, the stylus pen driving electrode S-Tx may completely overlap with the body part 1810 of the touch driving electrode Tx in the third direction DR3.

In the plan view, the first bridge BRD1 and the second bridge BRD2 may be positioned to overlap in the third direction DR3.

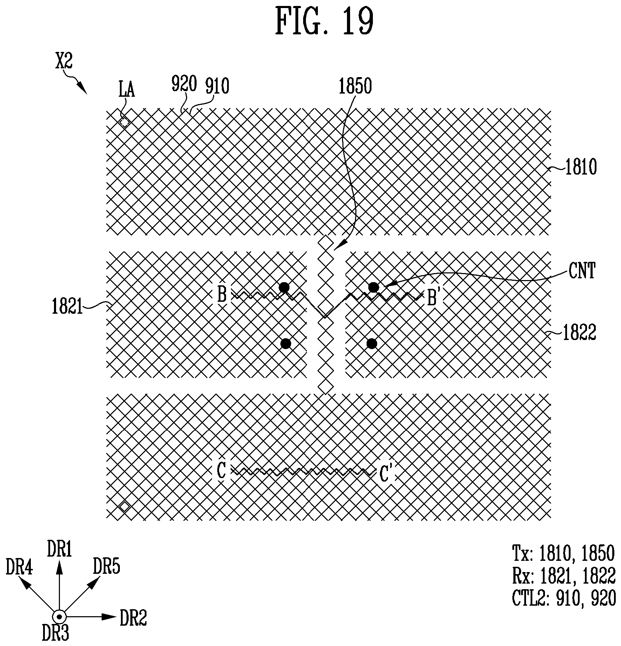

FIG. 19 is a plan view illustrating the second conductive pattern CTL2 of an area X2 of FIG. 18.

The second conductive pattern CTL2 may include the first electrode 910 extending in the fourth direction DR4 and the second electrode 920 extending in the fifth direction DR5.

Within the area indicated as X2, the body part 1810 and the connection part 1850 of the touch driving electrode Tx may be positioned. The first body part 1821 and the second body part 1822 of the touch sensing electrode Rx may be positioned spaced apart from each other in the second direction DR2 with the connection part 1850 interposed therebetween.

A contact hole CNT may be positioned in each of the first body part 1821 and the second body part 1822 of the touch sensing electrode Rx.

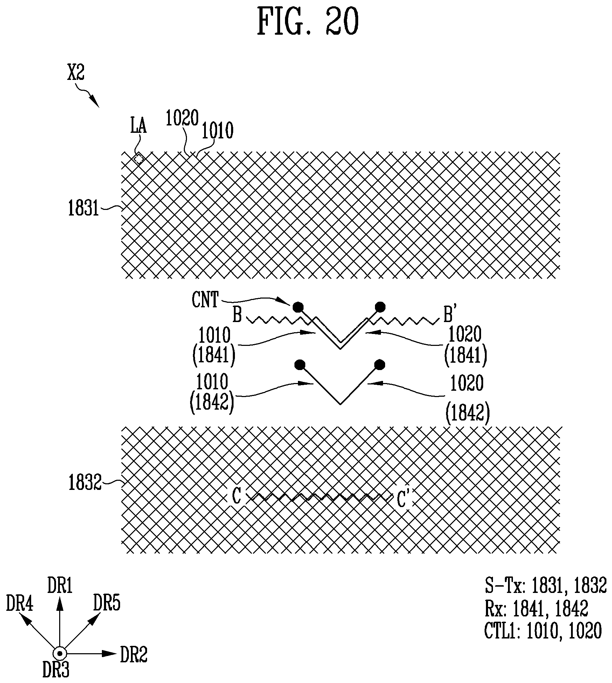

FIG. 20 is a plan view illustrating the first conductive pattern CTL1 of the area X2 of FIG. 18.

The first conductive pattern CTL1 may include the third electrode 1010 extending in the fourth direction DR4 and the fourth electrode 1020 extending in the fifth direction DR5. The fourth direction DR4 and the fifth direction DR5 may be intersecting directions.

Within the area indicated as X2, the first body part 1831 and the second body part 1832 of the stylus pen driving electrode S-Tx may be positioned. The first body part 1831 and the second body part 1832 may be positioned adjacent to each other in the first direction DR1. A contact hole CNT may be positioned between the first body part 1831 and the second body part 1832 of the stylus pen driving electrode S-Tx, and the connection parts 1841 and 1842 of the touch sensing electrode Rx connected to the contact hole CNT may be positioned.

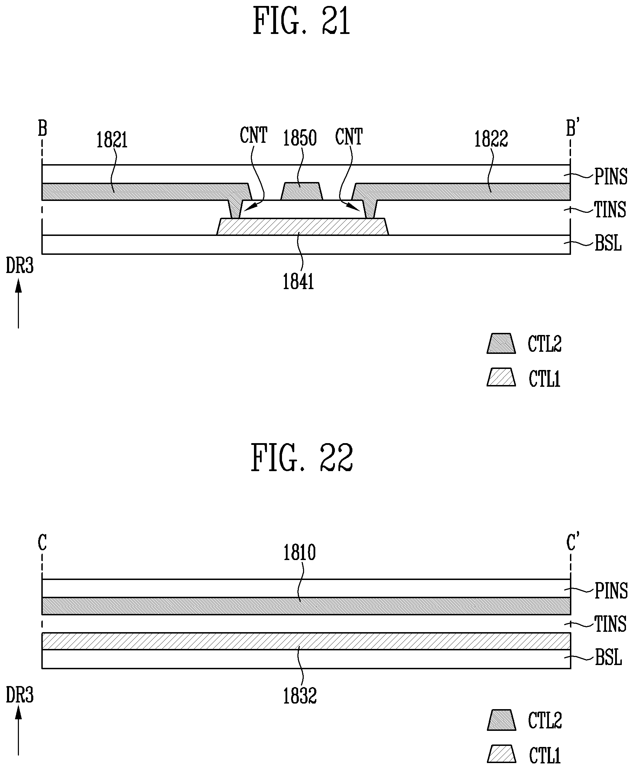

FIG. 21 is a cross-sectional diagram taken along line B-B' in FIGS. 19 and 20.

The first connection part 1841 of the touch sensing electrode Rx;(see FIG. 20) is connected to the first body part 1821 and the second body part 1822 of the touch sensing electrode Rx via the contact hole CNT. The connection part 1850 of the touch driving electrode Tx (see FIG. 19) may be positioned in an area overlapping the first connection part 1841 of the touch sensing electrode Rx in the third direction DR3.

The first connection part 1841 of the touch sensing electrode Rx (see FIG. 19) may include the first conductive pattern CTL1. The first and second body parts 1821 and 1822 of the touch sensing electrode Rx and the body part 1810 of the touch driving electrode Tx (see FIG. 19) may include the second conductive pattern CTL2.

FIG. 22 is a cross-sectional diagram taken along line C-C' in FIGS. 19 and 20.

The body part 1810 of the touch driving electrode Tx (see FIG. 19) may be positioned in an area overlapping with the second body part 1832 of the stylus pen driving electrode S-Tx (see FIG. 20) in the third direction DR3.

The second body part 1832 of the stylus pen driving electrode S-Tx (see FIG. 20) may include the first conductive pattern CTL1. The body part 1810 of the touch driving electrode Tx (see FIG. 19) may include the second conductive pattern CTL2.

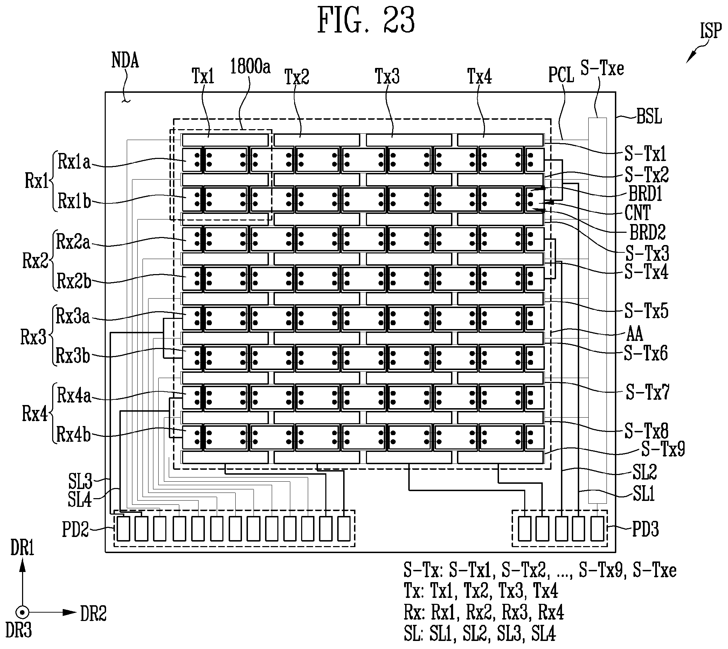

FIG. 23 is a plan view of the input sensing part ISP including a unit cell 1800 of FIG. 18.

A plurality of unit cells may be disposed in the display area AA. For example, the unit cell 1800a positioned at the top-left corner of the display area AA may be substantially the same as the unit cell 1800 described above with respect to FIG. 18.

Compared with the embodiment of FIG. 12, there is a difference in the overall arrangement of the stylus pen driving electrode S-Tx.

The stylus pen driving electrode S-Tx may include first to ninth stylus pen driving electrodes S-Tx1 to S-Tx9 and an edge stylus pen driving electrode S-Txe. In FIG. 23, it is shown that only nine stylus pen driving electrodes S-Tx1, ..., S-Tx9 are positioned in the display area AA, but embodiments of the present disclosure are not limited thereto.

Each of the first to ninth stylus pen driving electrodes S-Tx1 to S-Tx9 may be disposed to overall extend in the second direction DR2. The first to ninth stylus pen driving electrodes S-Tx1 to S-Tx9 may be disposed adjacent to each other in the first direction DR1. In the plan view, the first to ninth stylus pen driving electrodes S-Tx1 to S-Tx9 may be arranged to overall overlap the first to fourth touch driving electrodes Tx1 to Tx4.

The edge stylus pen driving electrode S-Txe may be disposed on one side (e.g., left side or right side) of the input sensing part ISP. The edge stylus pen driving electrode S-Txe may be commonly connected to each of the first to ninth stylus pen driving electrodes S-Tx1 to S-Tx9 through the pen charging line PCL.

In an embodiment, each of the first to ninth stylus pen driving electrodes S-Tx1 to S-Tx9 may be connected to a corresponding one of the plurality of second pads PD2. The edge stylus pen driving electrode S-Txe may be connected to a corresponding one of the plurality of third pads PD3. However, embodiments of the present disclosure are not limited thereto. For example, each of the first to ninth stylus pen driving electrodes S-Tx1 to S-Tx9 may be connected to a corresponding one of the plurality of third pads PD3. The edge stylus pen driving electrode S-Txe may be connected to a corresponding one of the plurality of second pads PD2.

In an embodiment, in the plan view, a wire connecting any one of the first to ninth stylus pen driving electrodes S-Tx1 to S-Tx9 and a corresponding one of the plurality of second pads PD2 may overlap the third sensing line SL3 and the fourth sensing line SL4 in the non-display area NDA. In the above embodiment, at least one insulating layer (e.g., the touch insulating layer TINS described above (see FIGS. 21 and 22)) may be provided between the wires. However, embodiments of the present disclosure are not limited thereto. For example, at least one of the first to fourth sensing lines SL1 to SL4 may be positioned within the display area AA. An embodiment of this may be illustrated by FIG. 51, FIG. 57, and the like, which will be described later.

For a description of the touch driving electrode Tx and the touch sensing electrode Rx, refer to the description with respect to FIG. 12.

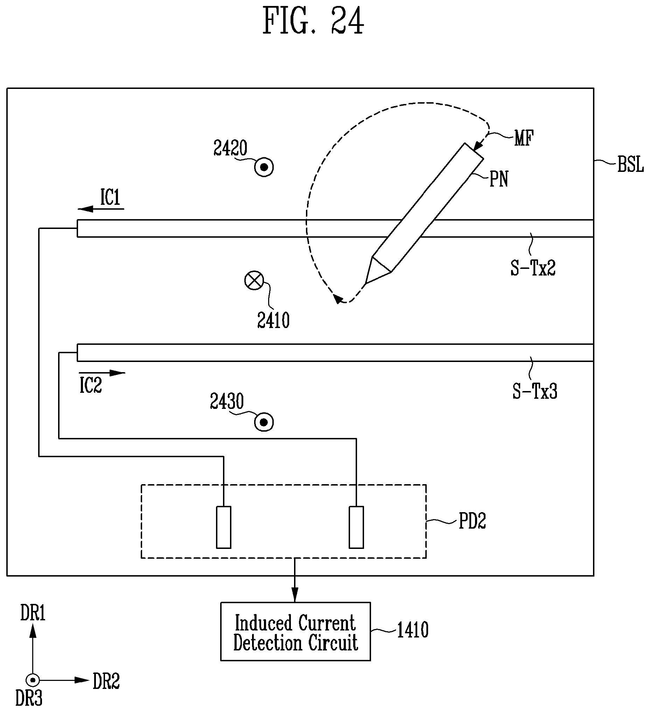

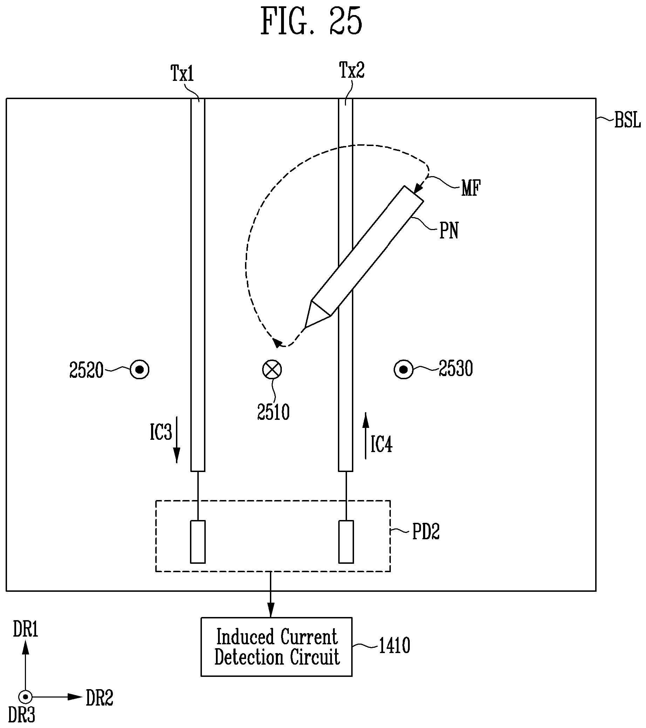

FIGS. 24 and 25 are drawings for illustrating a stylus pen PN sensing process in embodiments of the present disclosure.

Referring to FIG. 24, a magnetic field MF may be generated from the charged stylus pen PN. The direction of the generated magnetic field MF may be a direction from the pen tip PNT (see FIG. 14) of the stylus pen PN to the other end of the stylus pen PN. Thus, in the base layer BSL, a point 2410 at which the magnetic flux density towards the ground increases and points 2420 and 2430 at which the magnetic flux density increases exiting the ground may be defined.

By the phenomenon of electromagnetic induction, an induced current may flow in the direction of reducing the magnetic flux density in the second stylus pen driving electrode S-Tx2 and the third stylus pen driving electrode S-Tx3. For example, the second stylus pen driving electrode S-Tx2 may have a first induced current IC1 flowing from the right side of the base layer BSL to the left. A second induced current IC2 may flow from the left to the right of the base layer BSL in the third stylus pen driving electrode S-Tx3.

The induced current detection circuit 1410 may be connected to the second pads PD2. The induced current detection circuit 1410 may detect a pad through which an induced current flows and the size of the induced current flowing through the pad. By this, the vertical coordinate of the stylus pen PN may be calculated.

Referring to FIG. 25, in the base layer BSL, a point 2510 at which the magnetic flux density toward the ground increases and points 2520 and 2530 at which the magnetic flux density away from the ground increases may be defined.

By the phenomenon of electromagnetic induction, an induced current may flow in a direction which reduces the magnetic flux density through the first touch driving electrode Tx1 and the second touch driving electrode Tx2. For example, a third induced current IC3 may flow from the upper side to the lower side of the base layer BSL in the first touch driving electrode Tx1. A fourth induced current IC4 may flow from the lower side to the upper side of the base layer BSL in the second touch driving electrode Tx2.

The induced current detection circuit 1410 may detect a pad through which an induced current flows and the size of the induced current flowing through the pad. By this, the horizontal coordinate of the stylus pen PN may be calculated.

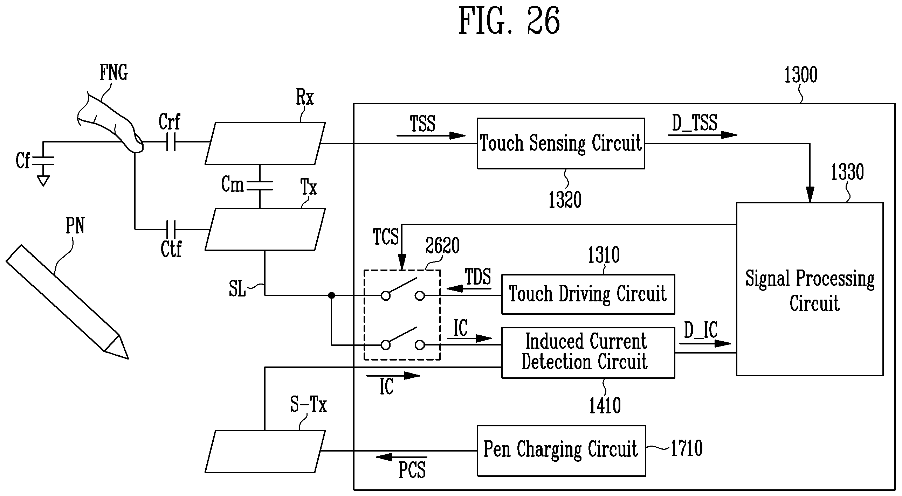

FIG. 26 is a block diagram illustrating overall touch sensing and stylus pen PN sensing processes in embodiments of the present disclosure.

Compared with the embodiment of the foregoing FIG. 17, embodiments of the present disclosure may include a switching circuit 2620 connected to the touch driving electrode Tx.

The switching circuit 2620 may be configured to electrically connect between the touch driving electrode Tx and the touch driving circuit 1310 or electrically connect between the touch driving electrode Tx and the induced current detection circuit 1410, in response to the touch control signal TCS.

The signal processing circuit 1330 may receive a digital signal D_TSS from the touch sensing circuit 1320 during a period for which the touch driving electrode Tx and the touch driving circuit 1310 are electrically connected.

The signal processing circuit 1330 may output the touch control signal TCS so that the touch driving electrode Tx and the induced current detection circuit 1410 are electrically connected during a period for which the induced current detection circuit 1410 receives an induced current IC from the stylus pen driving electrode S-Tx.

By this, touch sensing by the finger FNG and stylus pen PN sensing may be performed.

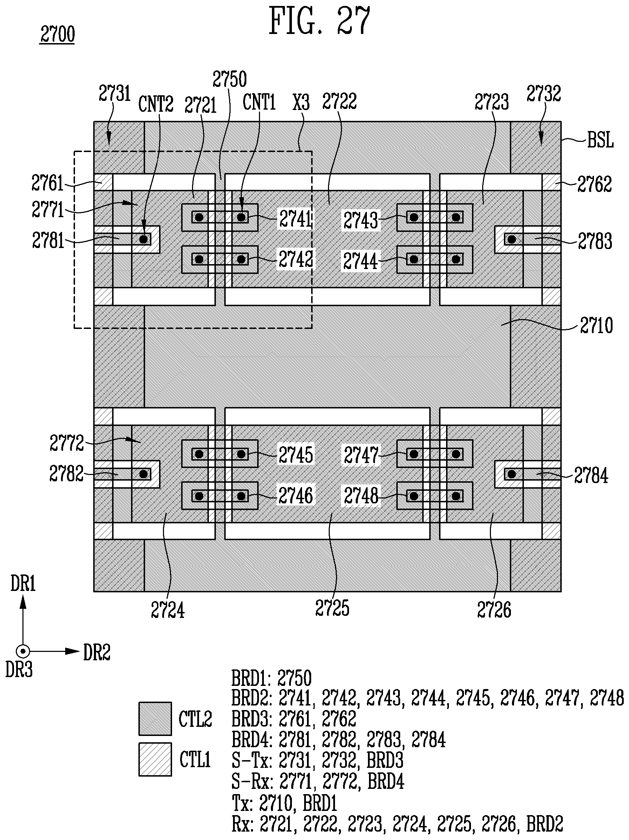

FIG. 27 is an embodiment of a unit cell 2700 according to embodiments of the present disclosure.

Referring to FIG. 27, the unit cell 2700 according to embodiments of the present disclosure may include a stylus pen driving electrode S-Tx, a stylus pen sensing electrode S-Rx, a touch driving electrode Tx, and a touch sensing electrode Rx.

The stylus pen driving electrode S-Tx may include a first body part 2731, a second body part 2732, and a third bridge BRD3.

The first body part 2731 and the second body part 2732 of the stylus pen driving electrode S-Tx may be positioned spaced apart from each other in the second direction DR2. The first and second body parts 2731 and 2732 may include a first conductive pattern CTL1. The first body part 2731 and the second body part 2732 of the stylus pen driving electrode S-Tx may have the same or similar widths in the second direction DR2. However, embodiments of the present disclosure are not limited thereto. For example, the width of the first body part 2731 in the second direction DR2 may be wider or narrower than the width of the second body part 2732 in the second direction DR2.

The third bridge BRD3 may include a first connection part 2761 connecting the first body parts 2731 spaced apart in the first direction DR1 and a second connection part 2762 connecting the second body parts 2732 spaced apart in the first direction DR1.

The stylus pen driving electrode S-Tx may include a first conductive pattern CTL1.

The touch driving electrode Tx may include a body part 2710 and a first bridge BRD1. The first bridge BRD1 may include a connection part 2750. For example, the touch driving electrode Tx may include the body part 2710 overall extending in the second direction DR2, and the first bridge BRD1 connected to the body part 2710 and overall extending in the first direction DR1.

The body part 2710 of the touch driving electrode Tx may include a second conductive pattern CTL2. The first bridge BRD1 may include the second conductive pattern CTL2. The touch driving electrode Tx may be disposed to overall surround the touch sensing electrode Rx (or body parts 2721 to 2726 of the touch sensing electrode Rx). For example, the body part 2710 of the touch driving electrode Tx may be positioned in the first direction DR1 of the body parts 2721 to 2726 of the touch sensing electrode Rx and surround the long side of the touch sensing electrode Rx. The first bridge BRD1 of the touch driving electrode Tx may be positioned in the second direction DR2 of the body parts 2721 to 2726 of the touch sensing electrode Rx and may surround the short side of the touch sensing electrode Rx.

In an embodiment, the touch driving electrode Tx may overall extend in the first direction DR1. For example, the touch driving electrode Tx may be connected to the touch driving electrode Tx of an adjacent unit cell in the first direction DR1.

The touch sensing electrode Rx may include the plurality of body parts 2721 to 2726 and a second bridge BRD2. The second bridge BRD2 may include a plurality of connection parts 2741 to 2748. For example, the touch sensing electrode Rx may include the second bridge BRD2 which connects two body parts adjacent to each other in the second direction DR2 among the plurality of body parts 2721 to 2726.

The body parts 2721 to 2726 of the touch sensing electrode Rx may include the second conductive pattern CTL2. The second bridge BRD2 may include the first conductive pattern CTL1. The first body part 2721, the second body part 2722, and the third body part 2723 of the touch sensing electrode Rx may be disposed adjacent to each other in the second direction DR2. The fourth body part 2724, the fifth body part 2725, and the sixth body part 2726 of the touch sensing electrode Rx may be disposed adjacent to each other in the second direction DR2. The first to third body parts 2721 to 2723 of the touch sensing electrode Rx and the fourth to sixth body parts 2724 to 2726 of the touch sensiting electrode Rx may be spaced apart from each other in the first direction DR1 with the body part 2710 of the touch driving electrode Tx interposed therebetween.

The second bridge BRD2 may be connected to the body parts 2721 to 2726 of the touch sensing electrode Rx via a first contact hole CNT1. The second bridge BRD2 may include the plurality of connection parts 2741 to 2748. For example, the first body part 2721 and the second body part 2722 of the touch sensing electrode Rx may be connected to each other by the first connection part 2741 and the second connection part 2742. In the above embodiment, the first body part 2721 and the second body part 2722 are described as being connected to each other through two connection parts 2741 and 2742 adjacent to each other in the first direction DR1, but embodiments of the present disclosure are not limited thereto. The first body part 2721 and the second body part 2722 may be connected to each other by one or more connection parts.

The stylus pen sensing electrode S-Rx may include a first body part 2771, a second body part 2772, and a fourth bridge BRD4.

The first body part 2771 and the second body part 2772 of the stylus pen sensing electrode S-Rx may be positioned spaced apart from each other in the first direction DR1. The first and second body parts 2771 and 2772 may include the first conductive pattern CTL1. The first body part 2771 and second body part 2772 of the stylus pen sensing electrode S-Rx may have the same or similar widths in the first direction DR1. However, embodiments of the present disclosure are not limited thereto.

The first body part 2771 and the second body part 2772 of the stylus pen sensing electrode S-Rx may surround the second bridge BRD2. For example, an opening may be provided inside the first and second body parts 2771 and 2772 of the stylus pen sensing electrode S-Rx, and the second bridge BRD2 may be positioned within the opening.

In an embodiment, each of the body parts 2771 and 2772 of the stylus pen sensing electrode S-Rx may include a long side overall extending in the second direction DR2 and a short side overall extending in the first direction DR1. In the plan view, the stylus pen sensing electrode S-Rx may overlap with the touch sensing electrode Rx. For example, the width of the stylus pen sensing electrode S-Rx in the first direction DR1 may be the same or similar to the width of the touch sensing electrode Rx in the first direction DR1. In the plan view, the stylus pen sensing electrode S-Rx may overlap with the first bridge BRD1. In the plan view, the stylus pen sensing electrode S-Rx may be exposed around the fourth bridge BRD4.

The fourth bridge BRD4 may be connected to the body parts 2771 and 2772 of the stylus pen sensing electrode S-Rx in a second contact hole CNT2. The fourth bridge BRD4 may be configured to connect the stylus pen sensing electrodes S-Rx of two unit cells adjacent to each other in one direction (e.g., the second direction DR2). The fourth bridge BRD4 may include first to fourth connection parts 2781 to 2784. For example, the first connection part 2781 may be connected to a left end of the first body part 2771 of the stylus pen sensing electrode S-Rx. The third connection part 2783 may be connected to a right end of the first body part 2771. The second connection part 2782 may be connected to a left end of the second body part 2772. The fourth connection part 2784 may be connected to a right end of the second body part 2774. The first to fourth connection parts 2781 to 2784 may overall extend in the second direction DR2.

In the plan view, the fourth bridge BRD4 may be positioned overlapping with the third bridge BRD3. The fourth bridge BRD4 may include the second conductive pattern CTL2. In the plan view, the fourth bridge BRD4 may be surrounded by the body parts 2721 to 2726 of the touch sensing electrode Rx.

Referring to FIG. 27, in the plan view, the stylus pen driving electrode S-Tx may be positioned to overlap with the body part 2710 of the touch driving electrode Tx and the body parts 2721, 2723, 2724, and 2726 of the touch sensing electrode Rx in the third direction DR3.

In the plan view, the first bridge BRD1 and the second bridge BRD2 may be positioned overlapping in the third direction DR3.

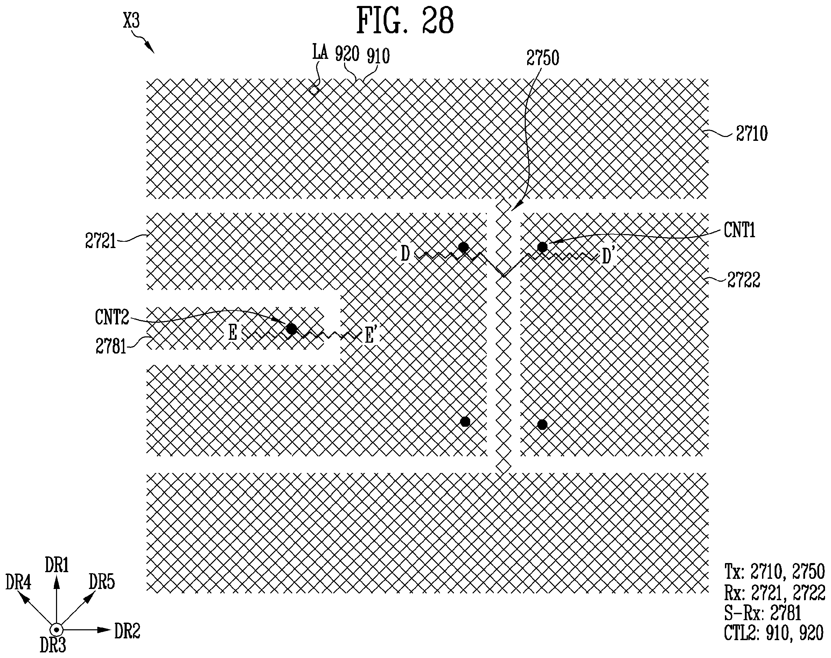

FIG. 28 is a plan view illustrating the second conductive pattern CTL2 of an area X3 of FIG. 27.

The second conductive pattern CTL2 may include a first electrode 910 extending in the fourth direction DR4 and a second electrode 920 extending in the fifth direction DR5.

Within the area indicated as X3, the body part 2710 and the connection part 2750 of the touch driving electrode Tx may be positioned. The first body part 2721 and the second body part 2722 of the touch sensing electrode Rx may be positioned spaced apart from each other in the second direction DR2 with the connection part 2750 interposed therebetween.

At least one first contact hole CNT1 may be positioned in each of the first body part 2721 and the second body part 2722 of the touch sensing electrode Rx.

The first connection part 2781 of the stylus pen sensing electrode S-Rx may be positioned apart from the touch sensing electrode Rx in an area surrounded by the first body part 2721 of the touch sensing electrode Rx.

The second contact hole CNT2 may be positioned in the first connection part 2781 of the stylus pen sensing electrode S-Rx.

The body part 2710 and the connection part 2750 of the touch driving electrode Tx, the first and second body parts 2721 and 2722 of the touch sensing electrode Rx, and the first connection part 2781 of the stylus pen sensing electrode S-Rx may each include the second conductive pattern CTL2.

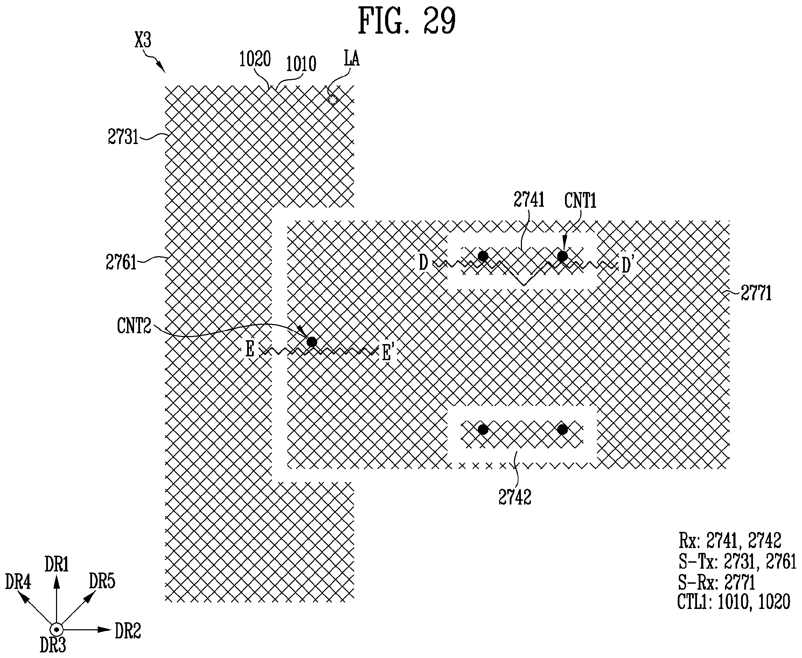

FIG. 29 is a plan view illustrating the first conductive pattern CTL1 of the area X3 of FIG. 27.

The first conductive pattern CTL1 may include the third electrode 1010 extending in the fourth direction DR4 and the fourth electrode 1020 extending in the fifth direction DR5. The fourth direction DR4 and the fifth direction DR5 may be intersecting directions.

Within the area indicated as X3, the first body part 2731 and the first connection part 2761 of the stylus pen driving electrode S-Tx may be positioned.

The first body part 2771 of the stylus pen sensing electrode S-Rx may be positioned spaced apart from the first connection part 2761 of the stylus pen driving electrode S-Tx in the second direction DR2. In the first body part 2771 of the stylus pen sensing electrode S-Rx, the second contact hole CNT2 may be positioned.

The first and second connection parts 2741 and 2742 of the touch sensing electrode Rx may be positioned inside the first body part 2771 of the stylus pen sensing electrode S-Rx. The first and second connection parts 2741 and 2742 may be surrounded by the stylus pen sensing electrode S-Rx. The first and second connection parts 2741 and 2742 of the touch sensing electrode Rx may be spaced apart in the first direction DR1 with the fist body part 2771 of the stylus pen sensing electrode S-Rx interposed therebetween. At least one first contact hole CNT1 may be positioned in each of the first and second connection parts 2741 and 2742 of the touch sensing electrode Rx.

The first and second connection parts 2741 and 2742 of the touch sensing electrode Rx, the first body part 2731 and the first connection part 2761 of the stylus pen driving electrode S-Tx, and the first body part 2771 of the stylus pen sensing electrode S-Rx may include the first conductive pattern CTL1.

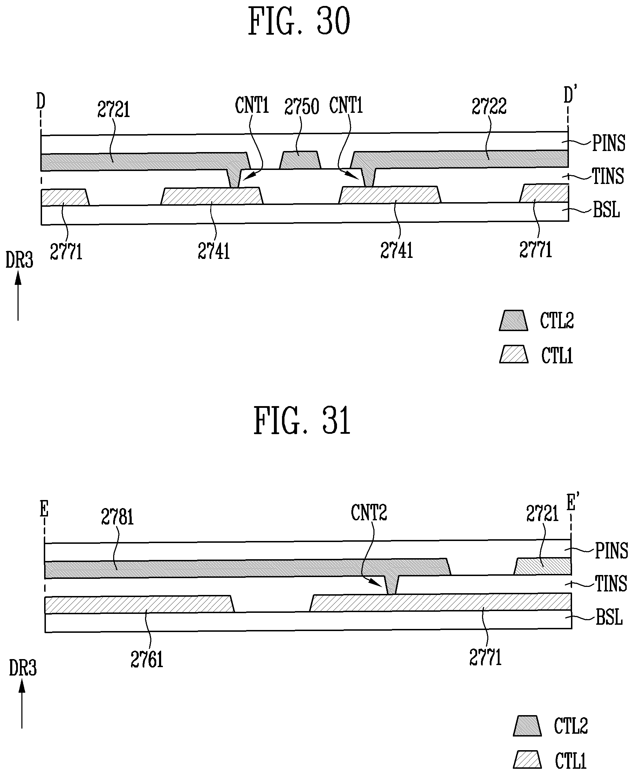

FIG. 30 is a cross-sectional view taken along line D-D' in FIGS. 28 and 29.

The first body part 2771 of the stylus pen sensing electrode S-Rx (see FIG. 29) and the first connection part 2741 of the touch sensing electrode Rx (see FIG. 29) may be positioned to overlap the first and second body parts 2721 and 2722 of the touch sensing electrode Rx (see FIG. 28) in the third direction DR3.

Each of the first and second body parts 2721 and 2722 of the touch sensing electrode Rx (see FIG. 28) may be connected to the first connection part 2741 of the touch sensing electrode Rx in the first contact hole CNT1. Between the first and second body parts 2721 and 2722 of the touch sensing electrode Rx, the connection part 2750 of the touch driving electrode Tx (see FIG. 28) may be positioned.

FIG. 31 is a cross-sectional diagram taken along line E-E' in FIGS. 28 and 29.

The first connection part 2781 of the stylus pen sensing electrode S-Rx (see FIG. 28) may be positioned on the first connection part 2761 of the stylus pen driving electrode S-Tx (see FIG. 29).

The stylus pen sensing electrode S-Rx (see FIG. 28) may be connected to the first body part 2771 of the stylus pen sensing electrode S-Rx in the second contact hole CNT2.

In the cross-sectional view, the first body part 2771 of the stylus pen sensing electrode S-Rx (see FIG. 28) and the first body part 2721 of the touch sensing electrode Rx (see FIG. 28) may overlap in the third direction DR3.

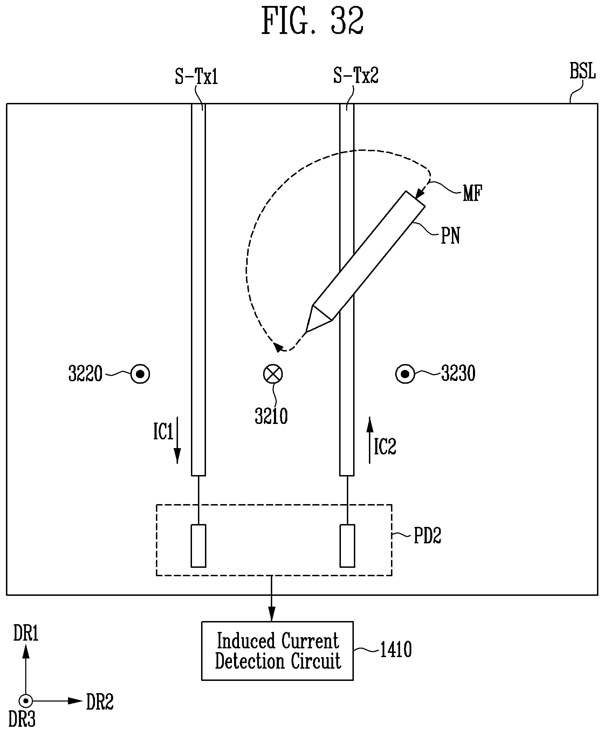

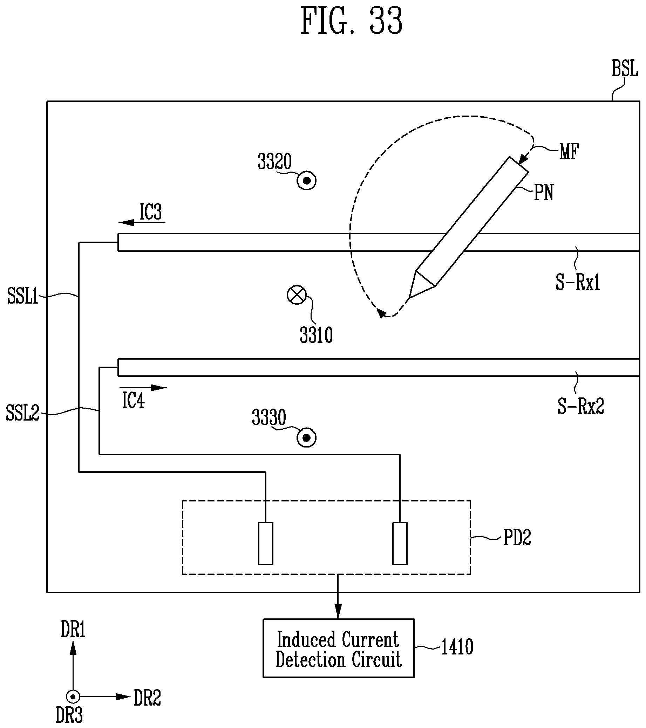

FIGS. 32 and 33 are drawings for illustrating a stylus pen PN sensing process in embodiments of the present disclosure.

Referring to FIG. 32, a magnetic field MF may be generated from the charged stylus pen PN. The direction of the generated magnetic field MF may be a direction from the pen tip PNT (see FIG. 14) of the stylus pen PN to the other end of the stylus pen PN. By this, a point 3210 at which the magnetic flux density toward the ground increases and points 3220 and 3230 at which the magnetic flux density away from the ground increases may be defined in the base layer BSL.

By the phenomenon of electromagnetic induction, an induced current may flow in the direction of decreasing the magnetic flux density in the first stylus pen driving electrode S-Tx1 and the second stylus pen driving electrode S-Tx2. For example, in the first stylus pen driving electrode S-Tx1, the first induced current IC1 may flow in the direction from the upper side to the lower side of the base layer BSL. The second induced current IC2 may flow from the lower side to the upper side of the base layer BSL in the second stylus pen driving electrode S-Tx2.

The induced current detection circuit 1410 may be connected to the second pads PD2. The induced current detection circuit 1410 may detect a pad through which the induced current flows and the magnitude of the induced current flowing through the pad. By this, the horizontal coordinate of the stylus pen PN may be calculated.

Referring to FIG. 33, a point 3310 at which the magnetic flux density toward the ground increases and points 3320 and 3330 at which the magnetic flux density away from the ground increases may be defined in the base layer BSL.

By the phenomenon of electromagnetic induction, in a first stylus pen sensing electrode S-Rx1 and a second stylus pen sensing electrode S-Rx2, an induced current may flow in a direction of reducing the magnetic flux density. For example, in the first stylus pen sensing electrode S-Rx1, the third induced current IC3 may flow from the right to the left of the base layer BSL. The fourth induced current IC4 may flow from the left to the right of the base layer BSL in the second stylus pen sensing electrode S-Rx2.

The induced current detection circuit 1410 may detect a pad through which the induced current flows and the magnitude of the induced current flowing through the pad. By this, the vertical coordinate of the stylus pen PN may be calculated.

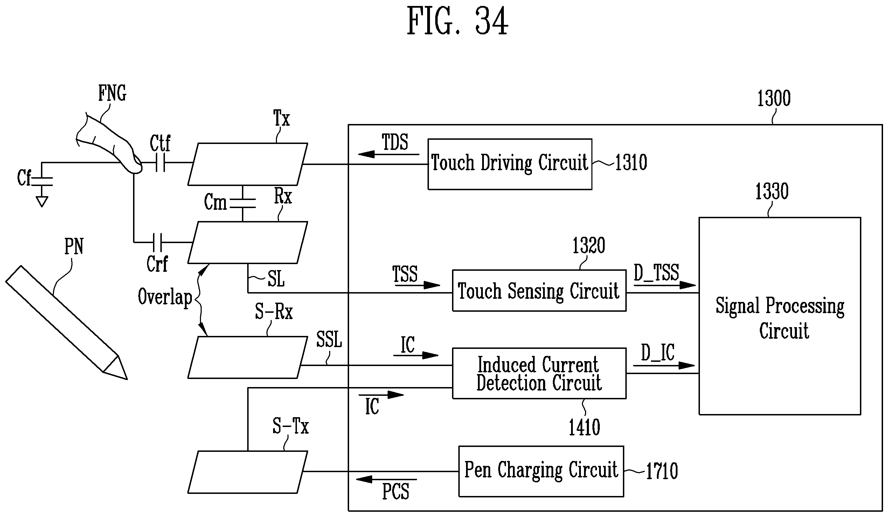

FIG. 34 is a block diagram illustrating overall touch sensing and stylus pen PN sensing processes in embodiments of the present disclosure.

Touch sensing may be divided into a process of sensing the second input represented by the finger FNG, and a process of sensing the first input represented by the stylus pen PN.

The process for sensing the second input is described in detail in FIG. 17, so it is omitted.

To sense the first input, the pen charging circuit 1710 may write the pen charging signal PCS to the stylus pen driving electrode S-Tx. The stylus pen PN may be charged by an induced current induced by the pen charging signal PCS. When the charged stylus pen PN approaches, the induced current ICs may flow in the stylus pen driving electrode S-TX and the stylus pen sensing electrode S-Rx. The induced current detection circuit 1410 may generate the digital signal D_IC based on the input induced current IC and may output the generated digital signal D_IC. The signal processing circuit 1330 may sense the stylus pen PN based on the input digital signal D_IC.

In addition, in embodiments of the present disclosure, the touch sensing electrode Rx may be configured to sense the second input. Compared to the embodiment of FIG. 17, the switching circuit 1720 for selectively connecting between the touch sensing electrode Rx and the touch sensing circuit 1320 and the induced current detection circuit 1410 may be omitted. According to this, since the touch control signal TCS (see FIG. 170 or the like does not need to be supplied, the configuration of the touch circuit 1300 may be further simplified. In addition, according to embodiments of the present disclosure, touch sensing by the finger FNG and sensing of the stylus pen PN may be performed simultaneously within the same period. However, embodiments of the present disclosure are not limited thereto, and touch sensing and sensing of the stylus pen PN may be time-shared and performed during different periods.

On the other hand, according to embodiments of the present disclosure, the touch sensing electrode Rx and the stylus pen sensing electrode S-Rx may be positioned to overlap with each other.

By this, according to embodiments of the present disclosure, touch sensing by the finger FNG and stylus pen PN sensing may be performed.

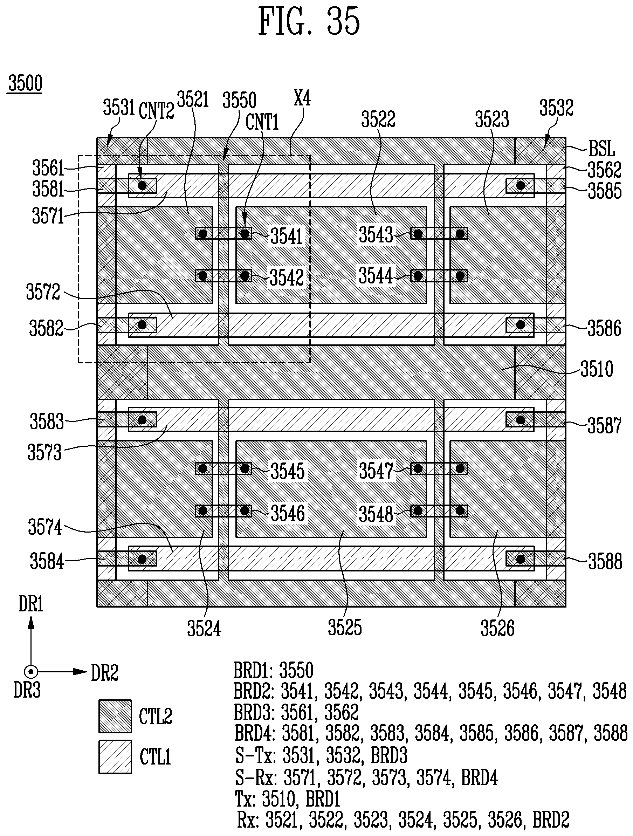

FIG. 35 is an embodiment of a unit cell 3500 according to embodiments of the present disclosure.

Referring to FIG. 35, the unit cell 3500 according to embodiments of the present disclosure may include a stylus pen driving electrode S-Tx, a stylus pen sensing electrode S-Rx, a touch driving electrode Tx, and a touch sensing electrode Rx.

The stylus pen driving electrode S-Tx may include a first body part 3531, a second body part 3532, and a third bridge BRD3.

The first body part 3531 and the second body part 3532 of the stylus pen driving electrode S-Tx may be positioned spaced apart from each other in the second direction DR2. The first and second body parts 3531 and 3532 may include a first conductive pattern CTL1. The first body part 3531 and the second body part 3532 of the stylus pen driving electrode S-Tx may have the same or similar widths in the second direction DR2. However, embodiments of the present disclosure are not limited thereto. For example, the width of the first body part 3531 in the second direction DR2 may be wider or narrower than the width of the second body part 3532 in the second direction DR2.

The third bridge BRD3 may include a first connection part 3561 which connects the first body parts 3531 spaced apart in the first direction DR1 and a second connection part 3562 which connects the second body parts 3532 spaced apart in the first direction DR1.

The stylus pen driving electrode S-Tx may include a first conductive pattern CTL1.

The touch driving electrode Tx may include a body part 3510 and a first bridge BRD1. The first bridge BRD1 may include a connection part 3550. For example, the touch driving electrode Tx may include the body part 3510 overall extending in the second direction DR2 and the first bridge BRD1 connected to the body part 3510 and overall extending in the first direction DR1.

The body part 3510 of the touch driving electrode Tx may include a second conductive pattern CTL2. The first bridge BRD1 may include a second conductive pattern CTL2. The touch driving electrode Tx may be positioned to entirely surround the touch sensing electrode Rx (or body parts 3521 to 3526 of the touch sensing electrode Rx). For example, the body part 3510 of the touch driving electrode Tx may be positioned in the first direction DR1 of the body parts 3521 to 3526 of the touch sensing electrode Rx to surround the long side of the touch sensing electrode Rx. The first bridge BRD1 of the touch driving electrode Tx may be positioned in the second direction DR2 of the body parts 3521 to 3526 of the touch sensing electrode Rx to surround the short side of the touch sensing electrode Rx.

In an embodiment, the touch driving electrode Tx may overall extend in the first direction DR1. For example, the touch driving electrode Tx may be connected to the touch driving electrode Tx in an adjacent unit cell in the first direction DR1.

The touch sensing electrode Rx may include the plurality of body parts 3521 to 3526 and a second bridge BRD2. The second bridge BRD2 may include a plurality of connection parts 3541 to 3548. For example, the touch sensing electrode Rx may include the second bridge BRD2 which connects two body parts adjacent to each other in the second direction DR2 among the plurality of body parts 3521 to 3526.

The body parts 3521 to 3526 of the touch sensing electrode Rx may include the second conductive pattern CTL2. The second bridge BRD2 may include the first conductive pattern CTL1. The first body part 3521, the second body part 3522, and the third body part 3523 of the touch sensing electrode Rx may be disposed adjacent to each other side by side in the second direction DR2. The fourth body part 3524, the fifth body part 3525, and the sixth body part 3526 of the touch sensing electrode Rx may be disposed adjacent to each other side by side in the second direction DR2. The first to third body parts 3521 to 3523 and the fourth to sixth body parts 3524 to 3526 of the touch sensing electrode Rx may be disposed spaced apart from each other in the first direction DR1 with the body part 3510 of the touch driving electrode Tx interposed therebetween.

The second bridge BRD2 may be connected to the body parts 3521 to 3526 of the touch sensing electrode Rx via a first contact hole CNT1. The second bridge BRD2 may include the plurality of connection parts 3541 to 3548. For example, the first body part 3521 and the second body part 3522 of the touch sensing electrode Rx may be connected to each other by the first connection part 3541 and the second connection part 3542. In the above embodiment, the first body part 3521 and the second body part 3522 are described as being connected to each other by the two connection parts 3541 and 3542 adjacent to each other in the first direction DR1, but embodiments of the present disclosure are not limited thereto. The first body part 3521 and the second body part 3522 may be connected to each other by one or more connection parts.

The stylus pen sensing electrode S-Rx may include first to fourth body parts 3571 to 3574 and a fourth bridge BRD4.

The first to fourth body parts 3571 to 3574 of the stylus pen sensing electrode S-Rx may be positioned spaced apart from each other in the first direction DR1. The first to fourth body parts 3571 to 3574 may include the first conductive pattern CTL1. The first to fourth body parts 3571 to 3574 of the stylus pen sensing electrode S-Rx may have the same or similar widths in the first direction DR1. However, embodiments of the present disclosure are not limited thereto.

**In** an embodiment, each of the first to fourth body parts 3571 to 3574 of the stylus pen sensing electrode S-Rx may include a long side overall extending in the second direction DR2 and a short side overall extending in the first direction DR1. In the plan view, each of the first to fourth body parts 3571 to 3574 of the stylus pen sensing electrode S-Rx may overlap with the first bridge BRD1.

The fourth bridge BRD4 may be connected to at least one of the first to fourth body parts 3571 to 3574 of the stylus pen sensing electrode S-Rx in the second contact hole CNT2. The fourth bridge BRD4 may be configured to connect the stylus pen sensing electrodes S-Rx of two unit cells adjacent to each other in one direction (e.g., the second direction DR2). The fourth bridge BRD4 may include first to eighth connection parts 3581 to 3588. For example, the first connection part 3581 may be connected to a left end of the first body part 3571. The fifth connection part 3585 may be connected to a right end of the first body part 3571. The second connection part 3582 may be connected to a left end of the second body part 3572. The sixth connection part 3586 may be connected to a right end of the second body part 3572. The third connection part 3583 may be connected to a left end of the third body part 3573. The seventh connection part 3587 may be connected to a right end of the third body part 3573. The fourth connection part 3584 may be connected to a left end of the fourth body part 3574. The eighth connection part 3588 may be connected to a right end of the fourth body part 3574. The connection parts 3581 to 3588 may overall extend in the second direction DR2.

In the plan view, the fourth bridge BRD4 may be positioned between the body part 3510 of the touch driving electrode Tx and the body parts 3521, 3523, 3524, and 3526 of the touch sensing electrode Rx. The fourth bridge BRD4 may be positioned to overlap with the third bridge BRD3 in the third direction DR3.

Referring to FIG. 35, in the plan view, the stylus pen driving electrode S-Tx may be positioned to overlap with the body part 3510 of the touch driving electrode Tx and the body parts 3521, 3523, 3524, and 3526 of the touch sensing electrode Rx in the third direction DR3.

In the plan view, the first bridge BRD1 and the second bridge BRD2 may be positioned overlapping in the third direction DR3.

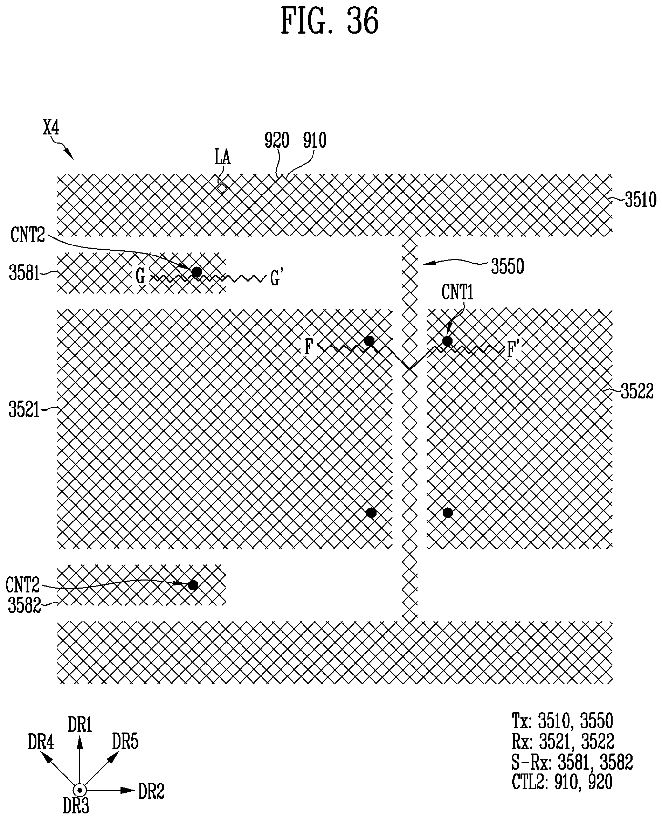

FIG. 36 is a plan view illustrating the second conductive pattern CTL2 of an area X4 of FIG. 35.

The second conductive pattern CTL2 may include a first electrode 910 extending in the fourth direction DR4 and a second electrode 920 extending in the fifth direction DR5.

Within the area indicated as X4, the body part 3510 and the connection part 3550 of the touch driving electrode Tx may be positioned. The first body part 3521 and the second body part 3522 of the touch sensing electrode Rx may be positioned spaced apart from each other in the second direction DR2 with the connection part 3550 interposed therebetween.

At least one first contact hole CNT1 may be positioned in each of the first body part 3521 and the second body part 3522 of the touch sensing electrode Rx.

The first and second connection parts 3581 and 3582 of the stylus pen sensing electrode S-Rx may be positioned spaced apart from the body part 3510 of the touch driving electrode Tx in the first direction DR1. The first and second connection parts 3581 and 3582 of the stylus pen sensing electrode S-Rx may be positioned spaced apart from the first body part 3521 of the touch sensing electrode Rx in the first direction DR1.

At least one second contact hole CNT2 may be positioned in each of the first and second connection parts 3581 and 3582 of the stylus pen sensing electrode S-Rx.

Each of the body part 3510 and the connection part 3550 of the touch driving electrode Tx, the first and second body parts 3521 and 3522 of the touch sensing electrode Rx, and the first and second connection parts 3581 and 3582 of the stylus pen sensing electrode S-Rx may include the second conductive pattern CTL2.

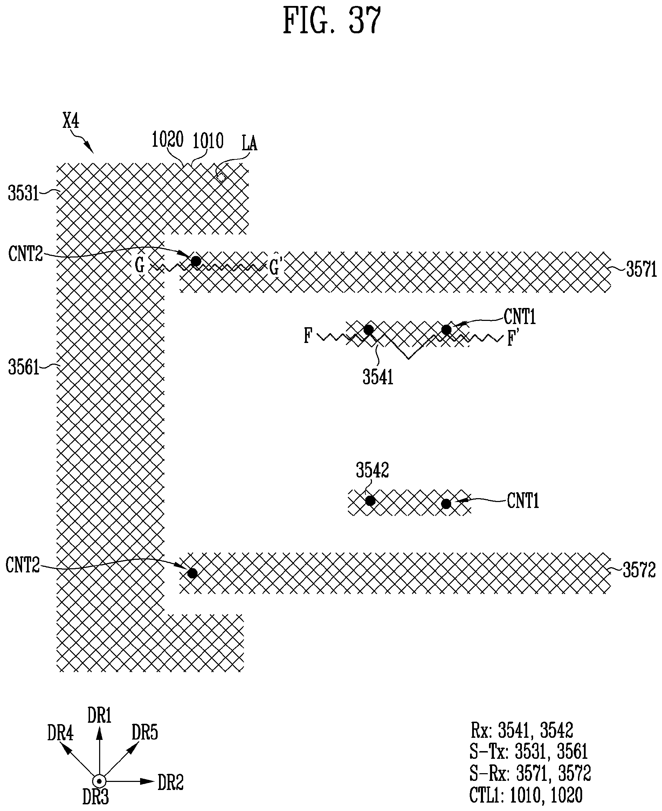

FIG. 37 is a plan view illustrating the first conductive pattern CTL1 of the area X4 of FIG. 35.

The first conductive pattern CTL1 may include a third electrode 1010 extending in the fourth direction DR4 and a fourth electrode 1020 extending in the fifth direction DR5. The fourth direction DR4 and the fifth direction DR5 may be intersecting directions.

Within the area indicated as X4, the first body part 3531 and the first connection part 3561 of the stylus pen driving electrode S-Tx may be positioned.

The first and second body parts 3571 and 3572 of the stylus pen sensing electrode S-Rx may be positioned spaced apart from the first connection part 3561 of the stylus pen driving electrode S-Tx in the second direction DR2. The second contact hole CNT2 may be positioned in each of the first and second body parts 3571 and 3572 of the stylus pen sensing electrode S-Rx.

In the plan view, the first and second connection parts 3541 and 3542 of the touch sensing electrode Rx may be positioned between the first and second body parts 3571 and 3572 of the stylus pen sensing electrode S-Rx. For example, in the plan view, the first connection part 3541 of the touch sensing electrode Rx may be positioned between the first body part 3571 of the stylus pen sensing electrode S-Rx and the second connection part 3542 of the touch sensing electrode Rx. In the plan view, the second connection part 3542 of the touch sensing electrode Rx may be positioned between the second body part 3572 of the stylus pen sensing electrode S-Rx and the first connection part 3541 of the touch sensing electrode Rx.

At least one first contact hole CNT1 may be positioned in each of the first and second connection parts 3541 and 3542 of the touch sensing electrode Rx.

The first and second connection parts 3541 and 3542 of the touch sensing electrode Rx, the first body part 3531 and the first connection part 3561 of the stylus pen driving electrode S-Tx, and the first and second body parts 3571 and 3572 of the stylus pen sensing electrode S-Rx may include the first conductive pattern CTL1.

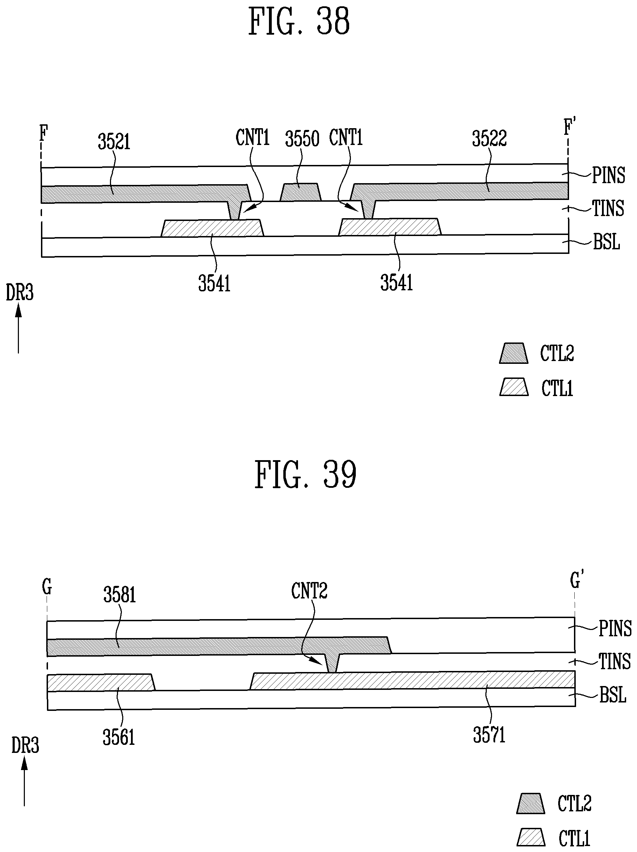

FIG. 38 is a cross-sectional diagram taken along line F-F' in FIGS. 36 and 37.

Each of the first and second body parts 3521 and 3522 of the touch sensing electrode Rx (see FIG. 36) may be connected to the first connection part 3541 of the touch sensing electrode Rx (see FIG. 37) in the first contact hole CNT1. Between the first and second body parts 3521 and 3522 of the touch sensing electrode Rx, the connection part 3550 of the touch driving electrode Tx (see FIG. 36) may be positioned.

FIG. 39 is a cross-sectional diagram taken along line G-G' in FIGS. 36 and 37.

The first connection part 3581 of the stylus pen sensing electrode S-Rx (see FIG. 36) may be positioned on the first connection part 3561 of the stylus pen driving electrode S-Tx (see FIG. 37).

The stylus pen sensing electrode S-Rx (see FIG. 36) may be connected to the first body part 3571 of the stylus pen sensing electrode S-Rx in the second contact hole CNT2.

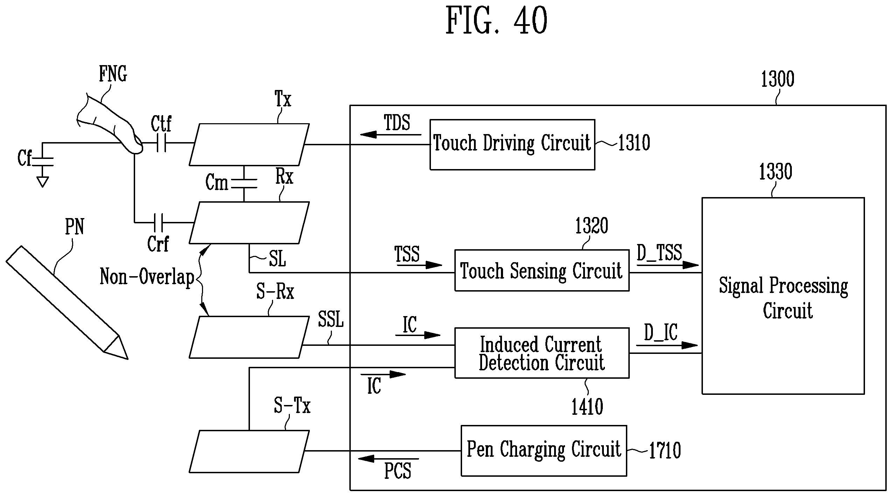

FIG. 40 is a block diagram illustrating overall touch sensing and stylus pen PN sensing processes in embodiments of the present disclosure.

The embodiment of FIG. 40 may be configured similar to the embodiment of FIG. 34 as a whole. Compared to the embodiment of FIG. 34, the embodiment of FIG. 40 may have the touch sensing electrode Rx positioned so as not to overlap with the stylus pen sensing electrode S-Rx.

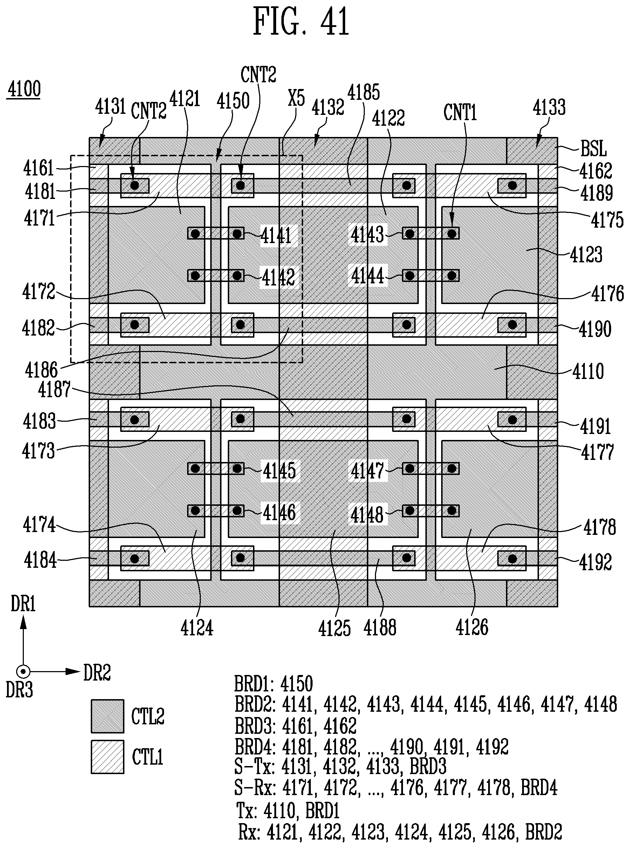

FIG. 41 is an embodiment of a unit cell 4100 according to embodiments of the present disclosure.

Referring to FIG. 41, the unit cell 4100 according to embodiments of the present disclosure may include a stylus pen driving electrode S-Tx, a stylus pen sensing electrode S-Rx, a touch driving electrode Tx, and a touch sensing electrode Rx.

The stylus pen driving electrode S-Tx may include first to third body parts 4131 to 4133 and a third bridge BRD3.

The first to third body parts 4131 to 4133 of the stylus pen driving electrode S-Tx may be positioned spaced apart from each other in the second direction DR2. The first to third body parts 4131 to 4133 may include a first conductive pattern CTL1. The first body part 4131 and the third body part 4133 of the stylus pen driving electrode S-Tx may have the same or similar widths in the second direction DR2. However, embodiments of the present disclosure are not limited thereto. For example, the width of the first body part 4131 in the second direction DR2 may be wider or narrower than the width of the third body part 4133 in the second direction DR2.

In addition, in the plan view, the second body part 4132 may be positioned between the first body part 4131 and the third body part 4133 of the stylus pen driving electrode S-Tx. The second body part 4132 may be disposed to overall extend in the first direction DR1. The second body part 4132 may have a constant width in the second direction DR2 throughout the unit cell 4100. However, embodiments of the present disclosure are not limited thereto, and the second body part 4132 may be disposed in the form of being connected to the third bridge BRD3, like the first and third body parts 4131 and 4133.

In an embodiment, the width of the second body part 4132 in the second direction DR2 may be greater than the width of each of the first and third body parts 4131 and 4133 in the second direction DR2. However, embodiments of the present disclosure are not limited thereto. For example, the width of the second body part 4132 in the second direction DR2 may be equal to or less than the width of each of the first and third body parts 4131 and 4133 in the second direction DR2.

The third bridge BRD3 may include a first connection part 4161 which connects the first body parts 4131 spaced apart in the first direction DR1 and a second connection part 4162 which connects the third body parts 4133 spaced apart in the first direction DR1. The third bridge BRD3 may include a first conductive pattern CTL1.

The touch driving electrode Tx may include a body part 4110 and a first bridge BRD1. The first bridge BRD1 may include a connection part 4150. For example, the touch driving electrode Tx may include the body part 4110 which overall extends in the second direction DR2 and the first bridge BRD1 which is connected to the body part 4110 and overall extends in the first direction DR1.

The body part 4110 of the touch driving electrode Tx may include a second conductive pattern CTL2. The first bridge BRD1 may include the second conductive pattern CTL2. The touch driving electrode Tx may be disposed to entirely surround the touch sensing electrode Rx (or body parts 4121 to 4126 of the touch sensing electrode Rx). For example, the body part 4110 of the touch driving electrode Tx may be positioned in the first direction DR1 of the body parts 4121 to 4126 of the touch sensing electrode Rx to surround the long side of the touch sensing electrode Rx. The first bridge BRD1 of the touch driving electrode Tx may be positioned in the second direction DR2 of the body parts 4121 to 4126 of the touch sensing electrode Rx to surround the short side of the touch sensing electrode Rx.

In an embodiment, the touch driving electrode Tx may overall extend in the first direction DR1. For example, the touch driving electrode Tx may be connected to the touch driving electrode Tx of an adjacent unit cell in the first direction DR1.

The touch sensing electrode Rx may include the plurality of body parts 4121 to 4126 and a second bridge BRD2. The second bridge BRD2 may include a plurality of connection parts 4141 to 4148. For example, the touch sensing electrode Rx may include the second bridge BRD2 which connects two adjacent body parts in the second direction DR2 among the plurality of body parts 4121 to 4126.

The body parts 4121 to 4126 of the touch sensing electrode Rx may include the second conductive pattern CTL2. The second bridge BRD2 may include the first conductive pattern CTL1. The first body part 4121, the second body part 4122, and the third body part 4123 of the touch sensing electrode Rx may be disposed adjacent to each other side by side in the second direction DR2. The fourth body part 4124, the fifth body part 4125, and the sixth body part 4126 of the touch sensing electrode Rx may be disposed adjacent to each other side by side in the second direction DR2. The first to third body parts 4121 to 4123 and the fourth to sixth body parts 4124 to 4126 of the touch sensing electrode Rx may be disposed spaced apart from each other in the first direction DR1 with the body part 4110 of the touch driving electrode Tx interposed therebetween.

The second bridge BRD2 may be connected to the body parts 4121 to 4126 of the touch sensing electrode Rx via a first contact hole CNT1. The second bridge BRD2 may include the plurality of connection parts 4141 to 4148. For example, the first body part 4121 and the second body part 4122 of the touch sensing electrode Rx may be connected to each other by the first connection part 4141 and the second connection part 4142. In the above embodiment, the first body part 4121 and the second body part 4122 are described as being connected to each other by the two connection parts 4141 and 4142 adjacent to each other in the first direction DR1, but embodiments of the present disclosure are not limited thereto. The first body part 4121 and the second body part 4122 may be connected to each other by one or more connection parts.

The stylus pen sensing electrode S-Rx may include first to eighth body parts 4171 to 4178 and a fourth bridge BRD4.

The first to fourth body parts 4171 to 4174 of the stylus pen sensing electrode S-Rx may be positioned spaced apart from each other in the first direction DR1. Each of the fifth to eighth body parts 4175 to 4178 of the stylus pen sensing electrode S-Rx may be positioned spaced apart from each other in the first direction DR1. In the plan view, the first to fourth body parts 4171 to 4174 and the fifth to eighth body parts 4175 to 4178 of the stylus pen sensing electrode S-Rx may be positioned spaced apart from each other in the second direction DR2 with the second body part 4132 of the stylus pen driving electrode S-Tx interposed therebetween.

In the plan view, the first body part 4171 and the second body part 4172 of the stylus pen sensing electrode S-Rx may be positioned spaced apart from each other in the first direction DR1 with the first body part 4121 and the first and second connection parts 4141 and 4142 of the touch sensing electrode Rx interposed therebetween.

In the plan view, the second body part 4172 and the third body part 4173 of the stylus pen sensing electrode S-Rx may be positioned spaced apart from each other in the first direction DR1 with the body part 4110 of the touch driving electrode Tx interposed therebetween. In the plan view, the second body part 4172 and the third body part 4173 of the stylus pen sensing electrode S-Rx may be positioned spaced apart from each other in the first direction DR1 with the first body part 4131 of the stylus pen driving electrode S-Tx interposed therebetween.

In the plan view, the third body part 4173 and the fourth body part 4174 of the stylus pen sensing electrode S-Rx may be positioned spaced apart from each other in the first direction DR1 with the fourth body part 4124 and the fifth and sixth connection parts 4145 and 4146 of the touch sensing electrode Rx interposed therebetween.

The first to eighth body parts 4171 to 4178 of the stylus pen sensing electrode S-Rx may include the first conductive pattern CTL1. The width of each of the first to eighth body parts 4171 to 4178 of the stylus pen sensing electrode S-Rx in the first direction DR1 may be the same or similar to each other. However, embodiments of the present disclosure are not limited thereto.

In an embodiment, each of the first to eighth body parts 4171 to 4178 of the stylus pen sensing electrode S-Rx may include a long side overall extending in the second direction DR2 and a short side overall extending in the first direction DR1. In the plan view, the first to eighth body parts 4171 to 4178 of the stylus pen sensing electrode S-Rx may overlap with the first bridge BRD1.

The fourth bridge BRD4 may be connected to at least one of the first to eighth body parts 4171 to 4178 of the stylus pen sensing electrode S-Rx in a second contact hole CNT2. The fourth bridge BRD4 may be configured to connect the stylus pen sensing electrodes S-Rx of two unit cells adjacent to each other in one direction (e.g., the second direction DR2). The fourth bridge BRD4 may include first to twelfth connection parts 4181 to 4192.

For example, the first connection part 4181 may be connected to a left end of the first body part 4171. The fifth connection part 4185 may be connected to a right end of the first body part 4171. The second connection part 4182 may be connected to a left end of the second body part 4172. The sixth connection part 4186 may be connected to a right end of the second body part 4172. The third connection part 4183 may be connected to a left end of the third body part 4173. The seventh connection part 4187 may be connected to a right end of the third body part 4173. The fourth connection part 4184 may be connected to a left end of the fourth body part 4174. The eighth connection part 4188 may be connected to a right end of the fourth body part 4174.

For example, the fifth connection part 4185 may be connected to a left end of the fifth body part 4175. The ninth connection part 4189 may be connected to a right end of the fifth body part 4175. The sixth connection part 4186 may be connected to a left end of the sixth body part 4176. The tenth connection part 4190 may be connected to a right end of the sixth body part 4176. The seventh connection part 4187 may be connected to a left end of the seventh body part 4177. The eleventh connection part 4191 may be connected to a right end of the seventh body part 4177. The eighth connection part 4188 may be connected to a left end of the eighth body part 4178. The twelfth connection part 4192 may be connected to a right end of the eighth body part 4178.

The first to twelfth connection parts 4181 to 4192 of the stylus pen sensing electrode S-Rx may overall extend in the second direction DR2.

In the plan view, the first to fourth connection parts 4181 to 4184 and the ninth to twelfth connection parts 4189 to 4192 of the stylus pen sensing electrode S-Rx may be positioned to overlap one of the first connection part 4161 and the second connection part 4162 of the stylus pen driving electrode S-Tx in the third direction DR3. In the plan view, the fifth to eighth connection parts 4185 to 4188 of the stylus pen sensing electrode S-Rx may be positioned to overlap the second body part 4132 of the stylus pen driving electrode S-Tx in the third direction DR3.

In the plan view, the stylus pen driving electrode S-Tx may be positioned to overlap with the body part 4110 of the touch driving electrode Tx and the first to sixth body parts 4121 to 4126 of the touch sensing electrode Rx in the third direction DR3.

In the plan view, the first bridge BRD1 and the second bridge BRD2 may be positioned to overlap in the third direction DR3.

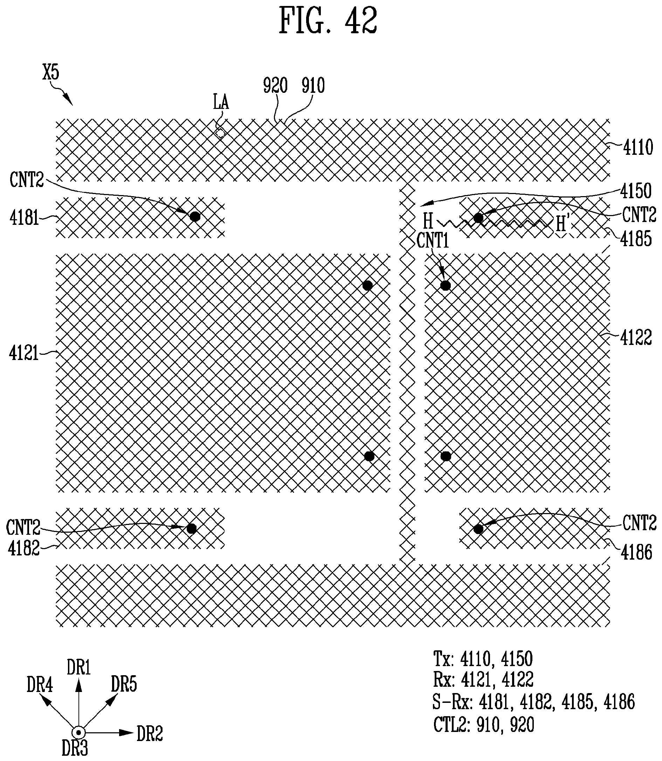

FIG. 42 is a plan view illustrating a second conductive pattern CTL2 of an area X5 of FIG. 41.

The second conductive pattern CTL2 may include the first electrode 910 extending in the fourth direction DR4 and the second electrode 920 extending in the fifth direction DR5.

Within the area indicated as X5, the body part 4110 and the connection part 4150 of the touch driving electrode Tx may be positioned. The first body part 4121 and the second body part 4122 of the touch sensing electrode Rx may be positioned spaced apart from each other in the second direction DR2 with the connection part 4150 interposed therebetween.

At least one first contact hole CNT1 may be positioned in each of the first body part 4121 and the second body part 4122 of the touch sensing electrode Rx.

The first and second connection parts 4181 and 4182 of the stylus pen sensing electrode S-Rx may be positioned spaced apart from the body part 4110 of the touch driving electrode Tx in the first direction DR1. The first and second connection parts 4181 and 4182 of the stylus pen sensing electrode S-Rx may be positioned spaced apart from the first body part 4121 of the touch sensing electrode Rx in the first direction DR1.

The first and fifth connection parts 4181 and 4185 of the stylus pen sensing electrode S-Rx may be positioned spaced apart from the connection part 4150 of the touch driving electrode Tx in the second direction DR2. The second and sixth connection parts 4182 and 4186 of the stylus pen sensing electrode S-Rx may be positioned spaced apart from the connection part 4150 of the touch driving electrode Tx in the second direction DR2.

At least one second contact hole CNT2 may be positioned in each of the first, second, fifth, and sixth connection parts 4181, 4182, 4185, and 4186 of the stylus pen sensing electrode S-Rx.

Each of the body part 4110 and the connection part 4150 of the touch driving electrode Tx, the first and second body parts 4121 and 4122 of the touch sensing electrode Rx, and the first, second, fifth, and sixth connection parts 4181, 4182, 4185, and 4186 of the stylus pen sensing electrode S-Rx may include the second conductive pattern CTL2.

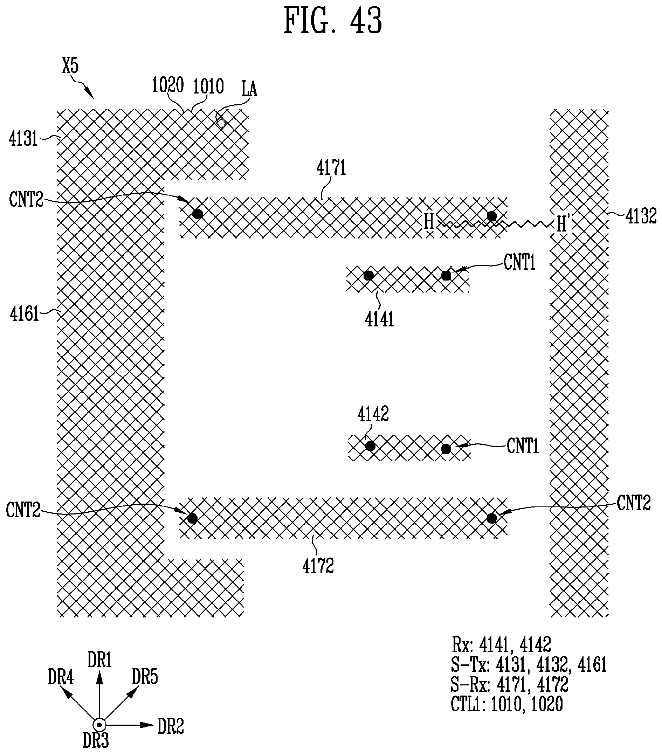

FIG. 43 is a plan view illustrating the first conductive pattern CTL1 of the area X5 of FIG. 41.

The first conductive pattern CTL1 may include the third electrode 1010 extending in the fourth direction DR4 and the fourth electrode 1020 extending in the fifth direction DR5. The fourth direction DR4 and the fifth direction DR5 may be intersecting directions.

Within the area indicated as X5, the first and second body parts 4131 and 4132 and the first connection part 4161 of the stylus pen driving electrode S-Tx may be positioned.

In the plan view, between the first connection part 4161 and the second body part 4132 of the stylus pen driving electrode S-Tx, the first and second body parts 4171 and 4172 of the stylus pen sensing electrode S-Rx may be positioned. The second contact hole CNT2 may be positioned in each of the first and second body parts 4171 and 4172 of the stylus pen sensing electrode S-Rx.

In the plan view, the first and second connection parts 4141 and 4142 of the touch sensing electrode Rx may be positioned between the first and second body parts 4171 and 4172 of the stylus pen sensing electrode S-Rx. For example, in the plan view, the first connection part 4141 of the touch sensing electrode Rx may be positioned between the first body part 4171 of the stylus pen sensing electrode S-Rx and the second connection part 4142 of the touch sensing electrode Rx. In the plan view, the second connection part 4142 of the touch sensing electrode Rx may be positioned between the second body part 4172 of the stylus pen sensing electrode S-Rx and the first connection part 4141 of the touch sensing electrode Rx.

At least one first contact hole CNT1 may be positioned in each of the first and second connection parts 4141 and 4142 of the touch sensing electrode Rx.

The first and second connection parts 4141 and 4142 of the touch sensing electrode Rx, the first and second body parts 4131 and 4132 and the first connection part 4161 of the stylus pen driving electrode S-Tx, and the first and second body parts 4171 and 4172 of the stylus pen sensing electrode S-Rx may include the first conductive pattern CTL1.

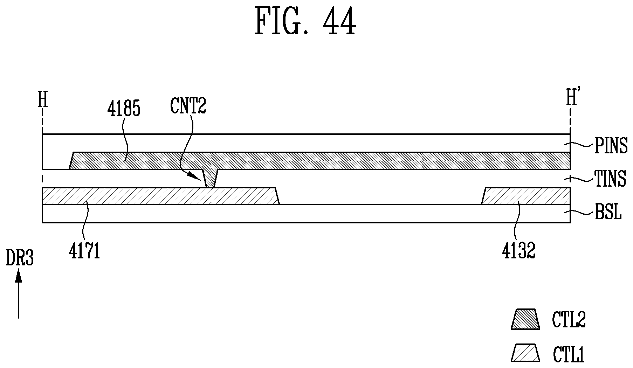

FIG. 44 is a cross sectional diagram taken along line H-H' in FIGS. 42 and 43.

The first body part 4171 of the stylus pen sensing electrode S-Rx (see FIG. 43) may be connected to the fifth connection part 4185 of the stylus pen sensing electrode S-Rx through the second contact hole CNT2.

In the cross-sectional view, the second body part 4132 of the stylus pen driving electrode S-Tx (see FIG. 43) may be positioned to overlap with the fifth connection part 4185 of the stylus pen sensing electrode S-Rx (see FIG. 42) in the third direction DR3.

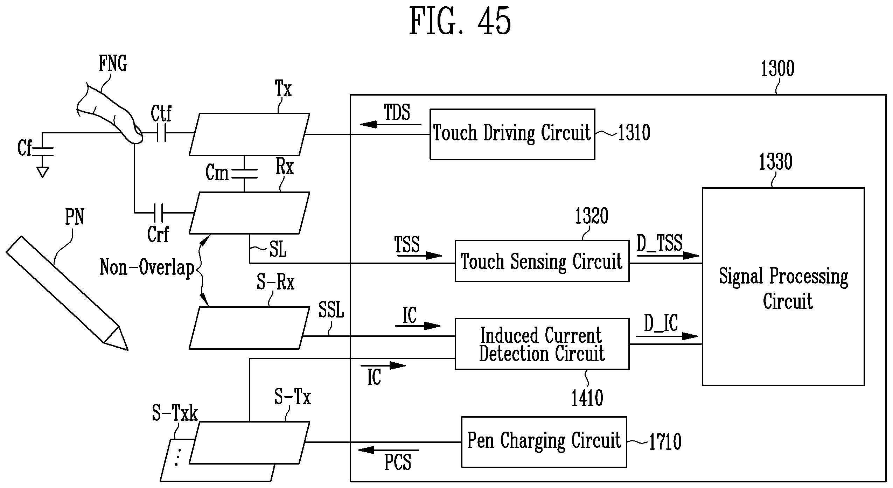

FIG. 45 is a block diagram illustrating overall touch sensing and stylus pen PN sensing processes in embodiments of the present disclosure.

The embodiment of FIG. 45 may be configured overall in a similar manner to the embodiment of FIG. 40. However, compared to the embodiment of FIG. 40, the embodiment of FIG. 45 may have a larger number of stylus pen driving electrodes S-Tx to S-Txk (k is an integer greater than or equal to 2). By this, the accuracy of sensing the stylus pen PN may be further improved.

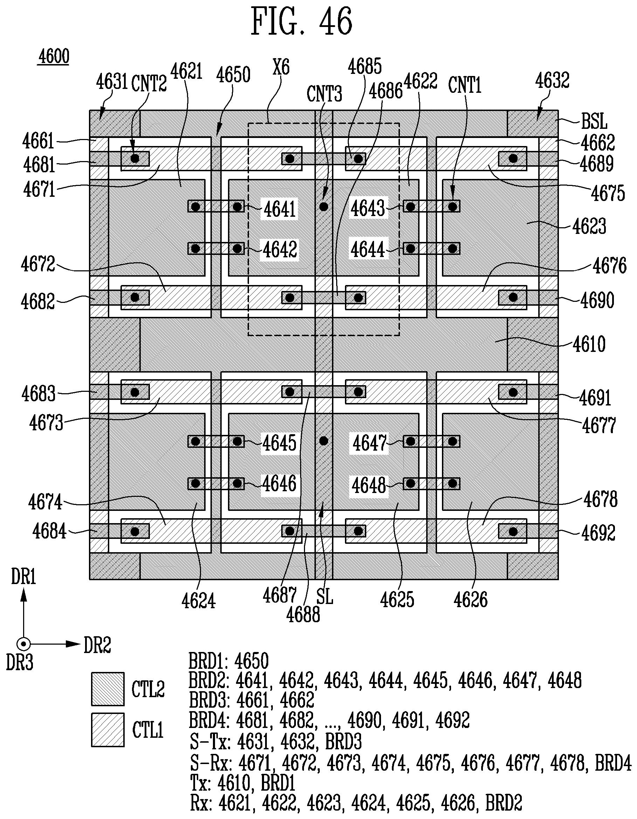

FIG. 46 is an embodiment of a unit cell 4600 according to embodiments of the present disclosure.

Referring to FIG. 46, the unit cell 4600 according to embodiments of the present disclosure may include a stylus pen driving electrode S-Tx, a stylus pen sensing electrode S-Rx, a touch driving electrode Tx, a touch sensing electrode Rx, and a sensing line SL.

The stylus pen driving electrode S-Tx may include first and second body parts 4631 and 4632 and a third bridge BRD3.

The first and second body parts 4631 and 4632 of the stylus pen driving electrode S-Tx may be positioned spaced apart from each other in the second direction DR2 . The first and second body boobs 4631 and 4632 may include a first conductive pattern CTL1. The first body part 4631 and the second body part 4632 of the stylus pen driving electrode S-Tx may have the same or similar widths in the second direction DR2. However, embodiments of the present disclosure are not limited thereto. For example, the width of the first body part 4631 in the second direction DR2 may be wider or narrower than the width of the second body part 4632 in the second direction DR2.

The third bridge BRD3 may include a first connection part 4661 which connects the first body parts 4631 spaced apart in the first direction DR1 and a second connection part 4662 which connects the second body parts 4632 spaced apart in the first direction DR1. The third bridge BRD3 may include the first conductive pattern CTL1.

The touch driving electrode Tx may include a body part 4610 and a first bridge BRD1. The first bridge BRD1 may include a connection part 4650. For example, the touch driving electrode Tx may include the body part 4610 overall extending in the second direction DR2 and the first bridge BRD1 which is connected to the body part 4610 and overall extends in the first direction DR1.

The body part 4610 of the touch driving electrode Tx may include a second conductive pattern CTL2. The first bridge BRD1 may include the second conductive pattern CTL2. The touch driving electrode Tx may be disposed to entirely surround the touch sensing electrode Rx (or body parts 4621 to 4626 of the touch sensing electrode Rx). For example, the body part 4610 of the touch driving electrode Tx may be positioned in the first direction DR1 of the body parts 4621 to 4626 of the touch sensing electrode Rx to surround the long side of the touch sensing electrode Rx. The first bridge BRD1 of the touch driving electrode Tx may be positioned in the second direction DR2 of the body parts 4621 to 4626 of the touch sensing electrode Rx to surround the short side of the touch sensing electrode Rx.

In an embodiment, the touch driving electrode Tx may overall extend in the first direction DR1. For example, the touch driving electrode Tx may be connected to the touch driving electrode Tx in an adjacent unit cell in the first direction DR1.

The touch sensing electrode Rx may include the plurality of body parts 4621 to 4626 and a second bridge BRD2. The second bridge BRD2 may include a plurality of connection parts 4641 to 4648. For example, the touch sensing electrode Rx may include the second bridge BRD2 which connects two adjacent body parts in the second direction DR2 among the plurality of body parts 4621 to 4626.

The body parts 4621 to 4626 of the touch sensing electrode Rx may include the second conductive pattern CTL2. The second bridge BRD2 may include the first conductive pattern CTL1. The first body part 4621, the second body part 4622, and the third body part 4623 of the touch sensing electrode Rx may be positioned adjacent to each other in the second direction DR2. The fourth body part 4624, the fifth body part 4625, and the sixth body part 4626 of the touch sensing electrode Rx may be positioned adjacent to each other in the second direction DR2. The first to third body parts 4621 to 4623 and the fourth to sixth body parts 4624 to 4626 of the touch sensing electrode Rx may be positioned spaced apart from each other in the first direction DR1 with the body part 4610 of the touch driving electrode Tx interposed therebetween.

The second bridge BRD2 may be connected to the body parts 4621 to 4626 of the touch sensing electrode Rx via a first contact hole CNT1. The second bridge BRD2 may include the plurality of connection parts 4641 to 4648. For example, the first body part 4621 and the second body part 4622 of the touch sensing electrode Rx may be connected to each other by the first connection part 4641 and the second connection part 4642. In the above embodiment, the first body part 4621 and the second body part 4622 are described as being connected to each other by the two connection parts 4641 and 4642 adjacent to each other in the first direction DR1, but embodiments of the present disclosure are not limited thereto. The first body part 4621 and the second body part 4622 may be connected to each other by one or more connection parts.

The touch sensing electrode Rx may be connected to a sensing line SL. For example, the second and fifth body parts 4622 and 4625 of the touch sensing electrode Rx may be connected to the sensing line SL via a third contact hole CNT3. The sensing line SL may overall extend in the first direction DR1 within the unit cell 4600. The sensing line SL may include the first conductive pattern CTL1. In the plan view, the sensing line SL may be positioned between the body parts of the stylus pen sensing electrode S-Rx adjacent to each other in the second direction DR2. In the plan view, the sensing line SL may be positioned overlapping with a fourth bridge BRD4 in the third direction DR3. In an embodiment, the width of the sensing line SL in the second direction DR2 may be the same as the width in the second direction DR2 of the first and second connection parts 4661 and 4662 of the stylus pen driving electrode S-Tx, but embodiments of the present disclosure are not limited thereto.

The stylus pen sensing electrode S-Rx may include first to eighth body parts 4671 to 4678 and the fourth bridge BRD4.

The first to fourth body parts 4671 to 4674 of the stylus pen sensing electrode S-Rx may be positioned spaced apart from each other in the first direction DR1. The fifth to eighth body parts 4675 to 4678 of the stylus pen sensing electrode S-Rx may be positioned spaced apart from each other in the first direction DR1. In the plan view, the first to fourth body parts 4671 to 4674 and the fifth to eighth body parts 4675 to 4678 of the stylus pen sensing electrode S-Rx may be positioned spaced apart from each other in the second direction DR2 with the sensing line SL interposed therebetween.

In the plan view, the first body part 4671 and the second body part 4672 of the stylus pen sensing electrode S-Rx may be positioned spaced apart from each other in the first direction DR1 with the first body part 4621 and the first and second connection parts 4641 and 4642 of the touch sensing electrode Rx interposed therebetween.

In the plan view, the second body part 4672 and the third body part 4673 of the stylus pen sensing electrode S-Rx may be positioned spaced apart from each other in the first direction DR1 with the body part 4610 of the touch driving electrode Tx interposed therebetween. In the plan view, the second body part 4672 and the third body part 4673 of the stylus pen sensing electrode S-Rx may be positioned spaced apart from each other in the first direction DR1 with the first body part 4631 of the stylus pen driving electrode S-Tx interposed therebetween.

In the plan view, the third body part 4673 and the fourth body part 4674 of the stylus pen sensing electrode S-Rx may be positioned spaced apart from each other in the first direction DR1 with the fourth body part 4624 and the fifth and sixth connection parts 4645 and 4646 of the touch sensing electrode Rx interposed therebetween.

The first to eighth body parts 4671 to 4678 of the stylus pen sensing electrode S-Rx may include the first conductive pattern CTL1. The width of each of the first to eighth body parts 4671 to 4678 of the stylus pen sensing electrode S-Rx in the first direction DR1 may be the same or similar to each other. However, embodiments of the present disclosure are not limited thereto.

**In** an embodiment, each of the first to eighth body parts 4671 to 4678 of the stylus pen sensing electrode S-Rx may include a long side overall extending in the second direction DR2 and a short side overall extending in the first direction DR1. In the plan view, the first to eighth body parts 4671 to 4678 of the stylus pen sensing electrode S-Rx may overlap with the first bridge BRD1.

The fourth bridge BRD4 may be connected to at least one of the first to eighth body parts 4671 to 4678 of the stylus pen sensing electrode S-Rx in the second contact hole CNT2. The fourth bridge BRD4 may be configured to connect the stylus pen sensing electrodes S-Rx of two unit cells adjacent to each other in one direction (e.g., the second direction DR2). The fourth bridge BRD4 may include first to twelfth connection parts 4681 to 4692.

For example, the first connection part 4681 may be connected to a left end of the first body part 4671. The fifth connection part 4685 may be connected to a right end of the first body part 4671. The second connection part 4682 may be connected to a left end of the second body part 4672. The sixth connection part 4686 may be connected to a right end of the second body part 4672. The third connection part 4683 may be connected to a left end of the third body part 4673. The seventh connection part 4687 may be connected to a right end of the third body part 4673. The fourth connection part 4684 may be connected to a left end of the fourth body part 4674. The eighth connection part 4688 may be connected to a right end of the fourth body part 4674.

For example, the fifth connection part 4685 may be connected to a left end of the fifth body part 4675. The ninth connection part 4689 may be connected to a right end of the fifth body part 4675. The sixth connection part 4686 may be connected to a left end of the sixth body part 4676. The tenth connection part 4690 may be connected to a right end of the sixth body part 4676. The seventh connection part 4687 may be connected to a left end of the seventh body part 4677. The eleventh connection part 4691 may be connected to a right end of the seventh body part 4677. The eighth connection part 4688 may be connected to a left end of the eighth body part 4678. The twelfth connection part 4692 may be connected to a right end of the eighth body part 4678.

The first through twelfth connection parts 4681 to 4692 of the stylus pen sensing electrode S-Rx may overall extend in the second direction DR2.

In the plan view, the first to fourth connection parts 4681 to 4684 and the ninth to twelfth connection parts 4689 to 4692 of the stylus pen sensing electrode S-Rx may be positioned to overlap one of the first connection part 4661 and the second connection part 4662 of the stylus pen driving electrode S-Tx in the third direction DR3. In the plan view, the fifth to eighth connection parts 4685 to 4688 of the stylus pen sensing electrode S-Rx may be positioned overlapping with the sensing line SL in the third direction DR3.

In the plan view, the stylus pen driving electrode S-Tx may be positioned to overlap with the body part 4610 of the touch driving electrode Tx and the body parts 4621, 4623, 4624, and 4626 of the touch sensing electrode Rx in the third direction DR3.

In the plan view, the first bridge BRD1 and the second bridge BRD2 may be positioned overlapping in the third direction DR3.

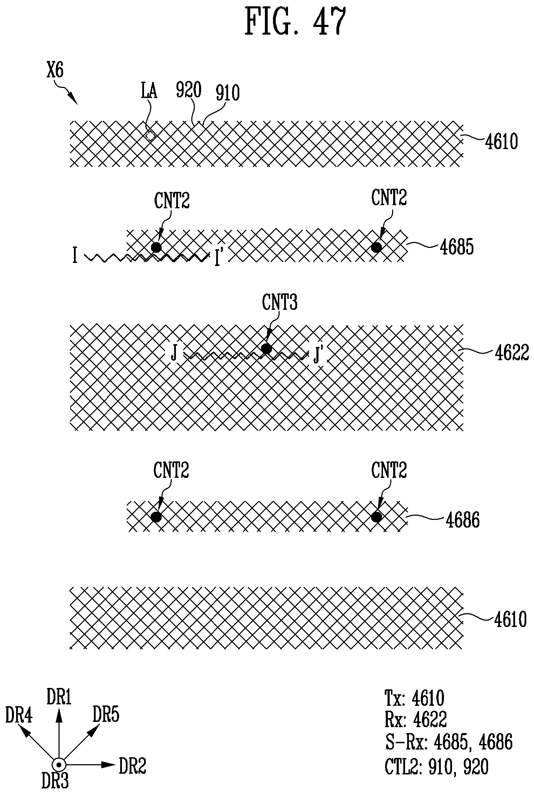

FIG. 47 is a plan view illustrating the second conductive pattern CTL2 of an area X6 of FIG. 46.

The second conductive pattern CTL2 may include the first electrode 910 extending in the fourth direction DR4 and the second electrode 920 extending in the fifth direction DR5.

Within the area indicated as X6, the body parts 4610 of the touch driving electrode Tx may be positioned. The second body part 4622 of the touch sensing electrode Rx may be positioned between the body parts 4610 positioned spaced apart from each other in the first direction DR1.

In the plan view, between the body part 4610 of the touch driving electrode Tx and the second body part 4622 of the touch sensing electrode Rx, the fifth and sixth connection parts 4685 and 4686 of the stylus pen sensing electrode S-Rx may be positioned. For example, in the plan view, the body part 4610 of the touch driving electrode Tx, the fifth connection part 4685 of the stylus pen sensing electrode S-Rx, and the second body part 4622 of the touch sensing electrode Rx may be sequentially arranged spaced apart from each other in the first direction DR1.

At least one second contact hole CNT2 may be positioned in each of the fifth and sixth connection parts 4685 and 4686 of the stylus pen sensing electrode S-Rx.

At least one third contact hole CNT3 may be positioned in the second body part 4622 of the touch sensing electrode Rx.

Each of the body part 4610 of the touch driving electrode Tx, the second body part 4622 of the touch sensing electrode Rx, and the fifth and sixth connection parts 4685 and 4686 of the stylus pen sensing electrode S-Rx may include the second conductive pattern CTL2.

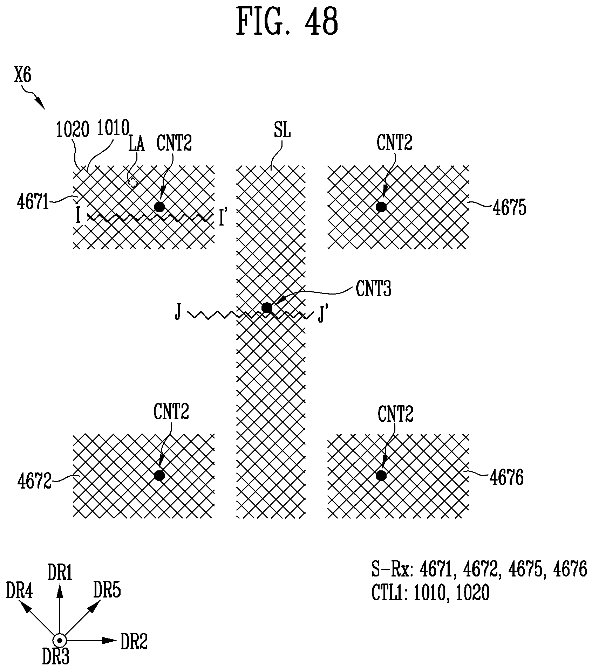

FIG. 48 is a plan view illustrating the first conductive pattern CTL1 of the area X6 of FIG. 46.

The first conductive pattern CTL1 may include the third electrode 1010 extending in the fourth direction DR4 and the fourth electrode 1020 extending in the fifth direction DR5. The fourth direction DR4 and the fifth direction DR5 may be intersecting directions.

Within the area indicated as X6, the first, second, fifth, and sixth body parts 4671, 4672, 4675, and 4676 of the stylus pen sensing electrode S-Rx may be positioned. The second contact hole CNT2 may be positioned in each of the first, second, fifth, and sixth body parts 4671, 4672, 4675, and 4676 of the stylus pen sensing electrode S-Rx.

In the plan view, the sensing line SL may be positioned between the first and fifth body parts 4671 and 4675 of the stylus pen sensing electrode S-Rx. In the plan view, the sensing line SL may be positioned between the second and sixth body parts 4672 and 4676 of the stylus pen sensing electrode S-Rx.

The sensing line SL and the first, second, fifth, and sixth body parts 4671, 4672, 4675, and 4676 of the stylus pen sensing electrode S-Rx may include the first conductive pattern CTL1.

In embodiments of the present disclosure, a light emitting area LA may be provided within the sensing line SL.

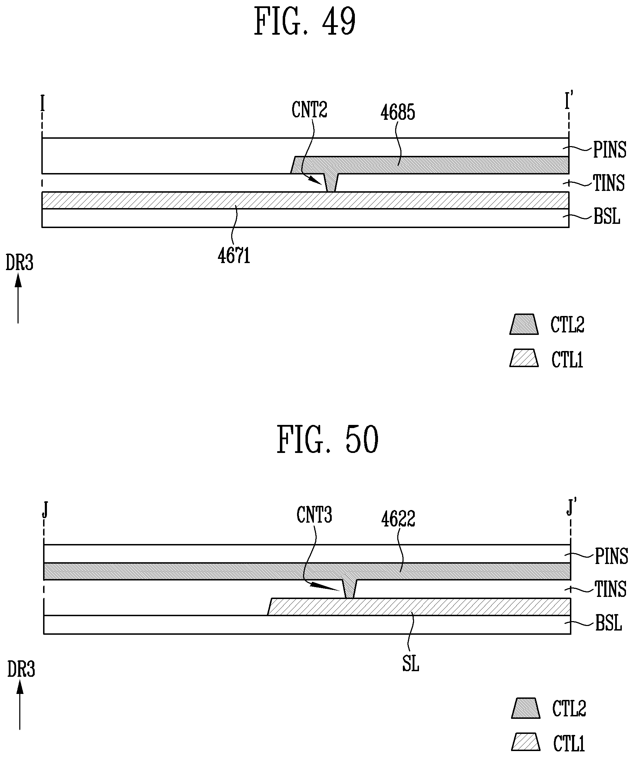

FIG. 49 is a cross-sectional diagram taken along line I-I' in FIGS. 47 and 48.

The first body part 4671 of the stylus pen sensing electrode S-Rx (see FIG. 48) may be connected to the fifth connection part 4685 of the stylus pen sensing electrode S-Rx through the second contact hole CNT2. On the cross-sectional diagram, the first body part 4671 of the stylus pen sensing electrode S-Rx may be positioned overlapping the fifth connection part 4685 in the third direction DR3.

FIG. 50 is a cross-sectional diagram taken along line J-J' in FIGS. 47 and 48.

The sensing line SL may be connected to the second body part 4622 of the touch sensing electrode Rx (see FIG. 47) via the third contact hole CNT3. On the cross-sectional diagram, the sensing line SL may be positioned overlapping with the second body part 4622 of the touch sensing electrode Rx.

FIG. 51 is a plan view illustrating the touch sensing electrodes Rx1 to Rx4 and the sensing lines SL1 to SL4 in the input sensing part ISP according to embodiments of the present disclosure.

For convenience of explanation, the drawing illustrates the base layer BSL of the input sensing part ISP, the touch sensing electrodes Rx1 to Rx4, the sensing lines SL1 to SL4, and the pads PD2, PD3.

The plurality of touch sensing electrodes Rx1 to Rx4 may be positioned to overall extend in the second direction DR2 on the display area AA of the base layer BSL.

Each of the plurality of sensing lines SL1 to SL4 may be connected to a corresponding one of the plurality of touch sensing electrodes Rx1 to Rx4 and may be positioned to overall extend in the first direction DR1 on the display area AA of the base layer BSL.

For example, the first sensing line SL1 is positioned in the fourth column of the input sensing part ISP and may be connected to the first touch sensing electrode Rx1 in the third contact hole CNT3. The first sensing line SL1 may be extended in the first direction DR1 and connected to corresponding one of the plurality of third pads PD3. The second sensing line SL2 is positioned in the third column of the input sensing part ISP and may be connected to the second touch sensing electrode Rx2 in the third contact hole CNT3. The second sensing line SL2 may be extended in the first direction DR1 and connected to corresponding one of the plurality of third pads PD3. The third sensing line SL3 is located in the second column and may be connected to the third touch sensing electrode Rx3 in the third contact hole CNT3. The third sensing line SL3 may be extended in the first direction DR1 and connected to corresponding one of the plurality of second pads PD2. The fourth sensing line SL4 is located in the first column and may be connected to the fourth touch sensing electrode Rx4 in the third contact hole CNT3. The fourth sensing line SL4 may be extended in the first direction DR1 and connected to corresponding one of the plurality of second pads PD2.

The third contact holes CNT3 may be positioned in different rows overall in the input sensing part ISP. The third contact holes CNT3 may be positioned in different columns overall in the input sensing part ISP.

According to embodiments of the present disclosure, the plurality of sensing lines SL1 to SL4 may be positioned within the display area AA. According to this, the area of the non-display area NDA may be reduced. By this, the area of the bezel may be reduced, so that the ratio of the display area AA may be relatively increased.

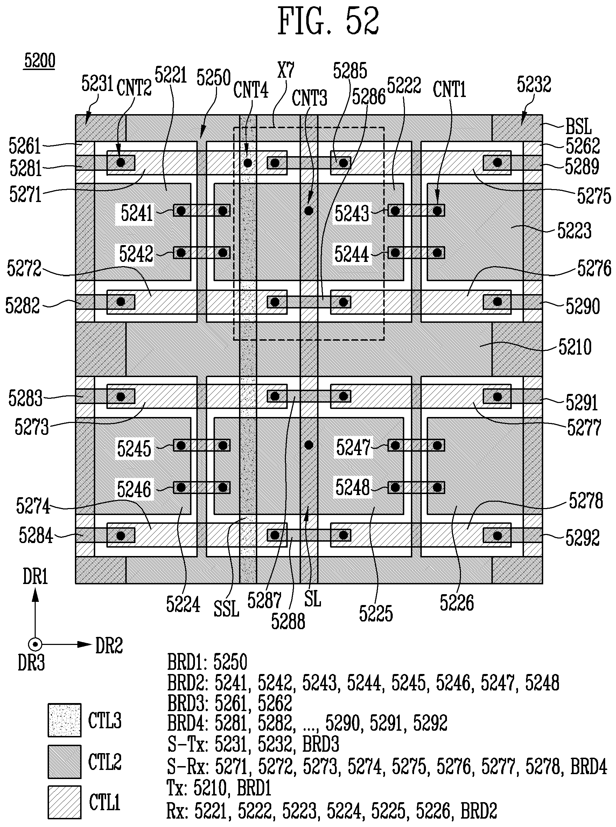

FIG. 52 is an embodiment of a unit cell 5200 according to embodiments of the present disclosure.

Referring to FIG. 52, the unit cell 5200 according to embodiments of the present disclosure may include a stylus pen driving electrode S-Tx, a stylus pen sensing electrode S-Rx, a touch driving electrode Tx, a touch sensing electrode Rx, a sensing line SL, and a stylus pen sensing line SSL.

The stylus pen driving electrode S-Tx may include first and second body parts 5231 and 5232 and a third bridge BRD3.

The first and second body parts 5231 and 5232 of the stylus pen driving electrode S-Tx may be positioned spaced apart from each other in the second direction DR2. The first and second body parts 5231 and 5232 may include a first conductive pattern CTL1. The first body part 5231 and the second body part 5232 of the stylus pen driving electrode S-Tx may have the same or similar widths in the second direction DR2. However, embodiments of the present disclosure are not limited thereto. For example, the width of the first body part 5231 in the second direction DR2 may be wider or narrower than the width of the second body part 5232 in the second direction DR2.

The third bridge BRD3 may include a first connection part 5261 which connects the first body parts 5231 spaced apart in the first direction DR1 and a second connection part 5262 which connects the second body parts 5232 spaced apart in the first direction DR1. The third bridge BRD3 may include the first conductive pattern CTL1.

The touch driving electrode Tx may include a body part 5210 and a first bridge BRD1. The first bridge BRD1 may include a connection part 5250. For example, the touch driving electrode Tx may include the body part 5210 overall extending in the second direction DR2 and the first bridge BRD1 which is connected to the body part 5210 and overall extends in the first direction DR1.

The body part 5210 of the touch driving electrode Tx may include a second conductive pattern CTL2. The first bridge BRD1 may include a second conductive pattern CTL2. The touch driving electrode Tx may be disposed to entirely surround the touch sensing electrode Rx (or body parts 5221 to 5226 of the touch sensing electrode Rx). For example, the body part 5210 of the touch driving electrode Tx may be positioned in the first direction DR1 of the body parts 5221 to 5226 of the touch sensing electrode Rx to surround the long side of the touch sensing electrode Rx. The first bridge BRD1 of the touch driving electrode Tx may be positioned in the second direction DR2 of the body parts 5221 to 5226 of the touch sensing electrode Rx to surround the short side of the touch sensing electrode Rx.

In an embodiment, the touch driving electrode Tx may overall extend in the first direction DR1. For example, the touch driving electrode Tx may be connected to the touch driving electrode Tx of an adjacent unit cell in the first direction DR1.

The touch sensing electrode Rx may include the plurality of body parts 5221 to 5226 and a second bridge BRD2. The second bridge BRD2 may include a plurality of connection parts 5241 to 5248. For example, the touch sensing electrode Rx may include the second bridge BRD2 which connects two body parts adjacent to each other in the second direction DR2 among the plurality of body parts 5221 to 5226.

The body parts 5221 to 5226 of the touch sensing electrode Rx may include the second conductive pattern CTL2. The second bridge BRD2 may include the first conductive pattern CTL1. The first body part 5221, second body part 5222, and third body part 5223 of the touch sensing electrode Rx may be disposed adjacent to each other in the second direction DR2. The fourth body part 5224, fifth body part 5225, and sixth body part 5226 of the touch sensing electrode Rx may be disposed adjacent to each other in the second direction DR2. The first to third body parts 5221 to 5223 and the fourth to sixth body parts 5224 to 5226 of the touch sensing electrode Rx may be positioned spaced apart from each other in the first direction DR1 with the body part 5210 of the touch driving electrode Tx interposed therebetween.

The second bridge BRD2 may be connected to the body parts 5221 to 5226 of the touch sensing electrode Rx via a first contact hole CNT1. The second bridge BRD2 may include a plurality of connection parts 5241 to 5248. For example, the first body part 5221 and the second body part 5222 of the touch sensing electrode Rx may be connected to each other by the first connection part 5241 and the second connection part 5242. In the above embodiment, the first body part 5221 and the second body part 5222 are described as being connected to each other by two connection parts 5241 and 5242 adjacent to each other in the first direction DR1, but embodiments of the present disclosure are not limited thereto. The first body part 5221 and the second body part 5222 may be connected to each other by one or more connection parts.

The touch sensing electrode Rx may be connected to the sensing line SL. For example, the second and fifth body parts 5222 and 5225 of the touch sensing electrode Rx may be connected to the sensing line SL via a third contact hole CNT3. The sensing line SL may overall extend in the first direction DR1 within the unit cell 5200. The sensing line SL may include the first conductive pattern CTL1. In the plan view, the sensing line SL may be positioned between the body parts of the stylus pen sensing electrode S-Rx adjacent to each other in the second direction DR2. In the plan view, the sensing line SL may be positioned overlapping with a fourth bridge BRD4 in the third direction DR3. In an embodiment, the width of the sensing line SL in the second direction DR2 may be the same as the width of the first and second connection parts 5261 and 5262 of the stylus pen driving electrode S-Tx in the second direction DR2, but embodiments of the present disclosure are not limited thereto.

The stylus pen sensing electrode S-Rx may include first to eighth body parts 5271 to 5278 and the fourth bridge BRD4.

The first to fourth body parts 5271 to 5274 of the stylus pen sensing electrode S-Rx may be positioned spaced apart from each other in the first direction DR1. The fifth to eighth body parts 5275 to 5278 of the stylus pen sensing electrode S-Rx may be positioned spaced apart from each other in the first direction DR1. In the plan view, the first to fourth body parts 5271 to 5274 and the fifth to eighth body parts 5275 to 5278 of the stylus pen sensing electrode S-Rx may be positioned spaced apart from each other in the second direction DR2 with the sensing line SL interposed therebetween.

In the plan view, the first body part 5271 and the second body part 5272 of the stylus pen sensing electrode S-Rx may be positioned spaced apart from each other in the first direction DR1 with the first body part 5221 and the first and second connection parts 5241 and 5242 of the touch sensing electrode Rx interposed therebetween.

In the plan view, the second body part 5272 and the third body part 5273 of the stylus pen sensing electrode S-Rx may be positioned spaced apart from each other in the first direction DR1 with the body part 5210 of the touch driving electrode Tx interposed therebetween. In the plan view, the second body part 5272 and the third body part 5273 of the stylus pen sensing electrode S-Rx may be positioned spaced apart from each other in the first direction DR1 with the first body part 5231 of the stylus pen driving electrode S-Tx interposed therebetween.

In the plan view, the third body part 5273 and the fourth body part 5274 of the stylus pen sensing electrode S-Rx may be positioned spaced apart from each other in the first direction DR1 with the fourth body part 5224 and the fifth and sixth connection parts 5245 and 5246 of the touch sensing electrode Rx interposed therebetween.

The first to eighth body parts 5271 to 5278 of the stylus pen sensing electrode S-Rx may include the first conductive pattern CTL1. The width of each of the first to eighth body parts 5271 to 5278 of the stylus pen sensing electrode S-Rx in the first direction DR1 may be the same or similar to each other. However, embodiments of the present disclosure are not limited thereto.

In an embodiment, each of the first to eighth body parts 5271 to 5278 of the stylus pen sensing electrode S-Rx may include a long side overall extending in the second direction DR2 and a short side overall extending in the first direction DR1. In the plan view, the first to eighth body parts 5271 to 5278 of the stylus pen sensing electrode S-Rx may overlap with the first bridge BRD1.

The fourth bridge BRD4 may be connected to at least one of the first to eighth body parts 5271 to 5278 of the stylus pen sensing electrode S-Rx in a second contact hole CNT2. The fourth bridge BRD4 may be configured to connect the stylus pen sensing electrodes S-Rx of two unit cells adjacent to each other in one direction (e.g., the second direction DR2). The fourth bridge BRD4 may include first to twelfth connection parts 5281 to 5292.

For example, the first connection part 5281 may be connected to a left end of the first body part 5271. The fifth connection part 5285 may be connected to a right end of the first body part 5271. The second connection part 5282 may be connected to a left end of the second body part 5272. The sixth connection part 5286 may be connected to a right end of the second body part 5272. The third connection part 5283 may be connected to a left end of the third body part 5273. The seventh connection part 5287 may be connected to a right end of the third body part 5273. The fourth connection part 5284 may be connected to a left end of the fourth body part 5274. The eighth connection part 5288 may be connected to a right end of the fourth body part 5274.

For example, the fifth connection part 5285 may be connected to a left end of the fifth body part 5275. The ninth connection part 5289 may be connected to a right end of the fifth body part 5275. The sixth connection part 5286 may be connected to a left end of the sixth body part 5276. The tenth connection part 5290 may be connected to a right end of the sixth body part 5276. The seventh connection part 5287 may be connected to a left end of the seventh body part 5277. The eleventh connection part 5291 may be connected to a right end of the seventh body part 5277. The eighth connection part 5288 may be connected to a left end of the eighth body part 5278. The twelfth connection part 5292 may be connected to a right end of the eighth body part 5278.

The first to twelfth connection parts 5281 to 5292 of the stylus pen sensing electrode S-Rx may overall extend in the second direction DR2.

In the plan view, the first to fourth connection parts 5281 to 5284 and the ninth to twelfth connection parts 5289 to 5292 of the stylus pen sensing electrode S-Rx may be positioned to overlap with one of the first connection part 5261 and the second connection part 5262 of the stylus pen driving electrode S-Tx in the third direction DR3. In the plan view, the fifth to eighth connection parts 5285 to 5288 of the stylus pen sensing electrode S-Rx may be positioned to overlap with the sensing line SL in the third direction DR3.

In the plan view, the stylus pen driving electrode S-Tx may be positioned to overlap with the body part 5210 of the touch driving electrode Tx and the body parts 5221, 5223, 5224, and 5226 of the touch sensing electrode Rx in the third direction DR3.

In the plan view, the first bridge BRD1 and the second bridge BRD2 may be positioned overlapping in the third direction DR3.

The stylus pen sensing line SSL may be connected to the stylus pen sensing electrode S-Rx. The stylus pen sensing line SSL may be disposed to overall extend in the first direction DR1 within the unit cell 5200.

In an embodiment, the stylus pen sensing line SSL may be connected to any one of the first to eighth body parts 5271 to 5278 of the stylus pen sensing electrode S-Rx. In another embodiment, the stylus pen sensing line SSL may be connected to the fourth bridge BRD4 of the stylus pen sensing electrode S-Rx. For example, the stylus pen sensing line SSL may be connected to any one of the first to twelfth connection parts 5281 to 5292 of the stylus pen sensing electrode S-Rx. For convenience of explanation, the following description is based on an embodiment in which the stylus pen sensing line SSL is connected to the first body part 5271 of the stylus pen sensing electrode S-Rx. However, embodiments of the present disclosure are not limited thereto.

Referring to FIG. 52, the stylus pen sensing line SSL according to embodiments of the present disclosure may be connected to the first body part 5271 of the stylus pen sensing electrode S-Rx via a fourth contact hole CNT4. The stylus pen sensing lines SSL may include a third conductive pattern CTL3. The third conductive pattern CTL3 may be positioned on the first and second conductive patterns CTL1, CTL2.

In an embodiment, the third conductive pattern CTL3 may include at least one of various metal materials, including gold (Au), silver (Ag), aluminum (Al), molybdenum (Mo), chromium (Cr), titanium (Ti), nickel (Ni), neodymium (Nd), copper (Cu), platinum (Pt), and the like, or alloys thereof. According to embodiments, the third conductive pattern CTL3 may include at least one of various transparent conductive materials, including silver nanowire (AgNW), indium tin oxide (ITO), indium zinc oxide (IZO), indium gallium zinc oxide (IGZO), antimony zinc oxide (AZO), indium tin zinc oxide (ITZO), zinc oxide (ZnO), tin oxide (SnO₂), carbon nanotubes (CNT), and graphene. According to embodiments, the third conductive pattern CTL3 may be formed of the same material as at least one of the first and second conductive patterns CTL1, CTL2, but embodiments of the present disclosure are not limited thereto.

In the plan view, the stylus pen sensing line SSL may be positioned overlapping with the touch driving electrode Tx, the touch sensing electrode Rx, and the stylus pen sensing electrode S-Rx. Referring to FIG. 52, the stylus pen sensing line SSL is shown as being positioned adjacent to the sensing line SL in the second direction DR2 within the unit cell 5200. However, embodiments of the present disclosure are not limited thereto. For example, in an embodiment in which the stylus pen sensing line SSL is connected to at least one (e.g., one or more) of the fifth to eighth connection parts 5285 to 5288 of the stylus pen sensing electrode S-Rx, the stylus pen sensing line SSL may be positioned to overlap the sensing line SL in the third direction DR3.

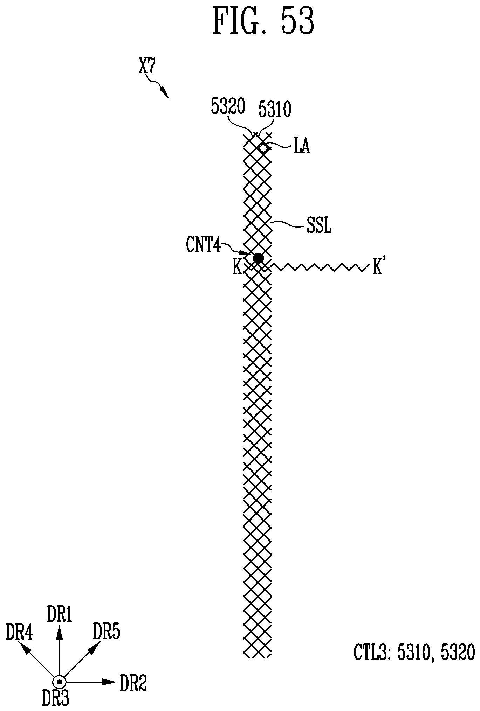

FIG. 53 is a plan view illustrating the third conductive pattern CTL3 of an area X7 of FIG. 52.

The third conductive pattern CTL3 may include a fifth electrode 5310 extending in the fourth direction DR4 and a sixth electrode 5320 extending in the fifth direction DR5. The fourth direction DR4 and the fifth direction DR5 may be intersecting directions. For example, the fourth direction DR4 and the fifth direction DR5 may be perpendicular to each other. The fourth direction DR4 and fifth direction DR5 may each be perpendicular to the third direction DR3.

The third conductive pattern CTL3 may surround the light emitting area LA in the plan view. Referring to FIG. 53, the light emitting area LA may be positioned in an area surrounded by the fifth electrode 5310 and the sixth electrode 5320. By this, the fifth electrode 5310 and the sixth electrode 5320 are not positioned on the area where light is emitted, so that visibility may be improved.

Within the area indicated as X7, the stylus pen sensing line SSL may be positioned. The stylus pen sensing line SSL may have the fourth contact hole CNT4.

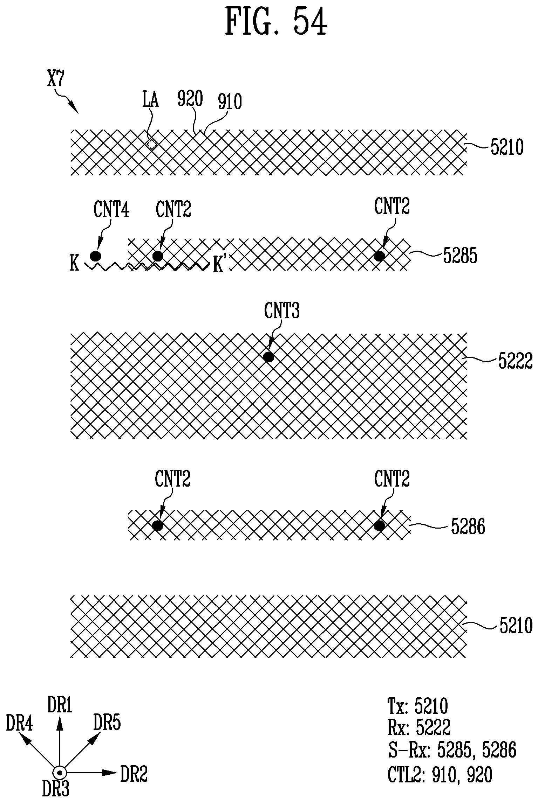

FIG. 54 is a plan view illustrating the second conductive pattern CTL2 of the area X7 of FIG. 52.

The second conductive pattern CTL2 may include the first electrode 910 extending in the fourth direction DR4 and the second electrode 920 extending in the fifth direction DR5.

Within the area indicated as X7, the body parts 5210 of the touch driving electrode Tx may be positioned. The second body part 5222 of the touch sensing electrode Rx may be positioned between the body parts 5210 positioned spaced apart from each other in the first direction DR1.

In the plan view, between the body parts 5210 of the touch driving electrode Tx and the second body part 5222 of the touch sensing electrode Rx, the fifth and sixth connection parts 5285 and 5286 of the stylus pen sensing electrode S-Rx may be positioned. For example, in the plan view, the body part 5210 of the touch driving electrode Tx, the fifth connection part 5285 of the stylus pen sensing electrode S-Rx, and the second body part 5222 of the touch sensing electrode Rx may be sequentially disposed spaced apart from each other in the first direction DR1.

At least one second contact hole CNT2 may be positioned in each of the fifth and sixth connection parts 5285 and 5286 of the stylus pen sensing electrode S-Rx.

At least one third contact hole CNT3 may be positioned in the second body part 5222 of the touch sensing electrode Rx.

In an embodiment, the fourth contact hole CNT4 may be positioned to be adjacent to the fifth and sixth connection parts 5285 and 5286 of the stylus pen sensing electrode S-Rx in the second direction DR2. However, embodiments of the present disclosure are not limited thereto, and in the plan view, the fourth contact hole CNT4 may be positioned between two second contact holes CNT2 provided in the fifth connection part 5285 of the stylus pen sensing electrode S-Rx.

Each of the body part 5210 of the touch driving electrode Tx, the second body part 5222 of the touch sensing electrode Rx, and the fifth and sixth connection parts 5285 and 5286 of the stylus pen sensing electrode S-Rx may include the second conductive pattern CTL2.

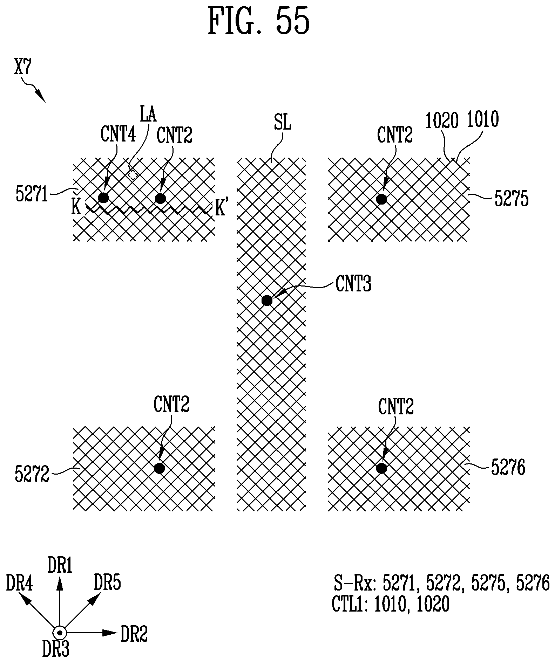

FIG. 55 is a plan view illustrating the first conductive pattern CTL1 of the area X7 of FIG. 52. The first conductive pattern CTL1 may include the third electrode 1010 extending in the fourth direction DR4 and the fourth electrode 1020 extending in the fifth direction DR5. The fourth direction DR4 and the fifth direction DR5 may be intersecting directions.

Within the area indicated as X7, the first, second, fifth, and sixth body parts 5271, 5272, 5275, and 5276 of the stylus pen sensing electrode S-Rx may be positioned. The second contact hole CNT2 may be positioned in each of the first, second, fifth, and sixth body parts 5271, 5272, 5275, and 5276 of the stylus pen sensing electrode S-Rx.

In an embodiment, the fourth contact hole CNT4 may be positioned in at least one of the first, second, fifth, and sixth body parts 5271, 5272, 5275, and 5276 of the stylus pen sensing electrode S-Rx.

In the plan view, the sensing line SL may be positioned between the first and fifth body parts 5271 and 5275 of the stylus pen sensing electrode S-Rx. In the plan view, the sensing line SL may be positioned between the second and sixth body parts 5272 and 5276 of the stylus pen sensing electrode S-Rx.

The sensing line SL and the first, second, fifth, and sixth body parts 5271, 5272, 5275, and 5276 of the stylus pen sensing electrode S-Rx may include the first conductive pattern CTL1.

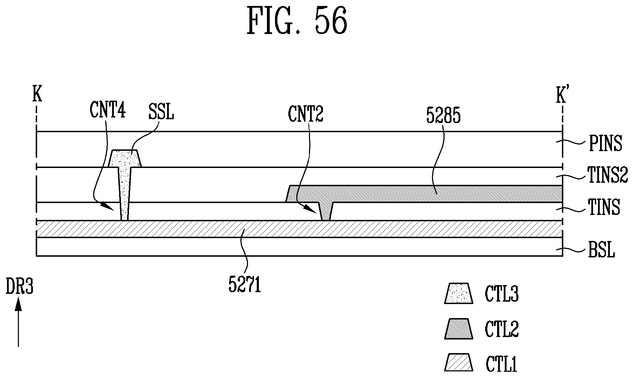

FIG. 56 is a cross-sectional diagram taken along line K-K' in FIGS. 53 to 55.

The first body part 5271 of the stylus pen sensing electrode S-Rx (see FIG. 55) may be connected to the fifth connection part 5285 of the stylus pen sensing electrode S-Rx through the second contact hole CNT2. On the cross-sectional diagram, the first body part 5271 of the stylus pen sensing electrode S-Rx may be positioned overlapping the fifth connection part 5285 in the third direction DR3.

The stylus pen sensing line SSL may be connected to the first body part 5271 of the stylus pen sensing electrode S-Rx (see FIG. 55) via the fourth contact hole CNT4. On the cross-sectional view, the stylus pen sensing line SSL may be positioned overlapping the first body part 5271 of the stylus pen sensing electrode S-Rx in the third direction DR3.

The third conductive pattern CTL3 may be positioned on a second touch insulating layer TINS2. The second touch insulating layer TINS2 may be positioned on the touch insulating layer TINS. A planarization insulating layer PINS may be positioned on the third conductive pattern CTL3.

In an embodiment, the second touch insulating layer TINS2 may include the same material as the touch insulating layer TINS, but embodiments of the present disclosure are not limited thereto. For example, the second touch insulating layer TINS2 may include one or more of an inorganic material and an organic material. The inorganic material may include one or more of the group consisting of silicon nitride (SiNₓ), silicon oxide (SiOₓ), silicon oxynitride (SiOₓN_{y}), and aluminum oxide (AlOₓ). The organic material may include one or more of the group consisting of acrylic resin, epoxy resin, phenol resin, polyamide resin, and polyimide resin. However, embodiments of the present disclosure are not limited thereto.

FIG. 57 is a plan view illustrating the touch sensing electrodes Rx1 to Rx4, the sensing lines SL1 to SL4, stylus pen sensing electrodes S-Rx1 to S-Rx4, and stylus pen sensing lines SSL1 to SSL4 in the input sensing part ISP according to embodiments of the present disclosure.

For convenience of explanation, the drawing illustrates the base layer BSL of the input sensing part ISP, the touch sensing electrodes Rx1 to Rx4, the sensing lines SL1 to SL4, the stylus pen sensing electrodes S-Rx1 to S-Rx4, the stylus pen sensing lines SSL1 to SSL4, and the pads PD2, PD3.

The plurality of touch sensing electrodes Rx1 to Rx4 may be disposed to overall extend in the second direction DR2 on the display area AA of the base layer BSL.

Each of the plurality of sensing lines SL1 to SL4 may be connected to a corresponding one of the plurality of touch sensing electrodes Rx1 to Rx4 and disposed to overall extend in the first direction DR1 on the display area AA of the base layer BSL.

For example, the first sensing line SL1 is positioned in the fourth column of the input sensing part ISP and may be connected to the first touch sensing electrode Rx1 in the third contact hole CNT3. The first sensing line SL1 may be extended in the first direction DR1 and connected to corrsponding one of the plurality of third pads PD3. The second sensing line SL2 is positioned in the third column of the input sensing part ISP and may be connected to the second touch sensing electrode Rx2 in the third contact hole CNT3. The second sensing line SL2 may be extended in the first direction DR1 and connected to a corresponding one of the plurality of third pads PD3. The third sensing line SL3 is positioned in the second column and may be connected to the third touch sensing electrode Rx3 in the third contact hole CNT3. The third sensing line SL3 may be extended in the first direction DR1 and connected to a corresponding one of the plurality of second pads PD2. The fourth sensing line SL4 is positioned in the first column and may be connected to the fourth touch sensing electrode Rx4 in the third contact hole CNT3. The fourth sensing line SL4 may be extended in the first direction DR1 and connected to a corresponding one of the plurality of second pads PD2.

The third contact holes CNT3 may be positioned in different rows overall in the input sensing part ISP. The third contact holes CNT3 may be positioned in different columns overall in the input sensing part ISP.

The plurality of stylus pen sensing electrodes S-Rx1 to S-Rx4 may be arranged to extend in the second direction DR2 overall on the display area AA of the base layer BSL.

Each of the plurality of stylus pen sensing lines SSL1 to SSL4 may be connected to a corresponding one of the plurality of stylus pen sensing electrodes S-Rx1 to S-Rx4 and disposed to overall extend in the first direction DR1 on the display area AA of the base layer BSL.

For example, the first stylus pen sensing line SSL1 is positioned in the fourth column of the input sensing part ISP and may be connected to the first stylus pen sensing electrode S-Rx1 in the fourth contact hole CNT4. The first stylus pen sensing line SSL1 may be extended in the first direction DR1 and connected to corresponding one of the plurality of third pads PD3. The second stylus pen sensing line SSL2 is positioned in the third column of the input sensing part ISP and may be connected to the second stylus pen sensing electrode S-Rx2 in the fourth contact hole CNT4. The second stylus pen sensing line SSL2 may be extended in the first direction DR1 and connected to a corresponding one of the plurality of third pads PD3. The third stylus pen sensing line SSL3 is positioned in the second column and may be connected to the third stylus pen sensing electrode S-Rx3 in the fourth contact hole CNT4. The third stylus pen sensing line SSL3 may be extended in the first direction DR1 and connected to a corresponding one of the plurality of second pads PD2. The fourth stylus pen sensing line SSL4 is positioned in the first column and may be connected to the fourth stylus pen sensing electrode S-Rx4 in the fourth contact hole CNT4. The fourth stylus pen sensing line SSL4 may be extended in the first direction DR1 and connected to a corresponding one of the plurality of second pads PD2.

The fourth contact holes CNT4 may be positioned in different rows overall in the input sensing part ISP. The fourth contact holes CNT4 may be positioned in different columns overall in the input sensing part ISP.

According to embodiments of the present disclosure, the plurality of sensing lines SL1 to SL4 and the plurality of stylus pen sensing lines SSL1 to SSL4 may be positioned within the display area AA. According to this, the area of the non-display area NDA may be reduced. By this, the area of the bezel may be reduced, so that the ratio of the display area AA may be relatively increased.

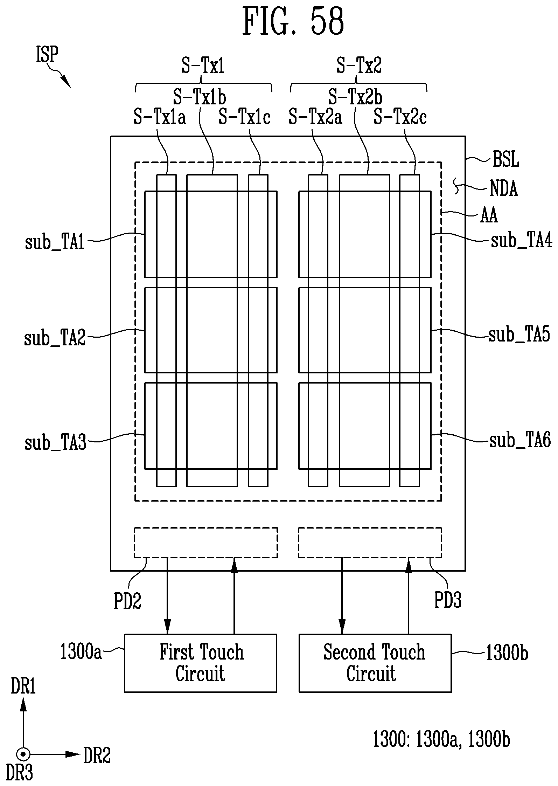

FIG. 58 is an embodiment in which a touch area is divided into a plurality of sub-touch areas sub_TA1 to sub_TA6 and driven in the input sensing part ISP according to embodiments of the present disclosure.

According to embodiments of the present disclosure, the touch area may include the plurality of sub-touch areas sub_TA1 to sub_TA6. For example, the first to third sub-touch areas sub_TA1 to sub_TA3 may be positioned to the left of the display area AA, and the fourth to sixth sub-touch areas sub_TA4 to sub_TA6 may be positioned to the right of the display area AA.

Each of the sub-touch areas sub_TA1 to sub_TA6 may include one or more of the unit cells described above.

Referring to the drawings described above, between the plurality of sub-touch areas sub_TA1 to sub_TA6, the touch driving electrode Tx, the touch sensing electrode Rx, and the stylus pen sensing electrode S-Rx may be electrically isolated from each other. On the other hand, between the plurality of sub-touch areas sub_TA1 to sub_TA6, the stylus pen driving electrode S-Tx may be shared with each other.

For example, the first to third sub-touch areas sub_TA1 to sub_TA3 may share the first stylus pen driving electrode S-Tx1, and the fourth to sixth sub-touch areas sub_TA4 to sub_TA6 may share the second stylus pen driving electrode S-Tx2.

In the above embodiment, the unit cells included in each of the first to third sub-touch areas sub_TA1 to sub_TA3 are connected to the second pads PD2, and the unit cells included in each of the fourth to sixth sub-touch areas sub_TA4 to sub_TA6 may be connected to the third pads PD3. The second pads PD2 may be connected to a first touch circuit 1300a, and the third pads PD3 may be connected to a second touch circuit 1300b. The touch circuit 1300 may include the first touch circuit 1300a and the second touch circuit 1300b.

The first and second stylus pen driving electrodes S-Tx1, S-Tx2 may be commonly connected to a corresponding one of the second pads PD2 or to a corresponding one of the third pads PD3.

According to embodiments of the present disclosure, a plurality of touch circuits 1300a and 1300b may be provided for operation for touch sensing and stylus pen sensing. By this, the time required for touch sensing and stylus pen sensing may be shortened, thereby improving the touch response speed.

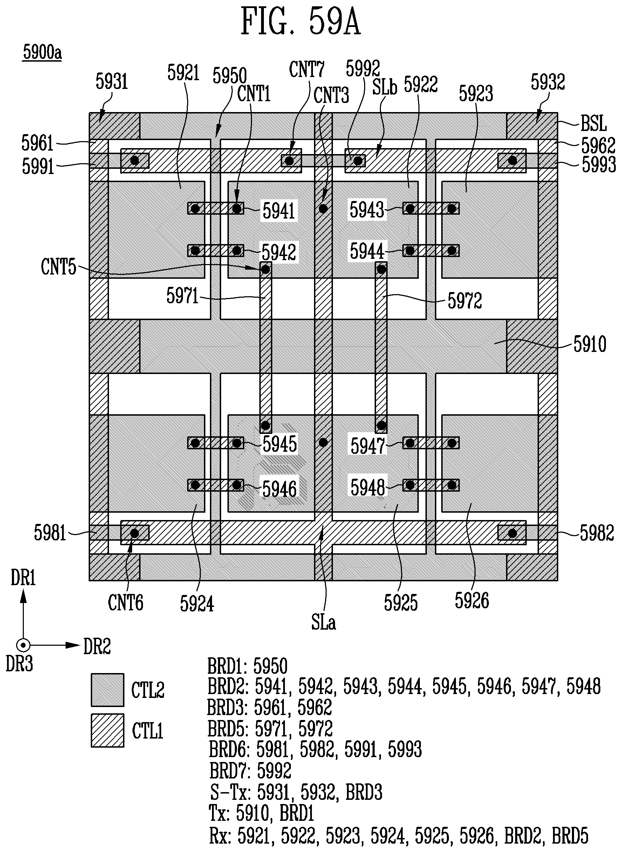

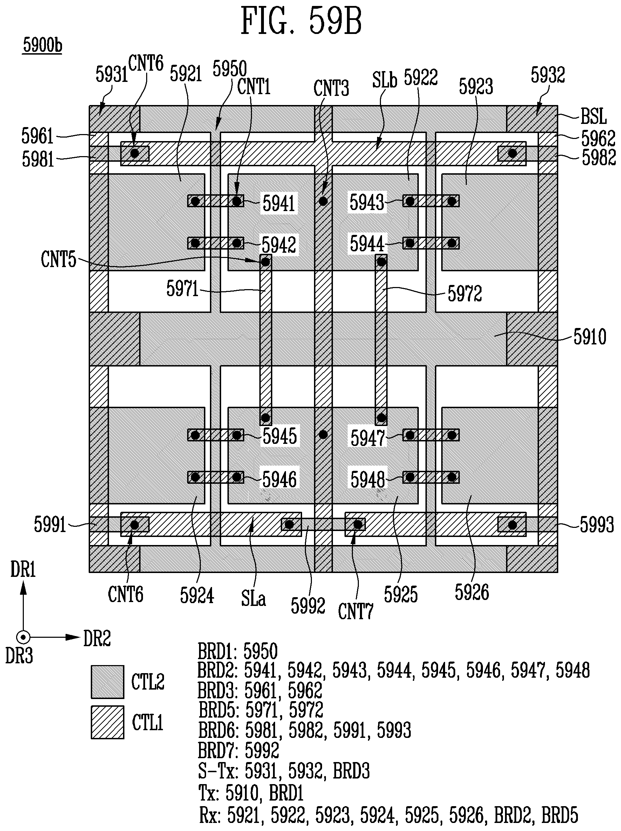

FIGS. 59A and 59B are embodiments of unit cells 5900a and 5900b, respectively, each positioned in a different column in embodiments of the present disclosure.

For example, the unit cell 5900a shown in FIG. 59A may correspond to a unit cell positioned in one of odd columns and even columns (e.g., the odd column), and the unit cell 5900b shown in FIG. 59B may correspond to a unit cell positioned in the other of the odd columns and the even columns (e.g., the even column).

The unit cells 5900a positioned in the odd columns may be electrically connected to each other through an a-th sensing line SLa. The unit cells 5900b positioned in the even columns may be electrically connected to each other through a b-th sensing line SLb.

Referring to FIG. 59A, the unit cell 5900a according to embodiments of the present disclosure may include a stylus pen driving electrode S-Tx, a touch driving electrode Tx, a touch sensing electrode Rx, the a-th sensing line SLa, and the b-th sensing line SLb.

In an embodiment, the stylus pen driving electrode S-Tx may include a first body part 5931 and a second body part 5932 and a third bridge BRD3. The first body part 5931 and the second body part 5932 may be positioned spaced apart from each other in the second direction DR2. Each of the first body part 5931 and the second body part 5932 may overall extend in the first direction DR1. The first body part 5931 and the second body part 5932 may include the first conductive pattern CTL1.

The first body part 5931 and the second body part 5932 of the stylus pen driving electrode S-Tx may have the same or similar widths in the second direction DR2. However, embodiments of the present disclosure are not limited thereto. The third bridge BRD3 may include a first connection part 5961 connecting the first body parts 5931 spaced apart in the first direction DR1 and a second connection part 5962 connecting the second body parts 5932 spaced apart in the first direction DR1.

The touch driving electrode Tx may include a body part 5910 and a first bridge BRD1. The first bridge BRD1 may include a connection part 5950. For example, the touch driving electrode Tx may include the body part 5910 which overall extends in the second direction DR2 and the first bridge BRD1 which is connected to the body part 5910 and overall extends in the first direction DR1.

The body part 5910 of the touch driving electrode Tx may include a second conductive pattern CTL2. The first bridge BRD1 may include the second conductive pattern CTL2. The touch driving electrode Tx may be disposed to entirely surround the touch sensing electrode Rx (or body parts 5921 to 5926 of the touch sensing electrode Rx). For example, the body part 5910 of the touch driving electrode Tx may be positioned in the first direction DR1 of the body parts 5921 to 5926 of the touch sensing electrode Rx to surround the long side of the touch sensing electrode Rx. The first bridge BRD1 of the touch driving electrode Tx may be positioned in the second direction DR2 of the body parts 5921 to 5926 of the touch sensing electrode Rx to surround the short side of the touch sensing electrode Rx.

In an embodiment, the touch driving electrode Tx may overall extend in the first direction DR1. For example, the touch driving electrode Tx may be connected to the touch driving electrode Tx in an adjacent unit cell in the first direction DR1.

The touch sensing electrode Rx may be configured to sense whether there is a touch or the position of the touch. For example, when the finger or the like approaches the vicinity of the touch sensing electrode Rx, the value of mutual capacitance formed between the touch driving electrode Tx and the touch sensing electrode Rx may change, and by sensing the touch sensing electrode Rx, it is possible to detect whether there is a touch or the position of the touch. In an embodiment, the touch sensing electrode Rx may be configured to sense the induced current generated as the charged stylus pen PN (see FIG. 1) approaches.

The touch sensing electrode Rx may include the plurality of body parts 5921 to 5926, a second bridge BRD2, and a fifth bridge BRD5.

The second bridge BRD2 may include a plurality of connection parts 5941 to 5948. For example, the touch sensing electrode Rx may include a second bridge BRD2 which connects two body parts adjacent to each other in the second direction DR2 among the plurality of body parts 5921 to 5926.

The fifth bridge BRD5 may include one or more connection parts. For example, the fifth bridge BRD5 may include a plurality of connection parts 5971 and 5972. In an embodiment, each of the first connection part 5971 and the second connection part 5972 may be configured to connect the second body part 5922 and the fifth body part 5925 of the touch sensing electrode Rx. Each of the second body part 5922 and the fifth body part 5925 of the touch sensing electrode Rx may include a fifth contact hole CNT5. Each of the second and fifth body parts 5922 and 5925 may be connected to the fifth bridge BRD5 in the fifth contact hole CNT5. In the plan view, the fifth bridge BRD5 may be positioned to overlap with the body part 5910 of the touch driving electrode Tx in the third direction DR3. The fifth bridge BRD5 may include the first conductive pattern CTL1.

The body parts 5921 to 5926 of the touch sensing electrode Rx may include the second conductive pattern CTL2. The second bridge BRD2 may include the first conductive pattern CTL1. The first body part 5921, the second body part 5922, and the third body part 5923 of the touch sensing electrode Rx may be disposed adjacent to each other side by side in the second direction DR2. The fourth body part 5924, the fifth body part 5925, and the sixth body part 5926 of the touch sensing electrode Rx may be disposed adjacent to each other side by side in the second direction DR2. The first to third body parts 5921 to 5923 and the fourth to sixth body parts 5924 to 5926 of the touch sensing electrode Rx may be disposed spaced apart from each other in the first direction DR1 with the body part 5910 of the touch driving electrode Tx interposed therebetween.

The second bridge BRD2 may be connected to the body parts 5921 to 5926 of the touch sensing electrode Rx via a first contact hole CNT1. The second bridge BRD2 may include a plurality of connection parts 5941 to 5948. For example, the first body part 5921 and the second body part 5922 of the touch sensing electrode Rx may be connected to each other by the first connection part 5941 and the second connection part 5942. In the above embodiment, the first body part 5921 and the second body part 5922 are described as being connected to each other by two connection parts 5941 and 5942 adjacent to each other in the first direction DR1, but embodiments of the present disclosure are not limited thereto. The first body part 5921 and the second body part 5922 may be connected to each other by one or more connection parts.

In the plan view, the stylus pen driving electrode S-Tx may be positioned to overlap with the body part 5910 of the touch driving electrode Tx in the third direction DR3.

**In** the plan view, the first bridge BRD1 and the second bridge BRD2 may be positioned overlapping in the third direction DR3.

On the other hand, the touch sensing electrode Rx may be connected to a corresponding one of the a-th sensing line SLa and the b-th sensing line SLb.

Referring to FIG. 59A, the second and fifth body parts 5922 and 5925 of the touch sensing electrode Rx may be connected to the a-th sensing line SLa via a third contact hole CNT3. Referring to FIG. 59B, the second and fifth body parts 5922 and 5925 of the touch sensing electrode Rx may be connected to the b-th sensing line SLb via the third contact hole CNT3.

Below, the description focuses on FIG. 59A.

Referring to FIG. 59A, the a-th sensing line SLa may overall extend in the first direction DR1 and the second direction DR2 within the unit cell 5900a. For example, the a-th sensing line SLa may overall extend in the first direction DR1 within the unit cell 5900a. The a-th sensing line SLa may extend in the first direction DR1 and be connected to each of the second and fifth body parts 5922 and 5925 of the touch sensing electrode Rx in the third contact hole CNT3. The a-th sensing line SLa may be positioned on the lower side of the fourth to sixth body parts 5294 to 5926 of the touch sensing electrode Rx within the unit cell 5900a. The a-th sensing line SLa may be extended in the second direction DR2 and connected to a sixth bridge BRD6 in a sixth contact hole CNT6.

The sixth bridge BRD6 may include a first connection part 5981 and a second connection part 5982. Each of the first and second connection parts 5981 and 5982 may overall extend in the second direction DR2. In the plan view, the sixth bridge BRD6 may be positioned to overlap with the stylus pen driving electrode S-Tx. For example, the sixth bridge BRD6 may be positioned to overlap with a third bridge BRD3 of the stylus pen driving electrode S-Tx in the third direction DR3. In the plan view, the first connection part 5981 of the sixth bridge BRD6 may be positioned between the fourth body part 5924 of the touch sensing electrode Rx and the body part 5910 of the touch driving electrode Tx. The second connection part 5982 of the sixth bridge BRD6 may be positioned between the sixth body part 5926 of the touch sensing electrode Rx and the body part 5910 of the touch driving electrode Tx. By the sixth bridge BRD6, the touch sensing electrodes Rx of the unit cells 5900a adjacent to the second direction DR2 and located in odd columns may be commonly connected to the a-th sensing line SLa. The sixth bridge BRD6 may include the second conductive pattern CTL2.

The b-th sensing line SLb may overall extend in the second direction DR2. The b-th sensing line SLb may be connected to a seventh bridge BRD7 via a seventh contact hole CNT7. In the plan view, the b-th sensing line SLb may be positioned between the first to third body parts 5921 to 5923 of the touch sensing electrode Rx and the body part 5910 of the touch driving electrode Tx. In the plan view, the b-th sensing line SLb may be positioned to overlap the first bridge BRD1 of the touch driving electrode Tx in the third direction DR3. The b-th sensing line SLb may include the first conductive pattern CTL1. The b-th sensing line SLb may be positioned spaced apart from each other in the second direction DR2 with the a-th sensing line SLa extending in the first direction DR1 interposed therebetween. By the seventh bridge BRD7, two b-th sensing lines SLb spaced apart from each other may be connected to each other.

The seventh bridge BRD7 may include first to third connection parts 5991 to 5993. In the plan view, the first connection part 5991 of the seventh bridge BRD7 may be positioned to overlap with the first connection part 5961 of the stylus pen driving electrode S-Tx in the third direction DR3. In the plan view, the second connection part 5992 may be positioned to overlap with the a-th sensing line SLa in the third direction DR3. In the plan view, the third connection part 5993 may be positioned to overlap with the second connection part 5962 of the stylus pen driving electrode S-Tx in the third direction DR3.

In the plan view, the a-th sensing line SLa extending in the first direction DR1 may be positioned between the first connection part 5971 and the second connection part 5972 of the fifth bridge BRD5. In the plan view, the a-th sensing line SLa may be positioned to overlap with the body part 5910 of the touch driving electrode Tx in the third direction DR3. In an embodiment, the width of the a-th sensing line SLa in the second direction DR2 may be the same as the width of the first and second connection parts 5961 and 5962 of the stylus pen driving electrode S-Tx in the second direction DR2, but embodiments of the present disclosure are not limited thereto.

Below, the description focuses on FIG. 59B.

Referring to FIG. 59B, the b-th sensing line SLb may overall extend in the first direction DR1 and the second direction DR2 within the unit cell 5900b. For example, the b-th sensing line SLb may overall extend in the first direction DR1 within the unit cell 5900b. The b-th sensing line SLb may be extended in the first direction DR1 and connected to each of the second and fifth body parts 5922 and 5925 of the touch sensing electrode Rx in the third contact hole CNT3. The b-th sensing line SLb may be positioned on the upper side of the first to third body parts 5921 to 5923 of the touch sensing electrode Rx within the unit cell 5900b. The b-th sensing line SLb may be extended in the second direction DR2 and connected to the sixth bridge BRD6 in the sixth contact hole CNT6.

The sixth bridge BRD6 may include the first connection part 5981 and the second connection part 5982. Each of the first and second connection parts 5981 and 5982 may overall extend in the second direction DR2. In the plan view, the sixth bridge BRD6 may be positioned to overlap with the stylus pen driving electrode S-Tx. For example, the sixth bridge BRD6 may be positioned to overlap with the third bridge BRD3 of the stylus pen driving electrode S-Tx in the third direction DR3. In the plan view, the first connection part 5981 of the sixth bridge BRD6 may be positioned between the first body part 5921 of the touch sensing electrode Rx and the body part 5910 of the touch driving electrode Tx. The second connection part 5982 of the sixth bridge BRD6 may be positioned between the third body part 5923 of the touch sensing electrode Rx and the body part 5910 of the touch driving electrode Tx. By means of the sixth bridge BRD6, the touch sensing electrodes Rx of the unit cells 5900b positioned in even rows and adjacent to the second direction DR2 may be commonly connected to the b-th sensing line SLb. The sixth bridge BRD6 may include the second conductive pattern CTL2.

The a-th sensing line SLa may overall extend in the second direction DR2. The a-th sensing line SLa may be connected to the seventh bridge BRD7 via the seventh contact hole CNT7. In the plan view, the a-th sensing line SLa may be positioned between the fourth to sixth body parts 5924 to 5926 of the touch sensing electrode Rx and the body part 5910 of the touch driving electrode Tx. In the plan view, the a-th sensing line SLa may be positioned to overlap with the first bridge BRD1 of the touch driving electrode Tx in the third direction DR3. The a-th sensing line SLa may include the first conductive pattern CTL1. The a-th sensing lines SLa may be positioned spaced apart from each other in the second direction DR2 with the b-th sensing line SLb extending in the first direction DR1 interposed therebetween. By means of the seventh bridge BRD7, two a-th sensing lines SLa spaced apart from each other may be connected to each other.

In the plan view, the b-th sensing line SLb extending in the first direction DR1 may be positioned between the first connection part 5971 and the second connection part 5972 of the fifth bridge BRD5. In the plan view, the b-th sensing line SLb may be positioned to overlap with the body part 5910 of the touch driving electrode Tx in the third direction DR3. In an embodiment, the width of the b-th sensing line SLb in the second direction DR2 may be the same as the width of the first and second connection parts 5961 and 5962 of the stylus pen driving electrode S-Tx in the second direction DR2, but embodiments of the present disclosure are not limited thereto.

Below, description is made with common reference to FIGS. 59A and 59B.

The seventh bridge BRD7 may include the first to third connection parts 5991 to 5993. In the plan view, the first connection part 5991 of the seventh bridge BRD7 may be positioned to overlap with the first connection part 5991 of the stylus pen driving electrode S-Tx in the third direction DR3. In the plan view, the third connection part 5993 may be positioned to overlap with the second connection part 5962 of the stylus pen driving electrode S-Tx in the third direction DR3. Referring to FIG. 59A, in the plan view, the second connection part 5992 of the seventh bridge BRD7 may be positioned to overlap with the a-th sensing line SLa in the third direction DR3. Referring to FIG. 59B, in the plan view, the second connection part 5992 of the seventh bridge BRD7 may be positioned to overlap with the b-th sensing line SLb in the third direction DR3.

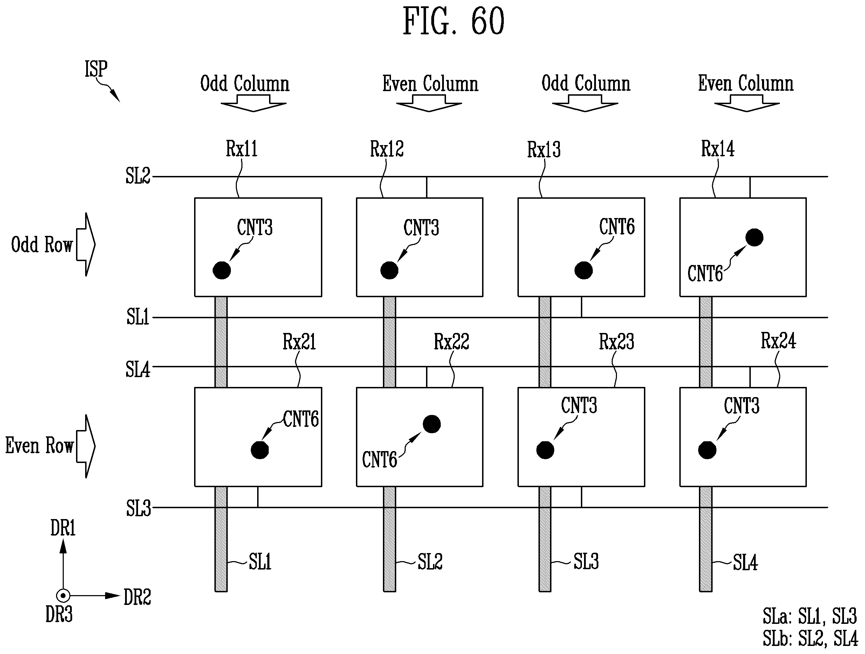

FIG. 60 is a drawing for explaining that the unit cells of FIG. 59A are connected to each other and the unit cells of FIG. 59B are connected to each other.

Touch sensing electrodes Rx11 to Rx24 are shown to represent each unit cell. For example, the eleventh touch sensing electrode Rx11 is illustrated as representing the unit cell positioned in the first row and first column. The 24th touch sensing electrode Rx24 is illustrated as representing the unit cell positioned in the second row and fourth column.

Each unit cell may be defined by a row and a column. For convenience of explanation, an example is given where eight unit cells are positioned in two rows and four columns in the input sensing part ISP. However, embodiments of the present disclosure are not limited thereto.

First to fourth sensing lines SL1 to SL4 shown as overall extending in the first direction DR1 represent portions of the a-th sensing line SLa and the b-th sensing line SLb extending in the first direction DR1 in FIG. 59A and FIG. 59B described above.

First to fourth sensing lines SL1 to SL4 shown as overall extending in the second direction DR2 represent portions of the a-th sensing line SLa and the b-th sensing line SLb extending in the second direction DR2 in FIG. 59A and FIG. 59B described above.

Therefore, referring to FIG. 60, the first sensing line SL1 extending in the first direction DR1 and the first sensing line SL1 extending in the second direction DR2 may be understood as one first sensing line SL1 on an equivalent circuit. The same applies to the second sensing line SL2, the third sensing line SL3, and the fourth sensing line SL4.

The eleventh touch sensing electrode Rx11 and the thirteenth touch sensing electrode Rx13 positioned in the first row and the odd columns may be connected to the first sensing line SL1. The eleventh touch sensing electrode Rx11 may be connected to the first sensing line SL1 via the third contact hole CNT3. The thirteenth touch sensing electrode Rx13 may be connected to the first sensing line SL1 via the sixth contact hole CNT6.

The twelfth touch sensing electrode Rx12 and the fourteenth touch sensing electrode Rx14 positioned in the first row and the even columns may be connected to the second sensing line SL2. The twelfth touch sensing electrode Rx12 may be connected to the second sensing line SL2 via the third contact hole CNT3. The fourteenth touch sensing electrode Rx14 may be connected to the second sensing line SL2 via the sixth contact hole CNT6.

The 21st touch sensing electrode Rx21 and the 23rd touch sensing electrode Rx23 positioned in the second row and the odd columns may be connected to the third sensing line SL3. The 21st touch sensing electrode Rx21 may be connected to the third sensing line SL3 via the sixth contact hole CNT6. The 23rd touch sensing electrode Rx23 may be connected to the third sensing line SL3 via the third contact hole CNT3.

The 22nd touch sensing electrode Rx22 and the 24th touch sensing electrode Rx24 positioned in the second row and the even columns may be connected to the fourth sensing line SL4. The 22nd touch sensing electrode Rx22 may be connected to the fourth sensing line SL4 via the sixth contact hole CNT6. The 24th touch sensing electrode Rx24 may be connected to the fourth sensing line SL4 via the third contact hole CNT3.

According to this, the touch sensing electrodes of the unit cells positioned in the same row and in odd columns may be connected to each other. Further, the touch sensing electrodes of the unit cells positioned in the same row and in even columns may be connected to each other. By this, noise may be easily removed from signals by sensing adjacent unit cells as a whole and differentially amplifying them.

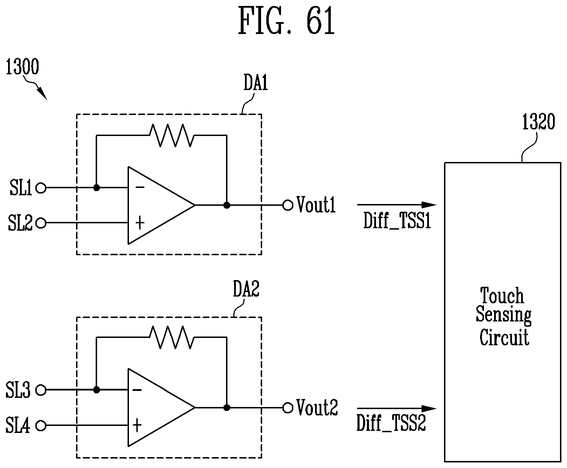

FIG. 61 illustrates an equivalent circuit diagram of an embodiment of differential amplification sensing of the unit cells of FIG. 59A and the unit cells of FIG. 59B.

Referring to FIG. 61, the touch circuit 1300 according to embodiments of the present disclosure may include a plurality of differential amplifiers DA1 and DA2. For example, the touch circuit 1300 may include a first differential amplifier DA1 and a second differential amplifier DA2.

The first differential amplifier DA1 may include input terminals which are connected to the first sensing line SL1 and the second sensing line SL2, respectively. For example, the first differential amplifier DA1 may include a first input terminal (shown as "-") connected to the first sensing line SL1 and a second input terminal (shown as "+") connected to the second sensing line SL2. In an embodiment, the first input terminal may be an inverting input terminal and the second input terminal may be a non-inverting input terminal. However, embodiments of the present disclosure are not limited thereto.

The first differential amplifier DA1 may differentially amplify a signal input from the first sensing line SL1 and a signal input from the second sensing line SL2 and output it at a first output terminal Vout1. A differentially amplified first touch sensing signal Diff_TSS1 may be input to the touch sensing circuit 1320.

The second differential amplifier DA2 may include input terminals which are connected to the third sensing line SL3 and the fourth sensing line SL4, respectively. For example, the second differential amplifier DA2 may include a first input terminal (shown as "-") connected to the third sensing line SL3 and a second input terminal (shown as "+") connected to the fourth sensing line SL4. In an embodiment, the first input terminal may be an inverting input terminal and the second input terminal may be a non-inverting input terminal. However, embodiments of the present disclosure are not limited thereto.

The second differential amplifier DA2 may differentially amplify a signal input from the third sensing line SL3 and a signal input from the fourth sensing line SL4 and output it at a second output terminal Vout2. A differentially amplified second touch sensing signal Diff_TSS2 may be input to the touch sensing circuit 1320.

By this, the touch sensing circuit 1320 according to embodiments of the present disclosure may remove noise from the signal. This may improve the accuracy of touch sensing.

In addition, referring further to FIG. 51 described above, the plurality of sensing lines SL1 to SL4 may be positioned within the display area AA to reduce the bezel area.

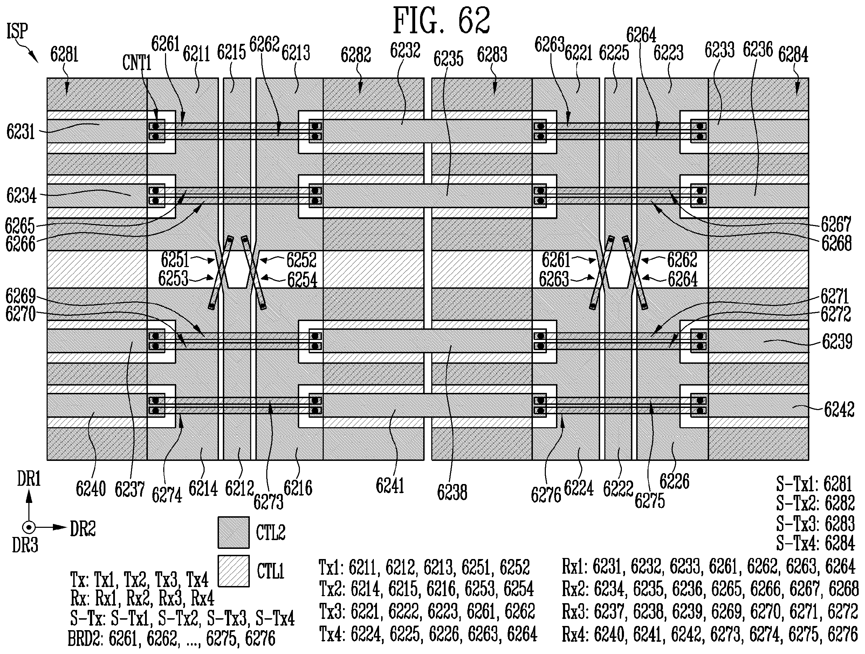

FIG. 62 illustrates an embodiment of an input sensing part ISP.

Referring to FIG. 62, the input sensing part ISP according to embodiments of the present disclosure may include a touch driving electrode Tx, a touch sensing electrode Rx, and a stylus pen driving electrode S-Tx.

The touch driving electrode Tx may include first to fourth touch driving electrodes Tx1 to Tx4.

The first to fourth touch driving electrodes Tx1 to Tx4 may be disposed to overall extend in the first direction DR1. The first touch driving electrode Tx1 and the second touch driving electrode Tx2 may be adjacent to each other and intersect each other in the first direction DR1 and the second direction DR2. The third touch driving electrode Tx3 and the fourth touch driving electrode Tx4 may be adjacent to each other and intersect each other in the first direction DR1 and the second direction DR2.

The first touch driving electrode Tx1 may include a first body part 6211, a second body part 6212, a third body part 6213, a first connection part 6251, and a second connection part 6252. The first body part 6211 and the second body part 6212 of the first touch driving electrode Tx1 may be connected through the first connection part 6251 and positioned adjacent to each other in a diagonal direction intersecting each of the first direction DR1 and the second direction DR2. The second body part 6212 and the third body part 6213 of the first touch driving electrode Tx1 may be connected through the second connection part 6252 and positioned adjacent to each other in a diagonal direction intersecting each of the first direction DR1 and the second direction DR2. Each of the first to third body parts 6211 to 6213, and the first and second connection parts 6251 and 6252 of the first touch driving electrode Tx1 may include a second conductive pattern CTL2.

The second touch driving electrode Tx2 may include a first body part 6214, a second body part 6215, a third body part 6216, a first connection part 6253, and a second connection part 6254. The first body part 6214 and the second body part 6215 of the second touch driving electrode Tx2 may be connected through the first connection part 6253 connected through a contact hole, and positioned adjacent to each other in a diagonal direction intersecting each of the first direction DR1 and the second direction DR2. The second body part 6215 and the third body part 6216 of the second touch driving electrode Tx2 may be connected through the second connection part 6254 connected via a contact hole, and positioned adjacent to each other in a diagonal direction intersecting each of the first direction DR1 and the second direction DR2. The first to third body parts 6214 to 6216 of the second touch driving electrode Tx2 may include the second conductive pattern CTL2. The first and second connection parts 6253 and 6254 of the second touch driving electrode Tx2 may include a first conductive pattern CTL1.

In the plan view, the second body part 6215 of the second touch driving electrode Tx2 may be positioned between the first body part 6211 and the third body part 6213 of the first touch driving electrode Tx1. Between the first body part 6214 and the third body part 6216 of the second touch driving electrode Tx2, the second body part 6212 of the first touch driving electrode Tx1 may be positioned. The first to third body parts 6211 to 6213 of the first touch driving electrode Tx1 may be positioned adjacent to the first to third body parts 6214 to 6216 of the second touch driving electrode Tx2 in the first direction DR1.

In the plan view, the first connection part 6251 of the first touch driving electrode Tx1 may be positioned to overlap the first connection part 6253 of the second touch driving electrode Tx2 in the third direction DR3. The second connection part 6252 of the first touch driving electrode Tx1 may be positioned to overlap the second connection part 6254 of the second touch driving electrode Tx2 in the third direction DR3.

The third touch driving electrode Tx3 may include a first body part 6221, a second body part 6222, a third body part 6223, a first connection part 6261, and a second connection part 6262. The first body part 6221 and the second body part 6222 of the third touch driving electrode Tx3 may be connected through the first connection part 6261 and positioned adjacent to each other in a diagonal direction intersecting each of the first direction DR1 and the second direction DR2. The second body part 6222 and the third body part 6223 of the third touch driving electrode Tx3 may be connected through the second connection part 6262 and positioned adjacent to each other in a diagonal direction intersecting each of the first direction DR1 and the second direction DR2. Each of the first to third body parts 6221 to 6223 and the first and second connection parts 6261 and 6262 of the third touch driving electrode Tx3 may include the second conductive pattern CTL2.

The fourth touch driving electrode Tx4 may include a first body part 6224, a second body part 6225, a third body part 6226, a first connection part 6263, and a second connection part 6264. The first body part 6224 and the second body part 6225 of the fourth touch driving electrode Tx4 may be connected through the first connection part 6263 connected via a contact hole and positioned adjacent to each other in a diagonal direction intersecting each of the first direction DR1 and the second direction DR2. The second body part 6225 and the third body part 6226 of the fourth touch driving electrode Tx4 may be connected through the second connection part 6264 connected via a contact hole and positioned adjacent to each other in a diagonal direction intersecting each of the first direction DR1 and the second direction DR2. The first to third body parts 6224 to 6226 of the fourth touch driving electrode Tx4 may include the second conductive pattern CTL2. The first and second connection parts 6263 and 6264 of the fourth touch driving electrode Tx4 may include the first conductive pattern CTL1.

In the plan view, between the first body part 6221 and the third body part 6223 of the third touch driving electrode Tx3, the second body part 6225 of the fourth touch driving electrode Tx4 may be positioned. Between the first body part 6224 and the third body part 6226 of the fourth touch driving electrode Tx4, the second body part 6222 of the third touch driving electrode Tx3 may be positioned. The first to third body parts 6221 to 6223 of the third touch driving electrode Tx3 may be positioned adjacent to the first to third body parts 6224 to 6226 of the fourth touch driving electrode Tx4 in the first direction DR1.

In the plan view, the first connection part 6261 of the third touch driving electrode Tx3 may be positioned to overlap the first connection part 6263 of the fourth touch driving electrode Tx4 in the third direction DR3. The second connection part 6262 of the third touch driving electrode Tx3 may be positioned to overlap the second connection part 6264 of the fourth touch driving electrode Tx4 in the third direction DR3.

For each of the first to fourth touch driving electrodes Tx1 to Tx4, each of the first body part and the third body part may have an overall shape of "E" or a shape which is inverted left and right thereof. The second body part may have an overall shape of "I". For example, in the first touch driving electrode Tx1, the first body part 6211 may have a shape which is a left-right inversion of an "E", the second body part 6212 may have an "I" shape, and the third body part 6213 may have an "E" shape. In groove areas provided in the first body part and the third body part of each of the first to fourth touch driving electrodes Tx1 to Tx4, the body parts of the touch sensing electrodes Rx may be positioned.

The touch sensing electrode Rx may include first to fourth touch sensing electrodes Rx1 to Rx4.

Each of the first to fourth touch sensing electrodes Rx1 to Rx4 may be disposed to overall extend in the second direction DR2. The first to fourth touch sensing electrodes Rx1 to Rx4 may be disposed adjacent to each other in the first direction DR1. For example, the first touch sensing electrode Rx1, the second touch sensing electrode Rx2, the third touch sensing electrode Rx3, and the fourth touch sensing electrode Rx4 may be sequentially disposed from the top to the bottom of the input sensing part ISP.

Each of the first to fourth touch sensing electrodes Rx1 to Rx4 may include body parts and connection parts. The body parts of each of the first to fourth touch sensing electrodes Rx1 to Rx4 may include the second conductive pattern CTL2. The connection parts of each of the first to fourth touch sensing electrodes Rx1 to Rx4 may include the first conductive pattern CTL1.

The first touch sensing electrode Rx1 may include first to third body parts 6231 to 6233 and first to fourth connection parts 6261 to 6264.

The first body part 6231 of the first touch sensing electrode Rx1 may be positioned in a groove area provided in the first body part 6211 of the first touch driving electrode Tx1. The second body part 6232 may be positioned in a groove area provided in the third body part 6213 of the first touch driving electrode Tx1 and in a groove area provided in the first body part 6221 of the third touch driving electrode Tx3. The third body part 6233 may be positioned in a groove area provided in the third body part 6223 of the third touch driving electrode Tx3. Each of the first to third body parts 6231 to 6233 of the first touch sensing electrode Rx1 may have a rectangular shape having a long side overall extending in the second direction DR2 and a short side overall extending in the first direction DR1.

The first connection part 6261 and second connection part 6262 of the first touch sensing electrode Rx1 may be configured to connect the first body part 6231 and the second body part 6232 of the first touch sensing electrode Rx1. The first connection part 6261 and the second connection part 6262 may be disposed adjacent to each other in the first direction DR1. Each of the first connection part 6261 and the second connection part 6262 of the first touch sensing electrode Rx1 may be connected via a first contact hole CNT1 provided in each of the first body part 6231 and the second body part 6232.

The third connection part 6263 and the fourth connection part 6264 of the first touch sensing electrode Rx1 may be configured to connect the second body part 6232 and the third body part 6233 of the first touch sensing electrode Rx1. The third connection part 6263 and the fourth connection part 6264 may be disposed adjacent to each other in the first direction DR1. Each of the third connection part 6263 and the fourth connection part 6264 of the first touch sensing electrode Rx1 may be connected via a first contact hole CNT1 provided in each of the second body part 6232 and the third body part 6233.

The second touch sensing electrode Rx2 may include first to third body parts 6234 to 6236 and first to fourth connection parts 6265 to 6268.

The first body part 6234 of the second touch sensing electrode Rx2 may be positioned in a groove area provided in the first body part 6211 of the first touch driving electrode Tx1. The second body part 6235 may be positioned in a groove area provided in the third body part 6213 of the first touch driving electrode Tx1 and in a groove area provided in the first body part 6221 of the third touch driving electrode Tx3. The third body part 6236 may be positioned in a groove area provided in the third body part 6223 of the third touch driving electrode Tx3. Each of the first to third body parts 6234 to 6236 of the second touch sensing electrode Rx2 may have a rectangular shape with a long side overall extending in the second direction DR2 and a short side overall extending in the first direction DR1.

The first connection part 6265 and the second connection part 6266 of the second touch sensing electrode Rx2 may be configured to connect the first body part 6234 and the second body part 6235 of the second touch sensing electrode Rx2. The first connection part 6265 and the second connection part 6266 may be positioned adjacent to each other in the first direction DR1. Each of the first connection part 6265 and the second connection part 6266 of the second touch sensing electrode Rx2 may be connected via a first contact hole CNT1 provided in each of the first body part 6234 and the second body part 6235.

The third connection part 6267 and the fourth connection part 6268 of the second touch sensing electrode Rx2 may be configured to connect the second body part 6235 and the third body part 6236 of the second touch sensing electrode Rx2. The third connection part 6267 and the fourth connection part 6268 may be disposed adjacent to each other in the first direction DR1. Each of the third connection part 6267 and the fourth connection part 6268 of the second touch sensing electrode Rx2 may be connected via a first contact hole CNT1 provided in each of the second body part 6235 and the third body part 6236.

The third touch sensing electrode Rx3 may include first to third body parts 6237 to 6239 and first to fourth connection parts 6269 to 6272.

The first body part 6237 of the third touch sensing electrode Rx3 may be positioned in a groove area provided in the first body part 6214 of the second touch driving electrode Tx2. The second body part 6238 may be positioned in a groove area provided in the third body part 6216 of the second touch driving electrode Tx2 and in a groove area provided in the first body part 6224 of the fourth touch driving electrode Tx4. The third body part 6239 may be positioned in a groove area provided in the third body part 6226 of the fourth touch driving electrode Tx4. Each of the first to third body parts 6237 to 6239 of the third touch sensing electrode Rx3 may have a rectangular shape with a long side overall extending in the second direction DR2 and a short side overall extending in the first direction DR1.

The first connection part 6269 and the second connection part 6270 of the third touch sensing electrode Rx3 may be configured to connect the first body part 6237 and the second body part 6238 of the third touch sensing electrode Rx3. The first connection part 6269 and the second connection part 6270 may be disposed adjacent to each other in the first direction DR1. Each of the first connection part 6269 and the second connection part 6270 of the third touch sensing electrode Rx3 may be connected via a first contact hole CNT1 provided in each of the first body part 6237 and the second body part 6238.

The third connection part 6271 and the fourth connection part 6272 of the third touch sensing electrode Rx3 may be configured to connect the second body part 6238 and the third body part 6239 of the third touch sensing electrode Rx3. The third connection part 6271 and the fourth connection part 6272 may be disposed adjacent to each other in the first direction DR1. Each of the third connection part 6271 and the fourth connection part 6272 of the third touch sensing electrode Rx3 may be connected via a first contact hole CNT1 provided in each of the second body part 6238 and the third body part 6239.

The fourth touch sensing electrode Rx4 may include first to third body parts 6240 to 6242 and first to fourth connection parts 6273 to 6276.

The first body part 6240 of the fourth touch sensing electrode Rx4 may be positioned in a groove area provided in the first body part 6214 of the second touch driving electrode Tx2. The second body part 6241 may be positioned in a groove area provided in the third body part 6216 of the second touch driving electrode Tx2 and in a groove area provided in the first body part 6224 of the fourth touch driving electrode Tx4. The third body part 6242 may be positioned in a groove area provided in the third body part 6226 of the fourth touch driving electrode Tx4. Each of the first to third body parts 6240 to 6242 of the fourth touch sensing electrode Rx4 may have a rectangular shape with a long side overall extending in the second direction DR2 and a short side overall extending in the first direction DR1.

The first connection part 6273 and the second connection part 6274 of the fourth touch sensing electrode Rx4 may be configured to connect the first body part 6240 and the second body part 6241 of the fourth touch sensing electrode Rx4. The first connection part 6273 and the second connection part 6274 may be disposed adjacent to each other in the first direction DR1. Each of the first connection part 6273 and the second connection part 6274 of the fourth touch sensing electrode Rx4 may be connected via a first contact hole CNT1 provided in each of the first body part 6240 and the second body part 6241.

The third connection part 6275 and the fourth connection part 6276 of the fourth touch sensing electrode Rx4 may be configured to connect the second body part 6241 and the third body part 6242 of the fourth touch sensing electrode Rx4. The third connection part 6275 and the fourth connection part 6276 may be disposed adjacent to each other in the first direction DR1. The third connection part 6275 and the fourth connection part 6276 of the fourth touch sensing electrode Rx4 may be connected via a first contact hole CNT1 provided in each of the second body part 6241 and third body part 6242.

The stylus pen driving electrode S-Tx may include first to fourth stylus pen driving electrodes S-Tx1 to S-Tx4. Each of the first to fourth stylus pen driving electrodes S-Tx1 to S-Tx4 may include a first conductive pattern CTL1. Each of the first to fourth stylus pen driving electrodes S-Tx1 to S-Tx4 may be disposed to overall extend in the first direction DR1. The first to fourth stylus pen driving electrodes S-Tx1 to S-Tx4 may be positioned spaced apart from each other in the second direction DR2.

In the plan view, the first stylus pen driving electrode S-Tx1 may be positioned overlapping the first body part 6211 of the first touch driving electrode Tx1, the first body part 6214 of the second touch driving electrode Tx2, the first body part 6231 of the first touch sensing electrode Rx1, the first body part 6234 of the second touch sensing electrode Rx2, the first body part 6237 of the third touch sensing electrode Rx3, and the first body part 6240 of the fourth touch sensing electrode Rx4 in the third direction DR3.

**In** the plan view, the second stylus pen driving electrode S-Tx2 may be positioned overlapping the third body part 6213 of the first touch driving electrode Tx1, the third body part 6216 of the second touch driving electrode Tx2, the second body part 6232 of the first touch sensing electrode Rx1, the second body part 6235 of the second touch sensing electrode Rx2, the second body part 6238 of the third touch sensing electrode Rx3, and the second body part 6241 of the fourth touch sensing electrode Rx4 in the third direction DR3.

**In** the plan view, the third stylus pen driving electrode S-Tx3 may be positioned overlapping the first body part 6221 of the third touch driving electrode Tx3, the first body part 6224 of the fourth touch driving electrode Tx4, the second body part 6232 of the first touch sensing electrode Rx1, the second body part 6235 of the second touch sensing electrode Rx2, the second body part 6238 of the third touch sensing electrode Rx3, and the second body part 6241 of the fourth touch sensing electrode Rx4 in the third direction DR3.

In the plan view, the fourth stylus pen driving electrode S-Tx4 may be positioned overlapping the third body part 6223 of the third touch driving electrode Tx3, the third body part 6226 of the fourth touch driving electrode Tx4, the third body part 6233 of the first touch sensing electrode Rx1, the third body part 6236 of the second touch sensing electrode Rx2, the third body part 6239 of the third touch sensing electrode Rx3, and the third body part 6242 of the fourth touch sensing electrode Rx4 in the third direction DR3.

In the plan view, each of the first to fourth stylus pen driving electrodes S-Tx1 to S-Tx4 may be positioned adjacent to the first contact hole CNT1 in the second direction DR2.

In the plan view, between the first stylus pen driving electrode S-Tx1 and the second stylus pen driving electrode S-Tx2, the first and second connection parts 6251 and 6252 of the first touch driving electrode Tx1 and the first and second connection parts 6253 and 6254 of the second touch driving electrode Tx2 may be positioned.

In the plan view, between the third stylus pen driving electrode S-Tx3 and the fourth stylus pen driving electrode S-Tx4, the first and second connection parts 6261 and 6262 of the third touch driving electrode Tx3 and the first and second connection parts 6263 and 6264 of the fourth touch driving electrode Tx4 may be positioned.

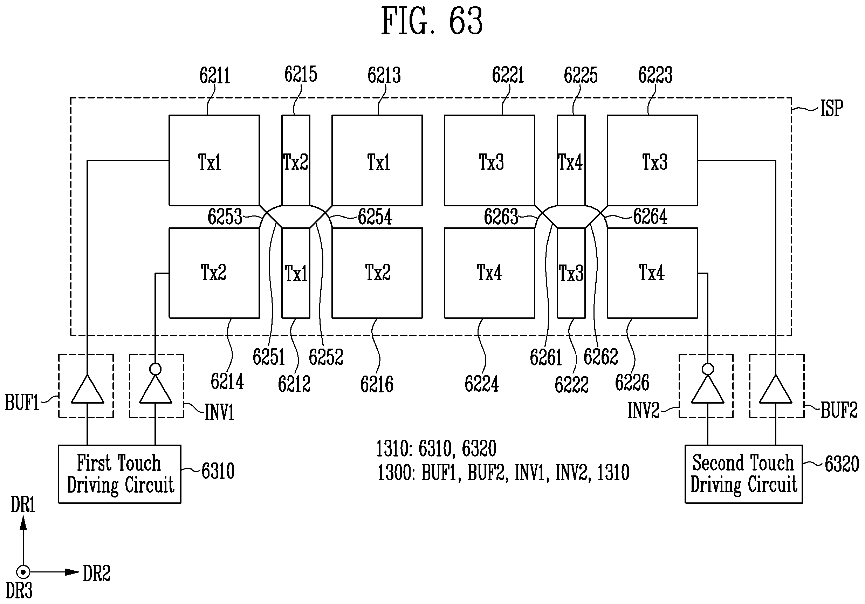

FIG. 63 is a diagram illustrating the touch driving electrodes Tx1 to Tx4 of the input sensing part ISP of FIG. 62.

For ease of explanation, some configurations of the input sensing part ISP have not been shown.

The first touch driving electrode Tx1 may be connected to a first buffer BUF1, and the second touch driving electrode Tx2 may be connected to a first inverter INV1. The first buffer BUF1 and the first inverter INV1 may be connected to a first touch driving circuit 6310. When a positive phase touch driving signal is output through the first buffer BUF1, a reversed phase touch driving signal may be output through the first inverter INV1.

According to this, the signals of positive and reversed phases are input from the first touch driving electrode Tx1 and the second touch driving electrode Tx2 adjacent thereto, respectively, so that a touch sensing signal robust against noise may be received during differential amplification.

The third touch driving electrode Tx3 may be connected to a second buffer BUF2, and the fourth touch driving electrode Tx4 may be connected to a second inverter INV2. The second buffer BUF2 and the first inverter INV2 may be connected to a second touch driving circuit 6320. When a positive phase touch driving signal is output through the second buffer BUF2, a reversed phase touch driving signal may be output through the second inverter INV2.

According to this, the signals of positive phase and reversed phase are input from the third touch driving electrode Tx3 and the fourth touch driving electrode Tx4 adjacent thereto, respectively, so that a touch sensing signal robust against noise may be received during differential amplification.

The first touch driving circuit 6310 and the second touch driving circuit 6320 may be included in the touch driving circuit 1310. In an embodiment, the first touch driving circuit 6310 and the second touch driving circuit 6320 may each be implemented as different integrated circuits. In an embodiment, the first touch driving circuit 6310 and the second touch driving circuit 6320 may be functionally separated according to drive timing within one integrated circuit.

The touch circuit 1300 according to embodiments of the present disclosure may include the first buffer BUF1, the second buffer BUF2, the first inverter INV1, the second inverter INV2, and the touch driving circuit 1310.

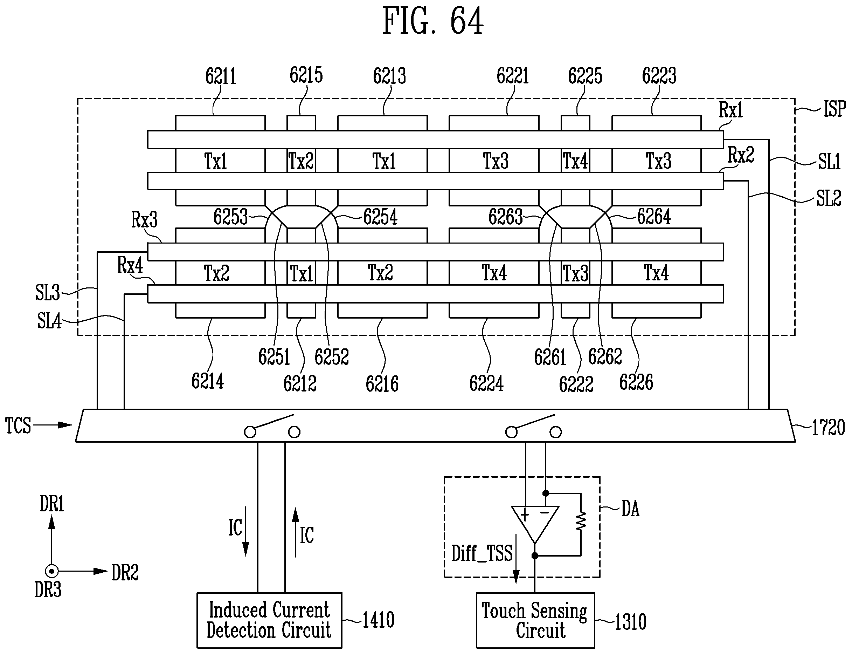

FIG. 64 is a diagram illustrating the touch sensing electrodes Rx1 to Rx4 of the input sensing part ISP of FIG. 62.

For ease of explanation, some configurations of the input sensing part ISP have not been shown.

The first to fourth sensing lines SL1 to SL4 may be connected to the switching circuit 1720. The switching circuit 1720 may have operation timing controlled by the touch control signal TCS. For descriptions of the switching circuit 1720 and the touch control signal TCS, refer to the description with respect to FIG. 17.

Each of the first to fourth touch sensing electrodes Rx1 to Rx4 may be positioned to overlap with the first to fourth touch driving electrodes Tx1 to Tx4 in the third direction DR3. Each of the first to fourth touch sensing electrodes Rx1 to Rx4 may form mutual capacitance with the first to fourth touch driving electrodes Tx1 to Tx4. By this, the touch sensing function may be performed.

To improve the accuracy of touch sensing, a differential amplifier DA may be provided. For a description of the differential amplifier DA, refer to the description of the differential amplifiers DA1, DA2 with respect to FIG. 61. By this, the differentially amplified touch sensing signal Diff_TSS may be input to the touch sensing circuit 1310.

In addition, in the FIG. 62 described above, the stylus pen driving electrode S-Tx may overall extend in the first direction DR1. Referring to the FIG. 15 described above, the horizontal coordinate of the stylus pen PN may be calculated by using the inductive current IC input from the stylus pen driving electrode S-Tx extending in the first direction DR1. Referring to the FIG. 16 described above, in embodiments of the present disclosure, the induced current IC may be written through at least two of the first to fourth sensing lines SL1 to SL4. By this, the vertical coordinate of the stylus pen PN may be calculated. The generated induced current IC may be input to the induced current detection circuit 1410 via the switching circuit 1720.

By this, the accuracy of touch sensing may be improved and the stylus pen may be sensed. In addition, a thin display device DD (see FIG. 1) equipped with the touch sensing function and the stylus pen sensing function may be provided.

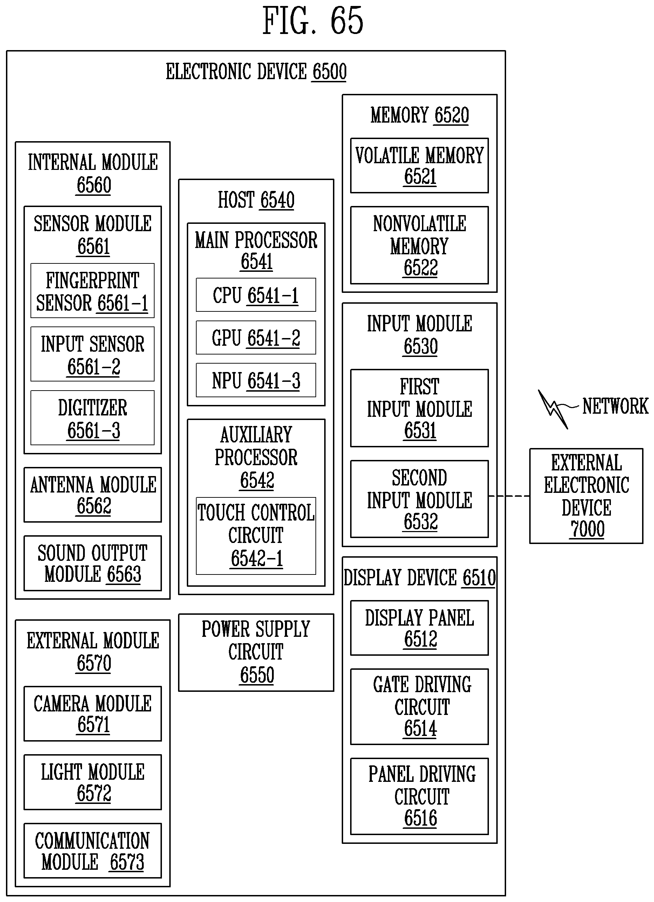

FIG. 65 is a system block diagram of an electronic device 6500 according to embodiments of the disclosure.

Referring to FIG. 65, the electronic device 6500 according to embodiments of the disclosure may output various pieces of information through the display device 6510. When the host 6540 executes an application stored in a memory 6520, the display device 6510 may provide application information to a user through the display panel 6512. The display device 6510 may correspond to the display device DD of FIG. 1.

The host 6540 may obtain an external input through an input module 6530, a sensor module 6561, or the like and execute an application corresponding to the external input. For example, when the user of the electronic device 6500 selects a camera icon or a camera application displayed on the display panel 6512, the host 6540 may obtain a user input through an input sensor 6561-2 and activate a camera module 6571. The host 6540 may transfer image data corresponding to a captured image obtained through the camera module 6571 to the display device 6510. The display device 6510 may display an image corresponding to the captured image through the display panel 6512.

As another example, when personal information authentication is executed in the display device 6510, a fingerprint sensor 6561-1 may obtain input fingerprint information as input data. The host 6540 may compare the input data obtained through the fingerprint sensor 6561-1 with authentication data pre-stored in the memory 6520 and execute an application according to a comparison result. The display device 6510 may display information executed according to a logic of the application through the display panel 6512. The fingerprint sensor 6561-1 may be disposed to obtain the fingerprint information from at least a partial area of the entire area of the display device 6510 or the display panel 6512.

As still another example, when a music streaming icon displayed on the display device 6510 is selected, the host 6540 may obtain a user input through the input sensor 6561-2 and activate a music streaming application stored in the memory 6520. When a music execution command is input in the music streaming application, the host 6540 may activate a sound output module 6563 to provide sound information corresponding to the music execution command to the user of the electronic device 6500.

In the above, an operation of the electronic device 6500 is briefly described. Hereinafter, a configuration of the electronic device 6500 is described in detail. Some of configurations of the electronic device 6500 to be described later may be integrated and provided as one configuration, and one configuration may be separated into two or more configurations and provided.

The electronic device 6500 may communicate with an external electronic device 7000 through a network for example, a short-range wireless communication network or a long-range wireless communication network. According to an embodiment, the electronic device 6500 may include the host 6540, the memory 6520, the input module 6530, the display device 6510, a power supply circuit 6550, an internal module 6560, an external module 6570, and the like. According to an embodiment, in the electronic device 6500, at least one of the above-described components may be omitted or one or more other components may be added. According to an embodiment, some of the above-described components for example, the sensor module 6561, an antenna module 6562, or the sound output module 6563 may be integrated into another component for example, the display device 6510.

The host 6540 may execute software to control at least another component for example, a hardware or software component of the electronic device 6500 connected to the host 6540, and perform various data processing or operations. According to an embodiment, as at least a portion of the data processing or operation, the host 6540 may store a command or data received from another component for example, the input module 6530, the sensor module 6561, a communication module 6573, or the like in a volatile memory 6521 and process the command or the data stored in the volatile memory 6521, and store result data obtained by processing in a nonvolatile memory 6522.

The host 6540 may include a main processor 6541 and an auxiliary processor 6542. The main processor 6541 may include one or more of a central processing unit (CPU) 6541-1 or an application processor (AP). The main processor 6541 may further include any one of a graphic processing unit (GPU) 6541-2, a communication processor (CP), and an image signal processor (ISP). The main processor 6541 may further include a neural processing unit (NPU) 6541-3. The NPU 6541-3 is a processor specialized in processing an artificial intelligence model, and the artificial intelligence model may be generated through machine learning. The artificial intelligence model may include a plurality of artificial neural network layers. The artificial neural network may be one of a deep neural network (DNN), a convolutional neural network (CNN), a recurrent neural network (RNN), a restricted boltzmann machine (RBM), a deep belief network (DBN), a bidirectional recurrent deep neural network (BRDNN), a deep Q-network, or a combination of two or more of the above, but is not limited to the above-described example. Additionally or alternatively, the artificial intelligence model may include a software structure in addition to a hardware structure. At least two of the above-described processing units and processors may be implemented as one integrated configuration for example, a single chip, or each may be implemented as an independent configuration for example, a plurality of chips.

The auxiliary processor 6542 may further include a touch control circuit 6542-1. The touch control circuit 6542-1 may supply a touch signal to the input sensor 6561-2 and receive a sensing signal from the input sensor 6561-2 in response to the touch signal.

The memory 6520 may store various data used by at least one component for example, the host 6540 or the sensor module 6561 of the electronic device 6500, and input data or output data for a command related thereto. In addition, various setting data corresponding to a setting of the user may be stored in the memory 6520. The memory 6520 may include at least one of the volatile memory 6521 and the nonvolatile memory 6522.

The input module 6530 may receive a command or data to be used by a component for example, the host 6540, the sensor module 6561, or the sound output module 6563 of the electronic device 6500 from an exterior source for example, the user or the external electronic device 7000 of the electronic device 6500.

The input module 6530 may include a first input module 6531 to which a command or data is input from the user and a second input module 6532 to which a command or data is input from the external electronic device 7000. The first input module 6531 may include a microphone, a mouse, a keyboard, a key for example, a button, or a pen for example, a passive pen or an active pen. The second input module 6532 may support a designated protocol capable of connecting to the external electronic device 7000 by wire or wirelessly. According to an embodiment, the second input module 6532 may include, for example, a high definition multimedia interface (HDMI), a universal serial bus (USB) interface, an secure digital (SD) card interface, or an audio interface. The second input module 6532 may include a connector capable of physically connecting to the external electronic device 7000, an HDMI connector, a USB connector, an SD card connector, an audio connector for example, a headphone connector, or the like.

The display device 6510 may visually provide information to the user of the electronic device 6500. The display device 6510 may include the display panel 6512, the gate driving circuit 6514, the panel driving circuit 6516, and the like. The display device 6510 may further include mechanical components such as a window WIN (see FIG. 3), a chassis, and a bracket for protecting the display panel 6512.

The display panel 6512 may be implemented as a liquid crystal display (LCD) panel, an organic light emitting display (OLED) panel, an inorganic light emitting display panel, or the like, and a type of the display panel 6512 is not particularly limited. The display panel 6512 may be a rigid type or a flexible type that may be rolled or folded. The display device 6510 may further include a supporter, a bracket, or the like supporting the display panel 6512. The display device 6510 may further include a heat dissipation member and the like.

The gate driving circuit 6514 may be mounted on the display panel 6512 as a driving chip. According to an embodiment, the gate driving circuit 6514 may be formed internally in the display panel 6512. For example, the gate driving circuit 6514 may be implemented as an amorphous silicon thin film transistor (TFT) gate driver circuit (ASG), a low temperature polycrystalline silicon TFT gate driver circuit (LTPSG), an oxide semiconductor TFT gate driver circuit (OSG), or the like built in the display panel 6512. The gate driving circuit 6514 may receive a control signal for example, a scan driving circuit control signal, a light emitting driving circuit control signal, and the like from the host 6540 and output the gate signals to the display panel 6512 in response to the control signal. The gate driving circuit 6514 may include the scan driving circuit SDV (see FIG. 6) or the light emission driving circuit EDV (see FIG. 6).

The panel driving circuit 6516 may include the data driver DDV (see FIG. 6).

The power supply circuit 6550 may supply power to a component of the electronic device 6500. The power supply circuit 6550 may include a battery that charges a power voltage. The battery may include a non-rechargeable primary cell, a rechargeable secondary cell or fuel cell, or the like. The power supply circuit 6550 may include a power management integrated circuit (PMIC). The PMIC may supply optimized power to each of the above-described configurations and configurations to be described later. The power supply circuit 6550 may include a wireless power transmission/reception member to the battery. The wireless power transmission/reception member may include a plurality of antenna radiators of a coil form.

The electronic device 6500 may include the internal module 6560 and the external module 6570. The internal module 6560 may include the sensor module 6561, the antenna module 6562, the sound output module 6563, and the like. The external module 6570 may include the camera module 6571, a light module 6572, the communication module 6573, and the like.

The sensor module 6561 may sense an input by a body of the user or an input by a pen among the first input module 6531, and may generate an electrical signal or a data value corresponding to the input. The sensor module 6561 may include at least one of the fingerprint sensor 6561-1, the input sensor 6561-2, and a digitizer 6561-3.

The fingerprint sensor 6561-1 may generate a data value corresponding to a fingerprint of the user. The fingerprint sensor 6561-1 may include any one of an optical type fingerprint sensor or a capacitive type fingerprint sensor.

The input sensor 6561-2 may generate a data value corresponding to coordinate information of the input by the body of the user or the pen. The input sensor 6561-2 may generate a capacitance change amount by the input as the data value. The input sensor 6561-2 may sense an input by the passive pen or may transmit/receive data to and from the active pen. The input sensor 6561-2 may include at least one of the touch driving electrode Tx (see FIG. 12), the touch sensing electrode Rx (see FIG. 12), the stylus pen driving electrode S-Tx (see FIG. 8), and the stylus pen sensing electrode S-Rx (see FIG. 27).

The input sensor 6561-2 may measure a biometric signal such as blood pressure, water, or body fat. For example, when the user of the electronic device 6500 touches a sensor layer or a sensing panel with a body part and does not move during a certain time, the input sensor 6561-2 may sense the biometric signal based on a change of an electric field or the like by the body part and output information desired by the user to the display device 6510.

The digitizer 6561-3 may generate a data value corresponding to coordinate information of the input by a pen. The digitizer 6561-3 may generate an electromagnetic change amount by an input as the data value. The digitizer 6561-3 may sense an input by a passive pen or transmit or receive data to or from the active pen.

At least one of the fingerprint sensor 6561-1, the input sensor 6561-2, and the digitizer 6561-3 may be implemented as a sensor layer formed on the display panel 6512 through a successive process. At least one of the fingerprint sensor 6561-1, the input sensor 6561-2, and the digitizer 6561-3 may be disposed on one side of the display panel 6512 (for example, on the display panel 6512), and any one of the fingerprint sensor 6561-1, the input sensor 6561-2, and the digitizer 6561-3, for example, the digitizer 6561-3 may be disposed on another side of the display panel 6512 (for example, under the display panel 6512).

At least two of the fingerprint sensor 6561-1, the input sensor 6561-2, and the digitizer 6561-3 may be formed to be integrated into one sensing panel through the same process. When at least two of the fingerprint sensor 6561-1, the input sensor 6561-2, and the digitizer 6561-3 are integrated into one sensing panel, the sensing panel may be disposed between the display panel 6512 and the window WIN (see FIG. 3) disposed above the display panel 6512. According to an embodiment, the sensing panel may be disposed on the window WIN. A position of the sensing panel is not particularly limited.

At least one of the fingerprint sensor 6561-1, the input sensor 6561-2, and the digitizer 6561-3 may be embedded in the display panel 6512. That is, at least one of the fingerprint sensor 6561-1, the input sensor 6561-2, and the digitizer 6561-3 may be simultaneously formed through a process of forming the elements for example, the light emitting element, the transistor, and the like included in the display panel 6512.

The sensor module 6561 may further generate an electrical signal or a data value corresponding to an internal state or an external state of the electronic device 6500. The sensor module 6561 may further include, for example, a gesture sensor, a gyro sensor, a barometric pressure sensor, a magnetic sensor, an acceleration sensor, a grip sensor, a proximity sensor, a color sensor, an infrared (IR) sensor, a biometric sensor, a temperature sensor, a humidity sensor, an illuminance sensor, or the like.

The antenna module 6562 may include one or more antennas for transmitting or receiving a signal to / from free space. According to an embodiment, the communication module 6573 may transmit a signal to an external electronic device 7000 or receive a signal from an external electronic device 7000 through an antenna suitable for a communication method. An antenna pattern of the antenna module 6562 may be integrated into one configuration for example, the display panel 6512 of the display device 6510 or the input sensor 6561-2.

The sound output module 6563 is a device for outputting a sound signal to the exterior of the electronic device 6500, and may include, for example, a speaker used for general purposes such as multimedia playback or recording playback, a receiver used exclusively for receiving a call, and the like. According to an embodiment, the receiver may be formed integrally with or separately from the speaker. A sound output pattern of the sound output module 6563 may be integrated into the display device 6510.

The camera module 6571 may capture a still image for example, a photograph and a moving image. According to an embodiment, the camera module 6571 may include one or more lenses, an image sensor, an image signal processor, or the like. The camera module 6571 may further include an infrared camera capable of measuring presence or absence of the user, a user's position, a user's gaze, and the like.

The light module 6572 may provide light. The light module 6572 may include a light emitting diode or a xenon lamp. The light module 6572 may operate in conjunction with the camera module 6571 or may operate independently.

The communication module 6573 may support establishment of a wired or wireless communication channel between the electronic device 6500 and the external electronic device 7000 and communication performance through the established communication channel. The communication module 6573 may include any one or both of a wireless communication module such as a cellular communication module, a short-range wireless communication module, or a global navigation satellite system (GNSS) communication module, and a wired communication module such as a local area network (LAN) communication module or a power line communication module. The communication module 6573 may communicate with the external electronic device 7000 through a short-range communication network such as Bluetooth, Wireless fidelity (WiFi) direct, or infrared data association (IrDA), or a long-range communication network such as a cellular network, the Internet, or a computer network for example, LAN or wide area network (WAN). The above-described various types of communication modules 6573 may be implemented as a single chip or as separate chips.

The input module 6530, the sensor module 6561, the camera module 6571, and the like may be used to control an operation of the display device 6510 in conjunction with the host 6540.

The host 6540 may output a command or data to the display device 6510, the sound output module 6563, the camera module 6571, or the light module 6572 based on input data received from the input module 6530. For example, the host 6540 may generate image data in response to the input data input through a mouse, an active pen, or the like and output the image data to the display device 6510, or generate command data in response to the input data and output the command data to the camera module 6571, the light module 6572, or the like. When the input data is not received from the input module 6530, the host 6540 may convert an operation mode of the electronic device 6500 to a low power mode or a sleep mode to reduce power consumed in the electronic device 6500.

The host 6540 may output a command or data to the display device 6510, the sound output module 6563, the camera module 6571, or the light module 6572 based on sensing data received from the sensor module 6561. For example, the host 6540 may compare authentication data input by the fingerprint sensor 6561-1 with authentication data pre-stored in the memory 6520 and then execute an application according to a comparison result. The host 6540 may execute the command based on sensing data sensed by the input sensor 6561-2 or the digitizer 6561-3, or output corresponding image data to the display device 6510. In an embodiment in which the sensor module 6561 includes a temperature sensor, the host 6540 may receive temperature data for a measured temperature from the sensor module 6561 and further perform luminance correction or the like on the image data based on the received temperature data.

The host 6540 may receive measurement data for presence or absence of the user, a position of the user, a gaze of the user, and the like, from the camera module 6571. The host 6540 may further perform luminance correction or the like on the image data based on the measurement data.

Some of the above-described components may be connected to each other through a communication method between peripheral devices, for example, a bus, general purpose input/output (GPIO), a serial peripheral interface (SPI), a mobile industry processor interface (MIPI), or an ultra path interconnect (UPI) link to exchange a signal for example, a command or data with each other. The host 6540 may communicate with the display device 6510 through a mutually agreed interface, for example, may use any one of the above-described communication methods, and is not limited to the above-described communication method.

As discussed, embodiments can provide a sensing panel comprising: a base layer; a stylus pen driving electrode positioned over the base layer and comprising a portion of a first conductive pattern; a touch insulating layer positioned over the first conductive pattern; a touch driving electrode positioned over the touch insulating layer, comprising a portion of a second conductive pattern extending in a first direction, and positioned to overlap the stylus pen driving electrode in a third direction in a plan view; and a touch sensing electrode positioned over the touch insulating layer, wherein the touch sensing electrode comprises a portion of the second conductive pattern extending in a second direction different from the first direction, and wherein the touch sensing electrode is positioned to overlap the stylus pen driving electrode in the third direction in the plan view.

As mentioned above, the stylus pen driving electrode may be formed as a portion of the first conductive pattern, and the touch driving electrode may be formed as a portion of the second conductive pattern extending in the first direction. The touch sensing electrode may be formed of a portion of the second conductive pattern extending in the second direction.

The stylus pen driving electrode may comprise a portion of the first conductive pattern extending in the first direction or a portion of the first conductive pattern extending in the second direction.

The sensing panel may further comprise a stylus pen sensing electrode positioned on the base layer and comprising a portion of the first conductive pattern, for example extending in the second direction.

Embodiments can provide a display device comprising: a sensing panel configured to sense a first input and a second input; a pen charging circuit configured to write a pen charging signal for detecting the first input to the sensing panel; a touch driving circuit configured to write a touch driving signal for detecting the second input to the sensing panel; an induced current detection circuit configured to detect an induced current corresponding to the first input from the sensing panel; and a touch sensing circuit configured to detect a touch sensing signal corresponding to the second input from the sensing panel, wherein the sensing panel is according to any of the above described embodiments.

Embodiments can provide an electronic device comprising: a host arranged to obtain a user input; and a sensing panel according to any of the above described embodiments.

According to a sensing panel according to embodiments of the present disclosure, a display device including the same, and an electronic device including the same, it is possible to provide a thin sensing panel while providing touch sensing and stylus pen sensing functions.

The drawings referred to and the detailed description of the invention described are illustrative of the present disclosure, and are used for the purpose of illustrating the present disclosure and are not intended to limit the meaning or the scope of the present disclosure described in the appended claims. Therefore, a person skilled in the art will understand that various modifications and other equivalent embodiments are possible therefrom. Accordingly, the true scope of technical protection of the present disclosure should be determined by the appended claims.

## Claims

1. A sensing panel comprising:
a base layer;
a stylus pen driving electrode positioned over the base layer and comprising a portion of a first conductive pattern;
a touch insulating layer positioned over the first conductive pattern;
a touch driving electrode positioned over the touch insulating layer, comprising a portion of a second conductive pattern extending in a first direction, and positioned to overlap the stylus pen driving electrode in a third direction in a plan view; and
a touch sensing electrode positioned over the touch insulating layer, wherein the touch sensing electrode comprises a portion of the second conductive pattern extending in a second direction different from the first direction, and wherein the touch sensing electrode is positioned to overlap the stylus pen driving electrode in the third direction in the plan view.

2. The sensing panel according to claim 1, wherein the stylus pen driving electrode comprises a portion of the first conductive pattern extending in the first direction.

3. The sensing panel according to claim 1, wherein the stylus pen driving electrode comprises a portion of the first conductive pattern extending in the second direction.

4. The sensing panel according to any one of claims 1 to 3, wherein the touch driving electrode comprises:
a body part extending in the second direction; and
a first bridge connected to the body part of the touch driving electrode and comprising a connection part extending in the first direction, and
the touch sensing electrode comprises:
a body part comprising a long side in which the body part of the touch driving electrode is positioned in the first direction and a short side in which the connection part of the touch driving electrode is positioned in the second direction; and
a second bridge connected to the body part of the touch sensing electrode in a contact hole and positioned to overlap the connection part of the touch driving electrode in the third direction in the plan view.

5. The sensing panel according to claim 4, wherein the second bridge comprises a portion of the first conductive pattern and is positioned adjacent to the stylus pen driving electrode in the second direction, and
wherein the stylus pen driving electrode and the first bridge are positioned adjacent to each other in the second direction in the plan view.

6. The sensing panel according to claims 1 or 4, wherein the stylus pen driving electrode comprises a portion of the first conductive pattern extending in the first direction, and
the sensing panel further comprises a stylus pen sensing electrode positioned over the base layer and comprising a portion of the first conductive pattern extending in the second direction.

7. The sensing panel according to claim 6, wherein the stylus pen driving electrode comprises:
a body part positioned to overlap the touch driving electrode in the third direction in the plan view; and
a connection part connected to the body part of the stylus pen driving electrode and extending in the first direction, and
the stylus pen sensing electrode comprises:
a body part extending in the second direction and comprising a portion of the first conductive pattern; and
a fourth bridge which extends in the second direction, overlaps the stylus pen driving electrode in the third direction in the plan view, comprises a portion of the second conductive pattern, and is connected to the body part of the stylus pen sensing electrode in a second contact hole.

8. The sensing panel according to claim 7, wherein the body part of the stylus pen sensing electrode is positioned to overlap the body part of the touch sensing electrode in the third direction in the plan view, and
wherein the second bridge of the touch sensing electrode is surrounded by the body part of the stylus pen sensing electrode in the plan view.

9. The sensing panel according to claim 7, wherein the body part of the stylus pen sensing electrode is positioned between the body part of the touch sensing electrode and the body part of the touch driving electrode and is positioned to overlap the first bridge of the touch driving electrode in the third direction, in the plan view.

10. The sensing panel according to claim 9, further comprising a sensing line which is connected to the body part of the touch sensing electrode in a third contact hole, extends in the first direction, and comprises a portion of the first conductive pattern.

11. The sensing panel according to claim 10 further comprising:
a stylus pen sensing line which is connected to the body part of the stylus pen sensing electrode in a fourth contact hole, extends in the first direction, and comprises a third conductive pattern,
wherein the third conductive pattern is positioned over the first and second conductive patterns in the plan view.

12. The sensing panel according to claim 11, wherein the stylus pen sensing line is positioned to overlap the body part of the touch driving electrode and the body part of the touch sensing electrode in the third direction in the plan view, and
wherein the stylus pen sensing line is positioned adjacent to the sensing line in the second direction in the plan view.

13. The sensing panel according to claim 4, wherein the body part of the touch sensing electrode comprises:
first, second, and third body parts disposed side by side in the second direction; and
fourth, fifth, and sixth body parts positioned spaced apart from the first to third body parts in the first direction and disposed side by side in the second direction,
the touch sensing electrode further comprises a fifth bridge which is connected to each of the second body part of the touch sensing electrode and the fifth body part of the touch sensing electrode in a fifth contact hole, comprises a portion of the first conductive pattern, and extends in the first direction, and
the sensing panel further comprises:
an a-th sensing line, which is connected to at least one of the first to sixth body parts of the touch sensing electrode positioned in an odd column in a third contact hole, extends in the second direction on a lower side of the fourth to sixth body parts of the touch sensing electrode, and comprises a portion of the first conductive pattern; and
a b-th sensing line, which is connected to at least one of the first to sixth body parts of the touch sensing electrode positioned in an even column in the third contact hole, extends in the second direction on an upper side of the first to third body parts of the touch sensing electrode, and comprises a portion of the first conductive pattern.

14. A display device comprising:
a sensing panel configured to sense a first input and a second input;
a pen charging circuit configured to write a pen charging signal for detecting the first input to the sensing panel;
a touch driving circuit configured to write a touch driving signal for detecting the second input to the sensing panel;
an induced current detection circuit configured to detect an induced current corresponding to the first input from the sensing panel; and
a touch sensing circuit configured to detect a touch sensing signal corresponding to the second input from the sensing panel,
wherein the sensing panel is according to any one of claims 1 to 13.

15. An electronic device comprising:
a host arranged to obtain a user input; and
a sensing panel according to any one of claims 1 to 13.
